(19) **Europäisches Patentamt / European Patent Office / Office européen des brevets**

(11) **EP 4 589 451 A1**

(12) **EUROPEAN PATENT APPLICATION**
published in accordance with Art. 153(4) EPC

(43) Date of publication:
**23.07.2025  Bulletin 2025/30**

(21) Application number: **23876242.1**

(22) Date of filing: **29.06.2023**

(51) International Patent Classification (IPC):
**G06F 17/14** (2006.01)     **G06T 1/20** (2006.01)

(52) Cooperative Patent Classification (CPC):
**G06F 17/14; G06T 1/20**

(86) International application number:
**PCT/CN2023/104073**

(87) International publication number:
**WO 2024/078033 (18.04.2024 Gazette 2024/16)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **13.10.2022  CN 202211250294**

(71) Applicant: **Huawei Technologies Co., Ltd.**
**Shenzhen, Guangdong 518129 (CN)**

(72) Inventors:
• **LUO, Yuanyong**
  **Shenzhen, Guangdong 518129 (CN)**
• **GU, Zhiyan**
  **Shenzhen, Guangdong 518129 (CN)**
• **WANG, Jianfeng**
  **Shenzhen, Guangdong 518129 (CN)**
• **LONG, Zichao**
  **Shenzhen, Guangdong 518129 (CN)**

(74) Representative: **Goddar, Heinz J.**
**Boehmert & Boehmert**
**Anwaltspartnerschaft mbB**
**Pettenkoferstrasse 22**
**80336 München (DE)**

(54) **FLOATING-POINT NUMBER SQUARE ROOT CALCULATION METHOD AND FLOATING-POINT NUMBER CALCULATION MODULE**

(57)     Embodiments of this application provide a method for calculating a square root of a floating-point number and a floating-point number calculation module, which have a low calculation delay and a high throughput. In addition, an optimized rounding method is correspondingly provided, to output a precise result that meets a rounding manner in the IEEE 754 standard. In the method for calculating a square root of a floating-point number, a mantissa of a square root of a first floating-point number is determined by determining a square root of a target mantissa. The target mantissa includes a mantissa of the first floating-point number, and the first floating-point number is a normalized (normalized) floating-point number. A high-bit bit width part and a low-bit bit width part of the square root of the target mantissa are calculated, and the square root of the target mantissa is determined. A fractional part of the square root of the target mantissa is the mantissa of the square root of the first floating-point number, so that the mantissa of the square root of the first floating-point number is determined.

FIG. 3

## Description

This application claims priority to Chinese Patent Application No. 202211250294.4, filed with the China National Intellectual Property Administration on October 13, 2022 and entitled "METHOD FOR CALCULATING SQUARE ROOT OF FLOATING-POINT NUMBER AND FLOATING-POINT NUMBER CALCULATION MODULE", which is incorporated herein by reference in its entirety.

## TECHNICAL FIELD

This application relates to the field of electronic technologies, and in particular, to a method for calculating a square root of a floating-point number and a floating-point number calculation module.

## BACKGROUND

Calculation of a square root of a floating-point number has developed into a basic operation supported by a processor. Currently, it is widely used in processors that support floating-point number calculation, for example, a central processing unit (central processing unit, CPU), a graphics processing unit (graphics processing unit, GPU), and an artificial intelligence (artificial intelligence, AI) processor. Calculation of a square root of a floating-point number is widely used in fields such as digital signal processing, graphics computing, and high-performance computing.

In an existing method for solving a square root of a floating-point number, for example, the Babylonian method or the Newton-Raphson method, a square root solving equation is used, an initial approximation value is used as an input, and after each iteration of calculation, a square root with a full bit width that is not precise may be obtained. A calculation result with a full bit width that meets a high precision requirement is obtained through a plurality of iterations. In an existing process of solving the square root of a floating-point number, a quantity of iterations is large, and a convergence speed is slow.

## SUMMARY

This application provides a method for calculating a square root of a floating-point number and a floating-point number calculation module, which have a low calculation delay and a high throughput.

According to a first aspect, this application provides a method for calculating a square root of a floating-point number that may be performed or implemented by a processor, a calculator, a processing device, a computing device, or the like. The following uses an example in which the processor performs the method for calculating a square root of a floating-point number provided in this application for description. The processor may receive a floating-point number calculation instruction. The instruction may carry a to-be-calculated floating-point number (Z). The processor may obtain a target mantissa (X). The target mantissa (X) includes a mantissa of a first floating-point number (W), the first floating-point number (W) is a normalized (normalized) floating-point number, and a value of the first floating-point number (W) is the same as a value of the to-be-calculated floating-point number (W). A mantissa and an exponent of the to-be-calculated floating-point number (Z) may be different from or the same as the mantissa and an exponent of the first floating-point number (W), that is, an expression format of the to-be-calculated floating-point number (Z) may be different from or the same as an expression format of the first floating-point number (W). In some application scenarios, the format of the to-be-calculated floating-point number (Z) received by the processor is different from the format of the first floating-point number (W), and the processor may process the to-be-calculated floating-point number (Z) into the first floating-point number (W). In this process, the value of the received floating-point number is not changed, and only the format of the to-be-calculated floating-point number (Z) is changed. A relationship between the target mantissa (X) and the mantissa of the first floating-point number (W) may be as follows: If the exponent of the first floating-point number (W) is an even number, the target mantissa (X) is the same as the mantissa of the first floating-point number (W); and if the exponent of the first floating-point number (W) is an odd number, the target mantissa (X) is Q times the mantissa of the first floating-point number (W), where Q is a base of the floating-point number, Q is a positive number, and Q is an even number. For example, the target mantissa (X) may be obtained by shifting the mantissa of the first floating-point number (W) to the left by 1 bit.

The processor may determine a first bit width part ($f_u$) of a square root of the target mantissa (X) based on all or a part of a bit width of the target mantissa (X). The first bit width part ($f_u$) includes a most significant bit of the square root of the target mantissa (X). The processor may calculate a second bit width part ($f_l$) of the square root of the target mantissa (X) based on a first relationship, the first bit width part ($f_u$), and all or the part of the bit width of the target mantissa (X). The first relationship indicates a relationship between the first bit width part ($f_u$) of the square root of the target mantissa (X), the target mantissa (X), and the second bit width part ($f_l$) of the square root of the target mantissa (X). The processor may determine the square root of the target mantissa (X) based on the first bit width part ($f_u$) and the second bit width part ($f_l$), and determine a fractional part of the square root of the target mantissa (X) as a mantissa of a square root of the to-be-calculated floating-point number (Z). For example, a most significant bit of the fractional part of the square root of the target mantissa (X) may be determined as an integer part of the mantissa of the square root of the floating-point number (Z), and a bit width, other than the most significant bit, of the fractional part of the square root of the target mantissa (X) is determined as a fractional part of the mantissa of the square root of the floating-point number (Z).

In embodiments of this application, that the processor calculates the mantissa of the square root of the to-be-calculated floating-point number (Z) is also calculating a mantissa of a square root of the first floating-point number (W), which may be implemented by determining the square root of the target mantissa (X). The processor may separately determine a high-bit part and a low-bit part, namely, the first bit width part ($f_u$) and the second bit width part ($f_l$), of the square root of the target mantissa (X). The processor may determine the square root of the target mantissa (X) based on the determined first bit width part ($f_u$) and second bit width part ($f_l$). It can be learned that the processor does not need to perform iteration when determining the square root of the target mantissa (X), so that a calculation delay is short, and a throughput is high. Optionally, the processor may determine the first bit width part ($f_u$) and the second bit width part ($f_l$) in parallel. Alternatively, the processor may determine the first bit width part ($f_u$) and the second bit width part ($f_l$) in serial. For example, after determining the first bit width part ($f_u$), the processor determines the second bit width part ($f_l$).

It may be understood that, in embodiments of this application, when a part of a bit width of a mantissa of a floating-point number includes a plurality of bit widths, the plurality of bit widths are consecutive. In other words, the part of the bit width also means the consecutive partial bit widths. A part of the floating-point number may be a part of the mantissa of the floating-point number. When the part of the mantissa includes a plurality of bit widths, the plurality of bit widths are consecutive.

In a possible implementation, the first relationship meets the following relationship: 
$$f_l = \frac{1}{f_u} \times \frac{X - f_u^2}{2},$$
where X is the target mantissa, $f_u$ is the first bit width part, and $f_l$ is the second bit width part. In embodiments of this application, the processor may implement an operation of determining the second bit width part ($f_l$) based on the first relationship by using software or hardware. This is not limited in embodiments of this application.

In a possible implementation, the second bit width part ($f_l$) includes a part of a bit width of the square root of the target mantissa (X) and a least significant bit of the square root of the target mantissa (X), and a sum of a bit width length of the first bit width part ($f_u$) and a bit width length of the second bit width part ($f_l$) is greater than or equal to a full bit width length of the square root of the target mantissa (X).

In embodiments of this application, the first bit width part ($f_u$) may be consecutive partial bit widths that include the most significant bit of the square root of the target mantissa (X). The second bit width part ($f_l$) may be consecutive partial bit widths that include the least significant bit of the square root of the target mantissa (X). A sum of a bit width of the first bit width part ($f_u$) and a bit width of the second bit width part ($f_l$) is greater than or equal to a full bit width of the square root of the target mantissa (X).

In a possible implementation, the method for calculating a square root of a floating-point number provided in embodiments of this application further includes: When determining the first bit width part ($f_u$) of the square root of the target mantissa (X) based on all or the part of the bit width of the target mantissa (X), the processor may determine coefficients of a preset first polynomial fitting equation based on a target first query parameter (r1) and a target second query parameter (r2). The target first query parameter (r1) is a first part of the mantissa of the first floating-point number (W), and the target second query parameter (r2) is a part of a bit width of the exponent of the first floating-point number (W), and includes a lowest bit width of the exponent of the first floating-point number (W). The processor may calculate the first bit width part ($f_u$) based on the coefficients of the first polynomial fitting equation and a second part of the mantissa of the first floating-point number (W). A bit width corresponding to the second part of the mantissa of the first floating-point number (W) does not overlap a bit width corresponding to the first part of the mantissa of the first floating-point number (W).

In embodiments of this application, when the processor determines the first bit width part ($f_u$) based on the coefficients of the first polynomial fitting equation and a part of a bit width of the first floating-point number (W), the part of the first floating-point number (W) may be the part of the bit width, a part of bit width bits, or a part of bit width data of the first floating-point number (W). The target first query parameter (r1) may be used as the first part of the mantissa of the first floating-point number (W). The second part of the mantissa of the first floating-point number (W) may be used to calculate the first bit width part ($f_u$). Optionally, the second part of the mantissa of the first floating-point number (W) is a part of bit width bits or a part of bit width data, other than the first part, of the first floating-point number (W). The target second query parameter (r2) is the part of the bit width of the exponent of the first floating-point number (W), and the part of the bit width of the exponent of the first floating-point number (W) includes the lowest bit width of the exponent of the first floating-point number (W). It can be learned that the target second query parameter (r2) may reflect parity of the exponent of the first floating-point number (W).

In some examples, when the processor determines the coefficients of the preset first polynomial fitting equation based on the target first query parameter (r1) and the target second query parameter (r2), if the target second query parameter (r2) is an odd number, the processor may query a first odd-number query subtable for a coefficient, of the first polynomial fitting equation, corresponding to the target first query parameter (r1). The first odd-number query subtable includes correspondences between a plurality of first query parameters and the coefficients of the first polynomial fitting equation when the exponent of the first floating-point number (W) is an odd number. If the target second query parameter (r2) is an even number, a first even-number query subtable is queried for a coefficient, of the first polynomial fitting equation, corresponding to the target first query parameter (r1). The first even-number query subtable includes correspondences between the plurality of first query parameters and the coefficients of the first polynomial fitting equation when the exponent of the first floating-point number (W) is an even number. Optionally, the processor may obtain or configure the first odd-number query subtable and the first even-number query subtable. In this design, processing overheads of the processor can be reduced.

In some other examples, the processor may obtain or configure a first polynomial query table. The first polynomial query table may include correspondences between a plurality of first query parameter combinations and a plurality of first fitting parameter combinations. One first query parameter combination may be used as one index. One index corresponds to one first fitting parameter combination, and one first fitting parameter combination includes a group of coefficients of the first polynomial fitting equation. The processor may use the target first query parameter (r1) and the target second query parameter (r2) as an index, and query the first polynomial coefficient query table for a first fitting parameter combination corresponding to the index. Therefore, the coefficients, of the first polynomial fitting equation, corresponding to the target first query parameter (r1) and the target second query parameter (r2) are determined.

In a possible implementation, the processor may calculate a reciprocal of the first bit width part $(f_u)$ based on the first floating-point number (W). For example, the reciprocal of the first bit width part $(f_u)$ is calculated by using the Newton-Raphson method, the Sweeney-Robertson-Tocher algorithm (SRT algorithm), or the like. This application further provides several design solutions for calculating the reciprocal of the first bit width part $(f_u)$, to improve a calculation speed and reduce calculation overheads.

In a possible design, the processor may determine coefficients of a preset second polynomial fitting equation based on a target third query parameter (h1) and a target fourth query parameter (h2). The target third query parameter (h1) is a third part of the mantissa of the first floating-point number (W), and the target fourth query parameter (h2) is a part of the bit width of the exponent of the first floating-point number (W), and includes the lowest bit width of the exponent of the first floating-point number (W). The reciprocal of the first bit width part $(f_u)$ is determined based on the coefficients of the second polynomial fitting equation and a fourth part of the mantissa of the first floating-point number (W). A bit width corresponding to the third part of the mantissa of the first floating-point number (W) does not overlap a bit width corresponding to the fourth part of the mantissa of the first floating-point number (W). In this design, the processor may calculate the first bit width part $(f_u)$ and the second bit width part $(f_l)$ in parallel. The processor may approximate the reciprocal of the first bit width part $(f_u)$ based on a reciprocal of the square root of the target mantissa (X).

In some examples, if the target fourth query parameter (h2) is an odd number, the processor queries a second odd-number query subtable for a coefficient, of the second polynomial fitting equation, corresponding to the target third query parameter (h1). The second odd-number query subtable includes correspondences between a plurality of third query parameters and the coefficients of the second polynomial fitting equation when the exponent of the first floating-point number (W) is an odd number. If the target fourth query parameter (h2) is an even number, the processor queries a second even-number query subtable for a coefficient, of the second polynomial fitting equation, corresponding to the target third query parameter (h1). The second even-number query subtable includes correspondences between the plurality of third query parameters and the coefficients of the second polynomial fitting equation when the exponent of the first floating-point number (W) is an even number.

In some other examples, the processor may obtain or configure a second polynomial query table. The second polynomial query table may include correspondences between a plurality of second query parameter combinations and a plurality of second fitting parameter combinations. One second query parameter combination may be used as one index. One index corresponds to one second fitting parameter combination, and one second fitting parameter combination includes a group of coefficients of the second polynomial fitting equation. The processor may use the target third query parameter (h1) and the target fourth query parameter (h2) as an index, and query the second polynomial coefficient query table for a second fitting parameter combination corresponding to the index. Therefore, the coefficients, of the second polynomial fitting equation, corresponding to the target third query parameter (h1) and the target fourth query parameter (h2) are determined.

In another possible design, the processor may determine coefficients of a preset third polynomial fitting equation based on a target fifth query parameter (g1). The target fifth query parameter (g1) is a fifth part of the first bit width part $(f_u)$. The reciprocal of the first bit width part $(f_u)$ is determined based on the coefficients of the third polynomial fitting equation and a sixth part of the first bit width part $(f_u)$. A bit width corresponding to the fifth part of the first bit width part $(f_u)$ does not overlap a bit width corresponding to the sixth part of the first bit width part $(f_u)$.

For example, the processor may obtain or configure a third polynomial query table. The third polynomial query table may include correspondences between a plurality of fifth query parameters and a plurality of third fitting parameter combinations. The processor may query, by using the target fifth query parameter (g1) as an index, the third polynomial query table for a third fitting parameter combination corresponding to the target fifth query parameter (g1). Therefore, the coefficients, of the third polynomial fitting equation, corresponding to the target fifth query parameter (g1) are determined.

In a possible implementation, when determining the square root of the target mantissa (X) based on the first bit width part ($f_u$) and the second bit width part ($f_l$), the processor may perform summation on the first bit width part ($f_u$) and the second bit width part ($f_l$), and determine a result obtained through summation as the square root of the target mantissa (X). The processor may determine the fractional part of the square root of the target mantissa (X) as the mantissa of the square root of the first floating-point number (W).

In a possible implementation, when determining the square root of the target mantissa (X) based on the first bit width part ($f_u$) and the second bit width part ($f_l$), the processor may determine the square root of the target mantissa (X) in a configured rounding manner.

The processor may determine two to-be-selected results based on the first bit width part ($f_u$) and the second bit width part ($f_l$); calculate a first rounding determining parameter (ie) based on the first bit width part ($f_u$), the second bit width part ($f_l$), and the part of the bit width of the target mantissa (X), where the first rounding determining parameter (ie) indicates a deviation between a first value and the target mantissa (X), and the first value is a square of the square root of the target mantissa (X); and select a to-be-selected result from the two to-be-selected results based on a result of comparison between the first rounding determining parameter (ie) and a preset value, and determine the selected result as the square root of the target mantissa (X).

In a possible design, the processor may determine the first rounding determining parameter (ie) based on the first bit width part ($f_u$) and the second bit width part ($f_l$). The first rounding determining parameter (ie) may be calculated according to the following formula: $ie = f_u^2 + f_l^2 + 2 \times f_u \times f_l - X$, where ie is the first rounding determining parameter, $f_u$ is the first bit width part, $f_l$ is the second bit width part, and X is the target mantissa.

In an actual application scenario, the first rounding determining parameter (ie) may be a very small positive number or a very small negative number. The processor may select the to-be-selected result based on a valid sign bit of the first rounding determining parameter (ie) and all bits after the valid sign bit. Optionally, the processor may calculate the first rounding determining parameter (ie) based on a low-bit part of ($f_u^2 + f_l^2 + 2 \times f_u \times f_l$) and a low-bit part of the target mantissa (X), to reduce circuit overheads, and reduce an area occupied by a circuit.

For example, the processor may perform a round towards positive (round towards positive, RP) manner. The processor may determine the first rounding determining parameter (ie) based on the first bit width part ($f_u$) and the second bit width part ($f_l$). The processor may determine a plurality of to-be-selected results based on the first bit width part ($f_u$) and the second bit width part ($f_l$). The plurality of to-be-selected results may include a first to-be-selected result f1 and a second to-be-selected result f2, where $f1 = f_u + f_l$, $f2 = f1 + ulp$, and *ulp* indicates a minimum valid digit that can be expressed in the full bit width of the square root of the target mantissa (X). The processor may select a to-be-selected result from the plurality of to-be-selected results based on the result of comparison between the first rounding determining parameter (ie) and the preset value, and determine the selected result as the square root of the target mantissa (X). For example, the preset value may be set to 0. The processor may determine, based on the first rounding determining parameter (ie) being greater than or equal to 0, that the first to-be-selected result f1 is the square root of the target mantissa (X). The processor may determine, based on the first rounding determining parameter (ie) being less than 0, that the second to-be-selected result f2 is the square root of the target mantissa (X).

For another example, the processor may perform a round towards zero (round towards zero, RZ) manner. The processor may determine the first rounding determining parameter (ie) based on the first bit width part ($f_u$) and the second bit width part ($f_l$). The processor may determine a plurality of to-be-selected results based on the first bit width part ($f_u$) and the second bit width part ($f_l$). The plurality of to-be-selected results may include a first to-be-selected result f1 and a third to-be-selected result f3, where $f1 = f_u + f_l$, $f3 = f1 - ulp$, and *ulp* indicates a minimum valid digit that can be expressed in the full bit width of the square root of the target mantissa (X). The processor may select a to-be-selected result from the plurality of to-be-selected results based on the result of comparison between the first rounding determining parameter (ie) and the preset value, and determine the selected result as the square root of the target mantissa (X). For example, the preset value may be set to 0. The processor may determine, based on the first rounding determining parameter (ie) being less than or equal to 0, that the first to-be-selected result f1 is the square root of the target mantissa (X). The processor may determine, based on the first rounding determining parameter (ie) being greater than 0, that the third to-be-selected result f3 is the square root of the target mantissa (X).

In a possible design, when determining the square root of the target mantissa (X) based on the first bit width part ($f_u$) and the second bit width part ($f_l$), the processor may determine a plurality of to-be-selected results based on the first bit width part ($f_u$) and the second bit width part ($f_l$), where the plurality of to-be-selected results include a first to-be-selected result, a second to-be-selected result, and a third to-be-selected result, the second to-be-selected result is greater than the first to-be-selected result, and the first to-be-selected result is greater than the third to-be-selected result; calculate a second rounding determining parameter (ien) based on the first bit width part ($f_u$), the second bit width part ($f_l$), and the part of the bit width of the target mantissa (X), where the second rounding determining parameter (ien) indicates a deviation between a square of a first distance and a square of a second distance, the first distance is a distance between the first to-be-selected result and a real number of the square root of the target mantissa (X), and the second distance indicates a distance between the real number of the square root of the target mantissa (X) and the third to-be-selected result; calculate a third rounding determining parameter (iep) based on the first bit width part ($f_u$), the second bit width part ($f_l$), and the part of the bit width of the target mantissa (X), where the third rounding determining parameter (iep) indicates a deviation between a square of a third distance and a square of a fourth distance, the third distance is a distance between the second to-be-selected result and the real number of the square root of the target mantissa (X), and the fourth distance indicates a distance between the real number of the square root of the target mantissa (X) and the first to-be-selected result; and select a to-be-selected result from the plurality of to-be-selected results based on a result of comparison between the second rounding determining parameter (ien) and the preset value and a result of comparison between the third rounding determining parameter (iep) and the preset value, and determine the selected result as the square root of the target mantissa (X).

Optionally, a difference between the second to-be-selected result and the first to-be-selected result is less than or equal to one unit of least precision, and a difference between the first to-be-selected result and the third to-be-selected result is less than or equal to one unit of least precision.

In embodiments of this application, the processor may perform a round half (round half, RH) manner. Optionally, a relationship between the second rounding determining parameter (ien) and the first rounding determining parameter (ie) may be ien = ie - $ulp \times$ f1, where ie = $f_u^2 + f_l^2 + 2 \times f_u \times f_l$ - X. A relationship between the third rounding determining parameter (iep) and the first rounding determining parameter (ie) may be iep = ie + $ulp \times$ f1, where ie = $f_u^2 + f_l^2 + 2 \times f_u \times f_l$ - X. When performing the round half (RH) manner, the processor may determine the square root of the target mantissa (X) according to a formula: $f = \begin{cases} f2, \text{iep} < 0 \\ f1, \text{else} \\ f3, \text{ien} \geq 0 \end{cases}$ , where else may mean iep $\geq$ 0 or ien < 0.

Optionally, the processor may calculate the first rounding determining parameter (ie), and calculate the second rounding determining parameter (ien) and the third rounding determining parameter (iep) based on the first rounding determining parameter (ie), to reduce circuit overheads, and optimize an area occupied by a circuit.

According to a second aspect, an embodiment of this application further provides a floating-point number calculation module, which may be used in a floating-point number calculation scenario, for example, calculating a square root of a floating-point number. The floating-point number calculation module provided in embodiments of this application may be used in a processor or a calculator, to implement a function of performing floating-point number calculation by the processor or the calculator. The floating-point number calculation module is configured to receive a floating-point number calculation instruction, where the instruction carries a to-be-calculated floating-point number (Z); and obtain a target mantissa (X), where the target mantissa (X) includes a mantissa of a first floating-point number (W), the first floating-point number (W) is a normalized floating-point number, and a value of the first floating-point number (W) is the same as a value of the to-be-calculated floating-point number (Z). The floating-point number calculation module includes: a high-bit calculation unit, configured to determine a first bit width part ($f_u$) of a square root of the target mantissa (X) based on all or a part of a bit width of the target mantissa (X), where the first bit width part ($f_u$) includes a most significant bit of the square root of the target mantissa (X); a low-bit calculation unit, configured to calculate a second bit width part ($f_l$) of the square root of the target mantissa (X) based on a first relationship, the first bit width part ($f_u$), and all or the part of the bit width of the target mantissa (X), where the first relationship indicates a relationship between the first bit width part ($f_u$) of the square root of the target mantissa (X), the target mantissa (X), and the second bit width part ($f_l$) of the square root of the target mantissa (X); and an exact rounding unit, configured to determine the square root of the target mantissa (X) based on the first bit width part ($f_u$) and the second bit width part ($f_l$), and determine a fractional part of the square root of the target mantissa (X) as a mantissa of a square root of the to-be-calculated floating-point number (Z).

In embodiments of this application, that the floating-point number calculation module calculates a mantissa of a square root of the first floating-point number (W) may be implemented by determining the square root of the target mantissa (X). The floating-point number calculation module may determine the first bit width part ($f_u$) and the second bit width part ($f_l$) of the square root of the target mantissa (X), and determine the square root of the target mantissa (X) based on the determined first bit width part ($f_u$) and second bit width part ($f_l$). It can be learned that the floating-point number calculation module does not need to perform iteration when determining the square root of the target mantissa (X), so that a calculation delay is short, and a throughput is high. Optionally, the high-bit calculation unit and the low-bit calculation unit may work in parallel or in serial.

In a possible implementation, if the exponent of the first floating-point number (W) is an even number, the target mantissa (X) is the same as the mantissa of the first floating-point number (W); and if the exponent of the first floating-point number (W) is an odd number, the target mantissa (X) is Q times the mantissa of the first floating-point number (W), where Q is a base of the floating-point number, Q is a positive number, and Q is an even number.

In a possible implementation, the first relationship meets the following relationship: $f_l = \frac{1}{f_u} \times \frac{X - f_u^2}{2}$, where X is the target mantissa, $f_u$ is the first bit width part, and $f_l$ is the second bit width part.

In a possible implementation, the second bit width part ($f_l$) includes a part of a bit width of the square root of the target mantissa (X) and a least significant bit of the square root of the target mantissa (X), and a sum of a bit width length of the first bit width part ($f_u$) and a bit width length of the second bit width part ($f_l$) is greater than or equal to a full bit width length of the square root of the target mantissa (X).

In a possible implementation, the high-bit calculation unit is specifically configured to: determine coefficients of a preset first polynomial fitting equation based on a target first query parameter (r1) and a target second query parameter (r2), where the target first query parameter (r1) is a first part of the mantissa of the first floating-point number (W), and the target second query parameter (r2) is a part of a bit width of the exponent of the first floating-point number (W), and includes a lowest bit width of the exponent of the first floating-point number (W); and calculate the first bit width part ($f_u$) based on the coefficients of the first polynomial fitting equation and a second part of the mantissa of the first floating-point number (W), where a bit width corresponding to the second part of the mantissa of the first floating-point number (W) does not overlap a bit width corresponding to the first part of the mantissa of the first floating-point number (W).

For example, the high-bit calculation unit may include a first table query circuit, a first square operation circuit, and a first polynomial summation circuit. The first table query circuit may be coupled to a storage module. The storage module or a storage circuit is configured to store a first odd-number query subtable and a first even-number query subtable. The first odd-number query subtable includes correspondences between a plurality of first query parameters and the coefficients of the first polynomial fitting equation when the exponent of the first floating-point number (W) is an odd number, and the first even-number query subtable includes correspondences between the plurality of first query parameters and the coefficients of the first polynomial fitting equation when the exponent of the first floating-point number (W) is an even number.

When the target second query parameter (r2) is an odd number, the first table query circuit may query the first odd-number query subtable for a coefficient, of the first polynomial fitting equation, corresponding to the target first query parameter (r1). Alternatively, when the target second query parameter (r2) is an even number, the first table query circuit may query the first even-number query subtable for a coefficient, of the first polynomial fitting equation, corresponding to the target first query parameter (r1).

The first square operation circuit may determine a square of the second part of the mantissa of the first floating-point number (W) based on the second part of the mantissa of the first floating-point number (W). The first polynomial summation circuit may calculate the first bit width part ($f_u$) of the target mantissa (X) based on the coefficients, of the first polynomial fitting equation, obtained through querying by the first table query circuit, the second part of the mantissa of the first floating-point number (W), and the square of the second part of the mantissa of the first floating-point number (W).

In a possible implementation, the low-bit calculation unit may calculate a reciprocal of the first bit width part ($f_u$) based on the first floating-point number (W). For example, the reciprocal of the first bit width part ($f_u$) is calculated by using the Newton-Raphson method, the Sweeney-Robertson-Tocher algorithm (SRT algorithm), or the like. This application further provides several design solutions for calculating the reciprocal of the first bit width part ($f_u$), to improve a calculation speed and reduce calculation overheads.

In a possible design, the low-bit calculation unit may include a first high-bit reciprocal calculation circuit and a low-bit operation circuit. The first high-bit reciprocal calculation circuit may determine coefficients of a preset second polynomial fitting equation based on a target third query parameter (h1) and a target fourth query parameter (h2). The target third query parameter (h1) is a third part of the mantissa of the first floating-point number (W), and the target fourth query parameter (h2) is a part of the bit width of the exponent of the first floating-point number (W), and includes the lowest bit width of the exponent of the first floating-point number (W). The reciprocal of the first bit width part ($f_u$) is determined based on the coefficients of the second polynomial fitting equation and a fourth part of the mantissa of the first floating-point number (W). A bit width corresponding to the third part of the mantissa of the first floating-point number (W) does not overlap a bit width corresponding to the fourth part of the mantissa of the first floating-point number (W). In this design, the first high-bit reciprocal calculation circuit may calculate the first bit width part ($f_u$) and the second bit width part ($f_l$) in parallel. The first high-bit reciprocal calculation circuit may approximate the reciprocal of the first bit width part ($f_u$) based on a reciprocal of the square root of the target mantissa (X). The low-bit operation circuit is configured to determine the second bit width part ($f_l$) based on a relationship between the first bit width part ($f_u$), the reciprocal of the first bit width part ($f_u$), and the target mantissa (X).

In embodiments of this application, a process in which the low-bit calculation unit calculates the reciprocal of the first bit width part ($f_u$) may be parallel to a process in which the high-bit calculation unit calculates the first bit width part ($f_u$). Therefore, the high-bit calculation unit and the low-bit calculation unit can work in parallel.

In some examples, when the target fourth query parameter (h2) is an odd number, the first high-bit reciprocal calculation circuit queries a second odd-number query subtable for a coefficient, of the second polynomial fitting equation, corresponding to the target third query parameter (h1). The second odd-number query subtable includes correspondences between a plurality of third query parameters and the coefficients of the second polynomial fitting equation when the exponent of the first floating-point number (W) is an odd number. When the target fourth query parameter (h2) is an even number, the first high-bit reciprocal calculation circuit queries a second even-number query subtable for a coefficient, of the second polynomial fitting equation, corresponding to the target third query parameter (h1). The second even-number query subtable includes correspondences between the plurality of third query parameters and the coefficients of the second polynomial fitting equation when the exponent of the first floating-point number (W) is an even number.

In some other examples, the first high-bit reciprocal calculation circuit may obtain or configure a second polynomial query table. The second polynomial query table may include correspondences between a plurality of second query parameter combinations and a plurality of second fitting parameter combinations. One second query parameter combination may be used as one index. One index corresponds to one second fitting parameter combination, and one second fitting parameter combination includes a group of coefficients of the second polynomial fitting equation. The first high-bit reciprocal calculation circuit may use the target third query parameter (h1) and the target fourth query parameter (h2) as an index, and query the second polynomial coefficient query table for a second fitting parameter combination corresponding to the index. Therefore, the coefficients, of the second polynomial fitting equation, corresponding to the target third query parameter (h1) and the target fourth query parameter (h2) are determined.

It can be learned that an execution process of the first high-bit reciprocal calculation circuit may be parallel to that of the high-bit calculation unit, so that the low-bit calculation unit and the high-bit calculation unit may work in parallel.

In a possible design, the low-bit calculation unit may include a second high-bit reciprocal calculation circuit and a low-bit operation circuit. The second high-bit reciprocal calculation circuit may determine coefficients of a preset third polynomial fitting equation based on a target fifth query parameter (g1). The target fifth query parameter (g1) is a fifth part of the first bit width part ($f_u$). The reciprocal of the first bit width part ($f_u$) is determined based on the coefficients of the third polynomial fitting equation and a sixth part of the first bit width part ($f_u$). A bit

width corresponding to the fifth part of the first bit width part ($f_u$) does not overlap a bit width corresponding to the sixth part of the first bit width part ($f_u$). The low-bit operation circuit is configured to determine the second bit width part ($f_l$) based on a relationship between the first bit width part ($f_u$), the reciprocal of the first bit width part ($f_u$), and the target mantissa (X).

For example, the second high-bit reciprocal calculation circuit may obtain or configure a third polynomial query table. The third polynomial query table may include correspondences between a plurality of fifth query parameters and a plurality of third fitting parameter combinations. The processor may query, by using the target fifth query parameter (g1) as an index, the third polynomial query table for a third fitting parameter combination corresponding to the target fifth query parameter (g1). Therefore, the second high-bit reciprocal calculation circuit can determine the coefficients, of the third polynomial fitting equation, corresponding to the target fifth query parameter (g1).

It can be learned that the second high-bit reciprocal calculation circuit and the high-bit calculation unit work in serial, so that the low-bit calculation unit and the high-bit calculation unit may work in serial.

In a possible implementation, the exact rounding unit may perform summation on the first bit width part and the second bit width part, where a result obtained through summation is the square root of the target mantissa (X).

In a possible implementation, the exact rounding unit may determine two to-be-selected results based on the first bit width part ($f_u$) and the second bit width part ($f_l$); calculate a first rounding determining parameter (ie) based on the first bit width part ($f_u$), the second bit width part ($f_l$), and the part of the bit width of the target mantissa (X), where the first rounding determining parameter (ie) indicates a deviation between a first value and the target mantissa (X), and the first value is a square of the square root of the target mantissa (X); and select a to-be-selected result from the two to-be-selected results based on a result of comparison between the first rounding determining parameter (ie) and a preset value, and determine the selected result as the square root of the target mantissa (X).

In a possible design, the exact rounding unit may determine the first rounding determining parameter (ie) based on the first bit width part ($f_u$) and the second bit width part ($f_l$). The first rounding determining parameter (ie) may be calculated according to the following formula: $ie = f_u^2 + f_l^2 + 2 \times f_u \times f_l - X$, where ie is the first rounding determining parameter, $f_u$ is the first bit width part, $f_l$ is the second bit width part, and X is the target mantissa.

In an actual application scenario, the first rounding determining parameter (ie) may be a very small positive number or a very small negative number. The exact rounding unit may select the to-be-selected result based on a valid sign bit of the first rounding determining parameter (ie) and all bits after the valid sign bit. Optionally, the exact rounding unit may calculate the first rounding determining parameter (ie) based on a low-bit part of $(f_u^2 + f_l^2 + 2 \times f_u \times f_l)$ and a low-bit part of the target mantissa (X), to reduce circuit overheads, and reduce an area occupied by a circuit.

For example, the exact rounding unit may perform a round towards positive (RP) manner. The exact rounding unit may determine the first rounding determining parameter (ie) based on the first bit width part $(f_u)$ and the second bit width part $(f_l)$. The exact rounding unit may determine a plurality of to-be-selected results based on the first bit width part $(f_u)$ and the second bit width part $(f_l)$. The plurality of to-be-selected results may include a first to-be-selected result f1 and a second to-be-selected result f2, where f1 = $f_u + f_l$, f2=f1 + *ulp,* and *ulp* indicates a minimum valid digit that can be expressed in the full bit width of the square root of the target mantissa (X). The exact rounding unit may select a to-be-selected result from the plurality of to-be-selected results based on the result of comparison between the first rounding determining parameter (ie) and the preset value, and determine the selected result as the square root of the target mantissa (X). For example, the preset value may be set to 0. The exact rounding unit may determine, based on the first rounding determining parameter (ie) being greater than or equal to 0, that the first to-be-selected result f1 is the square root of the target mantissa (X). The exact rounding unit may determine, based on the first rounding determining parameter (ie) being less than 0, that the second to-be-selected result f2 is the square root of the target mantissa (X).

For another example, the exact rounding unit may perform a round towards zero (RZ) manner. The exact rounding unit may determine the first rounding determining parameter (ie) based on the first bit width part $(f_u)$ and the second bit width part $(f_l)$. The exact rounding unit may determine a plurality of to-be-selected results based on the first bit width part $(f_u)$ and the second bit width part $(f_l)$. The plurality of to-be-selected results may include a first to-be-selected result f1 and a third to-be-selected result f3, where f1 = $f_u + f_l$, f3=f1 - ulp, and *ulp* indicates a minimum valid digit that can be expressed in the full bit width of the square root of the target mantissa (X). The exact rounding unit may select a to-be-selected result from the plurality of to-be-selected results based on the result of comparison between the first rounding determining parameter (ie) and the preset value, and determine the selected result as the square root of the target mantissa (X). For example, the preset value may be set to 0. The exact rounding unit may determine, based on the first rounding determining parameter (ie) being less than or equal to 0, that the first to-be-selected result f1 is the square root of the target mantissa (X). The exact rounding unit may determine, based on the first rounding determining parameter (ie) being greater than 0, that the third to-be-selected result f3 is the square root of the target mantissa (X).

In a possible design, when determining the square root of the target mantissa (X) based on the first bit width part $(f_u)$ and the second bit width part $(f_l)$, the exact rounding unit may determine a plurality of to-be-selected results based on the first bit width part $(f_u)$ and the second bit width part $(f_l)$, where the plurality of to-be-selected results include a first to-be-selected result, a second to-be-selected result, and a third to-be-selected result, the second to-be-selected result is greater than the first to-be-selected result, and the first to-be-selected result is greater than the third to-be-selected result; calculate a second rounding determining parameter (ien) based on the first bit width part $(f_u)$, the second bit width part $(f_l)$, and the part of the bit width of the target mantissa (X), where the second rounding determining parameter (ien) indicates a deviation between a square of a first distance and a square of a second distance, the first distance is a distance between the first to-be-selected result and a real number of the square root of the target mantissa (X), and the second distance indicates a distance between the real number of the square root of the target mantissa (X) and the third to-be-selected result; calculate a third rounding determining parameter (iep) based on the first bit width part $(f_u)$, the second bit width part $(f_l)$, and the part of the bit width of the target mantissa (X), where the third rounding determining parameter (iep) indicates a deviation between a square of a third distance and a square of a fourth distance, the third distance is a distance between the second to-be-selected result and the real number of the square root of the target mantissa (X), and the fourth distance indicates a distance between the real number of the square root of the target mantissa (X) and the first to-be-selected result; and select a to-be-selected result from the plurality of to-be-selected results based on a result of comparison between the second rounding determining parameter (ien) and the preset value and a result of comparison between the third rounding determining parameter (iep) and the preset value, and determine the selected result as the square root of the target mantissa (X).

Optionally, a difference between the second to-be-selected result and the first to-be-selected result is less than or equal to one unit of least precision, and a difference between the first to-be-selected result and the third to-be-selected result is less than or equal to one unit of least precision.

In embodiments of this application, the exact rounding unit may perform a round half (RH) manner. Optionally, a relationship between the second rounding determining parameter (ien) and the first rounding determining parameter (ie) may be ien = ie - *ulp* $\times$ f1, where ie = $f_u^2 + f_l^2 + 2 \times f_u \times f_l$ - X. A relationship between the third rounding determining parameter (iep) and the first rounding determining parameter (ie) may be iep = ie + *ulp* $\times$ f1, where ie = $f_u^2 + f_l^2 + 2 \times f_u \times f_l$ - X. When performing the round half (RH) manner, the exact rounding unit may determine the square root of the target mantissa (X)

according to a formula:

$$f = \begin{cases} f2, \text{iep} < 0 \\ f1, \text{else} \\ f3, \text{ien} \geq 0 \end{cases}$$, where else

may mean iep $\geq$ 0 or ien < 0.

Optionally, the exact rounding unit may calculate the first rounding determining parameter (ie), and calculate the second rounding determining parameter (ien) and the third rounding determining parameter (iep) based on the first rounding determining parameter (ie), to reduce circuit overheads, and optimize an area occupied by a circuit.

In some application scenarios, the exact rounding unit pre-configures a plurality of rounding manners. The exact rounding unit may obtain a rounding manner configuration parameter; determine the plurality of to-be-selected results based on a rounding manner corresponding to the rounding manner configuration parameter, the first bit width part ($f_u$), and the second bit width part ($f_l$); calculate a rounding determining parameter based on the rounding manner corresponding to the rounding manner configuration parameter, the first bit width part ($f_u$), the second bit width part ($f_l$), and the target mantissa (X); and select a to-be-selected result from the plurality of to-be-selected results based on a result of comparison between the rounding determining parameter and the preset value, and use the selected result as the square root of the target mantissa (X). In this example, the exact rounding unit may perform any rounding manner provided in the foregoing embodiments. Details are not described herein again.

According to a third aspect, an embodiment of this application further provides a processing apparatus that may include a first register, a second register, and the floating-point number calculation module in the second aspect and any design of the second aspect. The first register stores a to-be-calculated floating-point number. The floating-point number calculation module is configured to obtain the to-be-calculated floating-point number from the first register, and calculate a mantissa of a square root of the to-be-calculated floating-point number. The second register is configured to store the mantissa of the square root of the to-be-calculated floating-point number.

In a possible design, the processing apparatus further includes a third register. The third register stores a rounding manner configuration parameter. The floating-point number calculation module is further configured to obtain a rounding manner configuration parameter, and perform a rounding manner corresponding to the rounding manner configuration parameter.

It may be understood that, to implement functions in the foregoing method embodiments, a processor or a calculator includes corresponding hardware structures and/or software modules for performing the functions. A person skilled in the art should be easily aware that, based on the modules and the method steps in the examples described in embodiments disclosed in this application, this application can be implemented by hardware or a combination of hardware and computer software. Whether a function is performed by hardware or hardware driven by computer software depends on particular application scenarios and design constraint conditions of the technical solutions.

BRIEF DESCRIPTION OF DRAWINGS

FIG. 1 is a diagram of a format of a floating-point number;
FIG. 2A is a diagram of a five-stage pipeline;
FIG. 2B is a diagram of a structure of a processing apparatus according to an embodiment of this application;
FIG. 3 shows a method for calculating a square root of a floating-point number according to an embodiment of this application;
FIG. 4(a) to FIG. 4(c) are a diagram of processing a floating-point number;
FIG. 5 is a diagram of a structure of a floating-point number calculation module;
FIG. 6 is a diagram of a high-bit part and a low-bit part of a mantissa;
FIG. 7 is a diagram of a relationship between a storage module and a fitting parameter;
FIG. 8 is a diagram of summation;
FIG. 9 is a diagram of a relationship between a plurality of to-be-selected results;
FIG. 10 is a diagram of a specific structure of a floating-point number calculation module;
FIG. 11 is a diagram of a specific structure of an exact rounding unit;
FIG. 12 is a diagram of a specific structure of another exact rounding unit;
FIG. 13 is a diagram of a structure of another floating-point number calculation module;
FIG. 14 is a diagram of a specific structure of another floating-point number calculation module;
FIG. 15 is a diagram of a structure of another floating-point number calculation module; and
FIG. 16 is a diagram of a structure of another floating-point number calculation module.

DESCRIPTION OF EMBODIMENTS

To make objectives, technical solutions, and advantages of this application clearer, the following further describes this application in detail with reference to accompanying drawings. A specific operation method in method embodiments may also be applied to an apparatus embodiment or a system embodiment.

In a computer, an approximate representation of any real number is referred to as a floating-point number. A floating-point number is usually represented by a combination of a mantissa (mantissa) and an exponent bias (which is also referred to as an exponent exponent). For example, the floating-point number may be identified by a product of the mantissa and an integer exponent of a base.

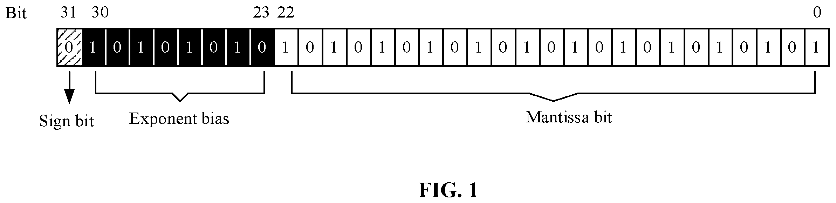

The Institute of Electrical and Electronics Engineers (Institute of Electrical and Electronics Engineers, IEEE) 754 standard defines a floating-point arithmetic standard and an expression form, and is the most widely supported and used binary floating-point arithmetic standard. The IEEE 754 standard specifies that a floating-point number includes a combination of a sign bit (sign bit), an exponent bias (exponent bits), and a mantissa bits (mantissa bits). In the IEEE 754 standard, there are a plurality of types of floating-point numbers, for example, a single-precision (single-precision, SP) floating-point number, a double-precision (double-precision, DP) floating-point number, an extended single-precision floating-point number, and an extended double-precision floating-point number. Floating-point numbers of different types have different bit widths, and a full bit width of the floating-point number may include a sign bit, all of a bit width of the exponent bias, and all of a bit width of the mantissa. For example, a bit width of the single-precision floating-point number is 32 bits (bits), a bit width of the double-precision floating-point number is 64 bits, a bit width of the extended single-precision floating-point number is 43 bits, and a bit width of the extended double-precision floating-point number is 79 bits. For example, FIG. 1 shows a single-precision floating-point number, and a full bit width of the single-precision floating-point number is 32 bits. A $0^{th}$ bit to a $22^{nd}$ bit indicate mantissa bits, a $23^{rd}$ bit to a $30^{th}$ bit indicate an exponent bias, and a $31^{st}$ bit indicates a sign bit.

Currently, a method for calculating a square root of a floating-point number may include two methods. One method is to solve the square root of the floating-point number based on an iterative method and an equation, for example, the Babylonian method or the Newton-Raphson method. A square root solving equation is used, an initial approximation value is used as an input, and after each iteration of calculation, a square root with a full bit width that is not precise may be obtained. A calculation result with a full bit width that meets a high precision requirement is obtained through a plurality of iterations. However, a quantity of iterations is large, and a convergence speed is slow.

Another method is to solve the square root of the floating-point number through iteration bit by bit. In this method, a result obtained through calculation in each iteration is a precise non-full bit width result with fixed bits. A quantity of fixed bits is related to a radix (radix) selected by a basic iterative operation component of the Sweeney-Robertson-Tocher algorithm (Sweeney-Robertson-Tocher algorithm, SRT). If the radix is 4 (=$2^2$), it means that a precise result obtained by the iterative operation component each time is 2 bits. If a final precision requirement is a double-precision floating-point requirement, a quantity of iterations is at least 26. In the manner of solving the square root of the floating-point number through iteration bit by bit, a throughput is low, and it is difficult to implement pipeline processing.

In view of this, embodiments of this application provide a method for calculating a square root of a floating-point number and a floating-point number calculation module, which have a low calculation delay and a high throughput.

The method for calculating a square root of a floating-point number provided in embodiments of this application may be implemented by the floating-point number calculation module. The floating-point number calculation module may be used in a processor (or a calculator), for example, used in a CPU, a GPU, or a digital signal processor (digital signal processor, DSP).

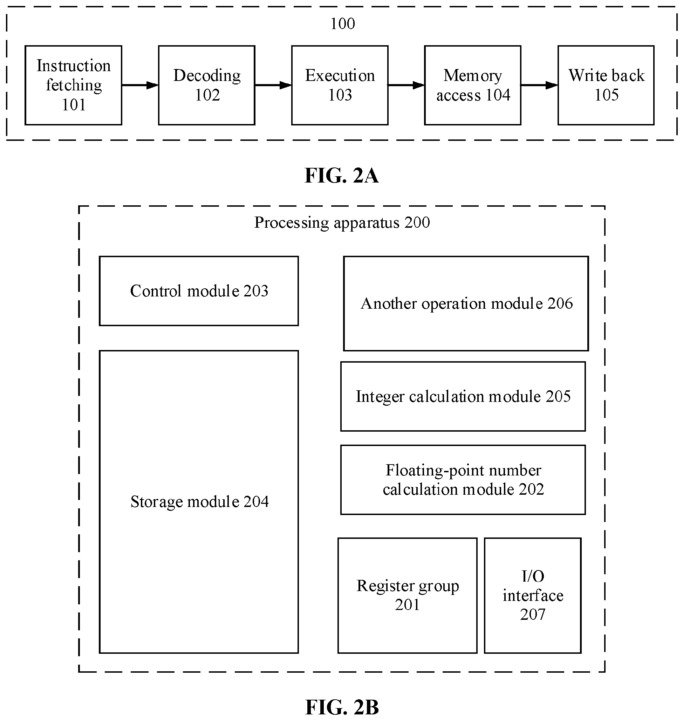

For example, the CPU usually uses a five-stage pipeline 100 to execute a calculation task. As shown in FIG. 2A, the five-stage pipeline may include five stages: instruction fetch 101, decoding 102, execution 103, memory access 104, and write back 105. An instruction may be fetched in the instruction fetch stage 101. In the decoding stage 102, the fetched instruction may be translated into an instruction and a parameter that can be used to identify an operation. The execution stage 103 may be a stage of logical operations and mathematical operations. In some scenarios, when the CPU implements the method for calculating a square root of a floating-point number provided in embodiments of this application, the CPU may implement the method for calculating a square root of a floating-point number provided in embodiments of this application in the execution stage 103. In the memory access stage 104, the CPU may exchange an instruction with a storage module, for example, read data from the storage module or store data in the storage module. In the write back stage 105, a final output result may be updated to a register. FIG. 2B is a diagram of a structure of a processing apparatus according to an embodiment of this application. The processing apparatus may be implemented as a CPU, a GPU, an AI processor, or the like. The processing apparatus 200 may include a register group 201 and a floating-point number calculation module 202 provided in this application. The register group 201 may include a plurality of registers. A first register in the plurality of registers may store a to-be-calculated floating-point number. The floating-point number calculation module 202 may obtain the to-be-calculated floating-point number from the first register, and calculate a square root of the to-be-calculated floating-point number. A second register in the plurality of registers may store the square root of the to-be-calculated floating-point number.

In a possible design, the plurality of registers may include a third register. The third register may store a rounding configuration manner. The floating-point number calculation module 202 may obtain the rounding manner configuration parameter from the third register, and execute a rounding manner corresponding to the rounding manner configuration parameter, to obtain the square root of the to-be-calculated floating-point number.

Optionally, the processing apparatus 200 may include a control module 203. The control module 203 may perform the foregoing processes such as the instruction fetching 101 and the decoding 102. Optionally, the processing apparatus 200 may include a storage module 204. The storage module 204 may include a buffer configured to store data. Optionally, the processing apparatus 200 may include an integer calculation module 205 configured to process an integer operation. Optionally, the processing apparatus 200 may further include another operation module 206 that may perform a logical operation, for example, a logical shift operation. In some scenarios, another operation module 206 may be implemented as an image-specific computing module. Alternatively, another operation module 206 may perform multiplication and addition operations on a large array. This is not specifically limited in this application. Optionally, the processing apparatus 200 may further include an I/O interface 207.

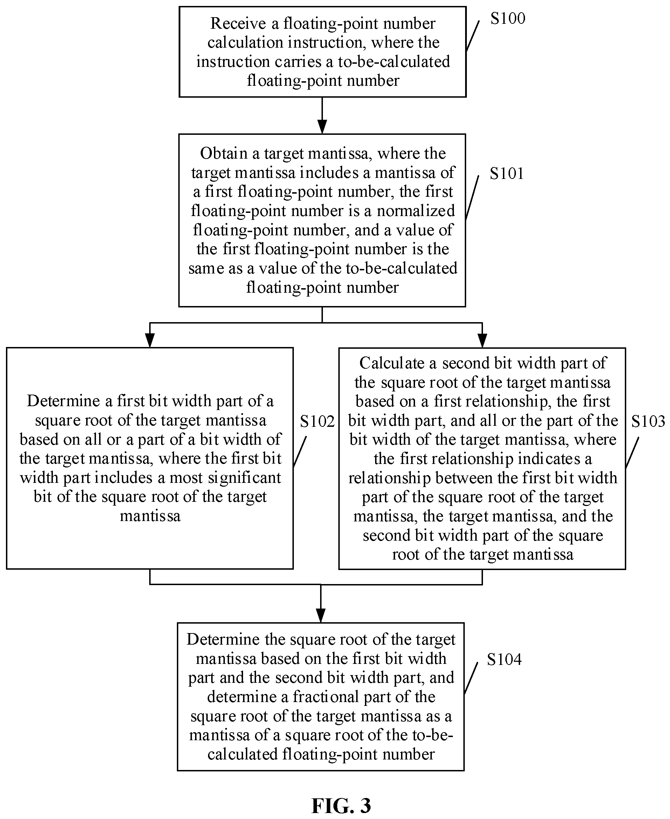

FIG. 3 shows a method for calculating a square root of a floating-point number according to an embodiment of this application. The method may be performed by a processor (or a calculator). The method for calculating a square root of a floating-point number provided in embodiments of this application may include the following steps:

Step S100: Receive a floating-point number calculation instruction, where the instruction carries a to-be-calculated floating-point number.
Step S101: Obtain a target mantissa, where the target mantissa includes a mantissa of a first floating-point number, the first floating-point number is a normalized floating-point number, and a value of the first floating-point number is the same as a value of the to-be-calculated floating-point number.

The to-be-calculated floating-point number and the first floating-point number are different only in expression forms, to be specific, mantissas and exponents of the floating-point numbers are different. It can be learned that calculating a square root of a floating-point number Z is also calculating a square root of a floating-point number W. The processor may obtain or receive the floating-point number Z (namely, the to-be-calculated floating-point number) whose square root result is to be calculated. The floating-point number Z may be a normalized floating-point number or a denormalized floating-point number. For ease of description, the target mantissa is denoted as a target mantissa X, and the first floating-point number is denoted as the floating-point number W. In embodiments of this application, a full bit width of a "mantissa" may include an integer part and a fractional part. For ease of description, the integer part and the fractional part of the mantissa are sequentially arranged. In the integer part, bits are arranged from a most significant bit to a least significant bit. In the fractional part, bits are arranged from a most significant bit to a least significant bit.

The processor may perform normalization (or referred to as normalization) on the floating-point number Z, to obtain the first floating-point number, namely, the floating-point number W. The floating-point number W and the floating-point number Z are of a same value, but only have different expression forms. Usually, the floating-point number is normalized, so that the integer part of the mantissa of the floating-point number is not 0. The mantissa of the first floating-point number W is denoted as a mantissa M1, and the exponent is denoted as E0.

Usually, a symbol of the square root of the floating-point number W is the same as a symbol of the floating-point number. Calculation of the square root of the floating-point number W includes two parts: calculation of a mantissa of the square root of the floating-point number W and calculation of an exponent of the square root of the floating-point number W. A relationship between the exponent of the square root of the floating-point number W and the exponent EW of the floating-point number W is as follows: The exponent of the square root of the floating-point number W is $\frac{1}{2}EW$. In a computer, an exponent bias of the floating-point number usually indicates the exponent of the floating-point number. An exponent bias of the square root of the floating-point number W is equal to $\frac{1}{2}EW + \text{exponent offset}$, and the exponent offset is related to a precision type of the floating-point number W. For example, when the floating-point number W is a single-precision floating-point number, the exponent offset is 127. When the floating-point number W is a double-precision floating-point number, the exponent offset is 1023. It can be learned that a critical path (critical path) for solving the square root of the floating-point number W is to solve a square root of the mantissa of the floating-point number W.

In embodiments of this application, a relationship between the target mantissa X obtained by the processor and the floating-point number W is that the target mantissa X includes the mantissa of the floating-point number W, and the target mantissa X may include all data of the mantissa of the floating-point number W. If the exponent of the first floating-point number W is an even number, the target mantissa X is the same as the mantissa of the first floating-point number W; and if the exponent of the first floating-point number W is an odd number, the target mantissa X is Q times the mantissa of the first floating-point number W, where Q is a base of the floating-point number, Q is a positive number, and Q is an even number. For example, the target mantissa X may be obtained by shifting the mantissa of the first floating-point number W to the left by 1 bit.

The following is described by using an example in which the base of the floating-point number is 2. If the exponent EW of the floating-point number W is an even number and is a positive number, the exponent of the square root of the floating-point number W is $\frac{1}{2}EW$. In this case, the target mantissa X is the same as the mantissa of the floating-point number W. In other words, an integer part of the target mantissa X is the same as the integer part of the mantissa of the floating-point number W, and a fractional part of the target mantissa X is the same as a fractional part of the floating-point number W. A fractional part of the square root of the target mantissa X is the mantissa of the square root of the floating-point number W.

If the exponent *EW* of the floating-point number W is an odd number and is a positive number, the exponent of the square root of the floating-point number W is $\frac{1}{2}(EW-1)$. In this case, the target mantissa X is twice the mantissa of the floating-point number W, where 2 is the base of the floating-point number. The target mantissa X may be obtained by shifting the mantissa of the floating-point number W to the left by 1 bit. The fractional part of the square root of the target mantissa X is the mantissa of the square root of the floating-point number W.

The processor may perform one or more of exponent parity determining processing, exponent conversion processing, and mantissa conversion processing on the floating-point number W, to obtain the target mantissa X. The following uses an example for description. The processor may normalize the received to-be-calculated floating-point number, namely, the floating-point number Z, to convert the to-be-calculated floating-point number into the floating-point number W. The exponent of the floating-point number W is denoted as the exponent *EW* and the mantissa M1. For ease of description, the following is described by using a scenario in which the base of the floating-point number is 2 when the processor performs floating-point number calculation processing as an example.

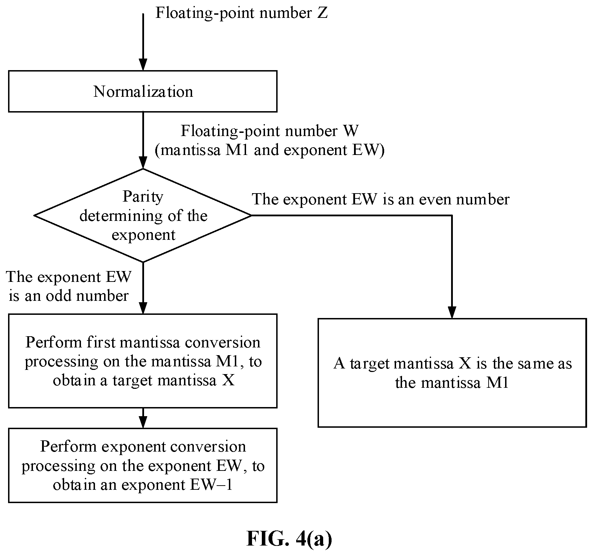

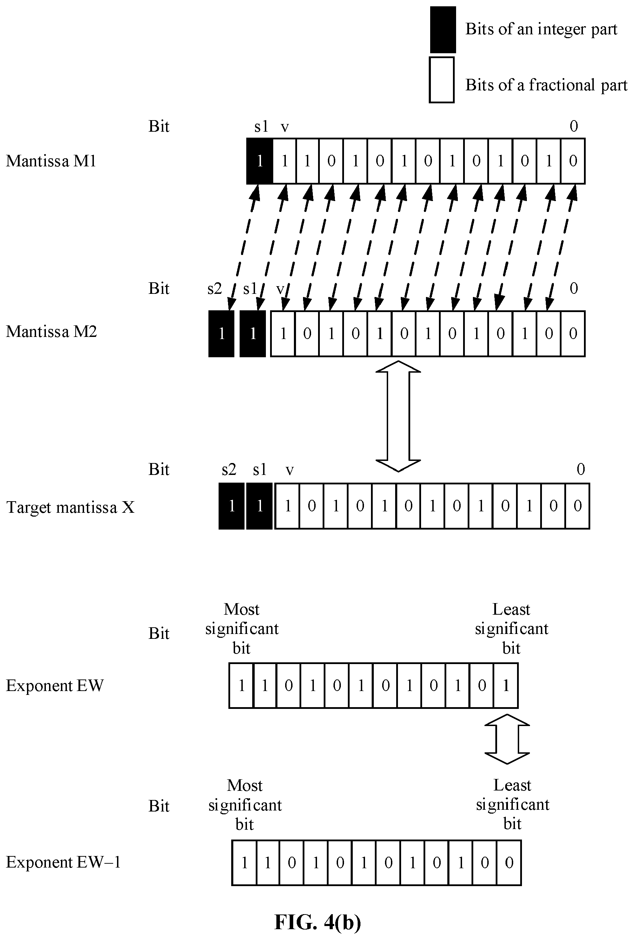

As shown in FIG. 4(a), the processor may perform exponent parity determining processing on the exponent *EW* of the floating-point number W. In a possible case, if the exponent *EW* is an odd number, the processor may perform first mantissa conversion processing on the mantissa M1, for example, multiply the mantissa M1 by Q, to obtain the mantissa M2. For example, Q is 2. As shown in FIG. 4(b), the mantissa M1 includes an integer part and a fractional part. Black boxes show bits of the integer part, and white boxes show bits of the fractional part. The integer part of the mantissa M1 of the floating-point number W is 1 bit, the integer part of the mantissa M1 is a bit indicated by an s1th bit, and the fractional part of the mantissa M1 is bits indicated by a 0th bit to a vth bit. In this case, a value range of the mantissa M1 is [1, 2).

The processor multiplies the mantissa M1 by 2, that is, shifts bits of the mantissa M1 to the left by 1 bit, to obtain the mantissa M2. In this case, an integer part of the mantissa M2 is 2 bits, the integer part of the mantissa M2 is bits indicated by an s1th bit and an s2th bit, and the fractional part of the mantissa M2 is bits indicated by a 0th bit to a vth bit. In this case, a value range of the mantissa M2 is [2, 4). It may be understood that, in comparison with the integer part of the mantissa M1, an additional bit is added to the integer part of the mantissa M2, to supplement a default integer bit in the IEEE 754 format.

In this case, that is, when the exponent *EW* of the floating-point number W is an odd number, the target mantissa X is twice the mantissa M1 of the floating-point number W, that is, the target mantissa X is the same as the mantissa M2. The integer part of the target mantissa X may include 2 bits. In this case, a value range of the target mantissa X is [2, 4).

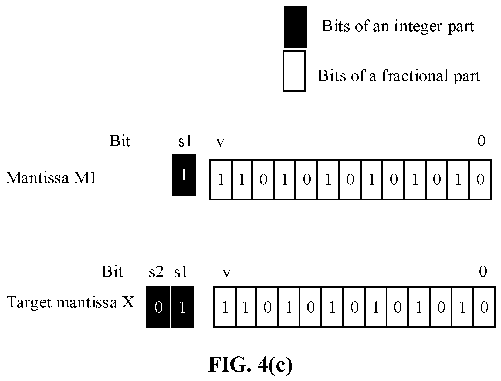

In another possible case, when the exponent *EW* of the floating-point number W is an even number, the target mantissa X is the same as the mantissa M1 of the floating-point number W. As shown in FIG. 4(c), the integer part of the mantissa M1 of the floating-point number W is 1 bit, the integer part of the mantissa M1 is a bit indicated by an s 1th bit, and the fractional part of the mantissa M1 is bits indicated by a 0th bit to a vth bit. In this case, a value range of the mantissa M1 is [1, 2). If the mantissa of the floating-point number W is the same as the mantissa M1 of the normalized floating-point number Z, a value range of the mantissa of the floating-point number W is [1, 2). Therefore, the value range of the target mantissa X is [1, 2). Optionally, in comparison with the integer part of the mantissa M1, an additional bit may be added to the integer part of the target mantissa X and may be set to 0, to supplement a default integer bit in the IEEE 754 format. For example, the s2th bit is added, and a value is set to 0. Such an operation does not change the value range of the target mantissa X.

It can be learned that the target mantissa X includes the mantissa M1 of the floating-point number W regardless of whether the exponent *EW* of the floating-point number W is an odd number or an even number.

It can be clearly learned from the foregoing descriptions that when the processor performs floating-point number calculation processing, and the base of the floating-point number is 2, the target mantissa X may be any value in a preset set. For example, the preset set may be [1, 4). A minimum value in the preset set may be 1, and a maximum value in the preset set may be close to 4, but the preset set does not include 4.

In the method for calculating a square root of a floating-point number provided in embodiments of this application, the fractional part of the square root of the target mantissa X is the mantissa of the square root of the floating-point number W. The mantissa of the square root of the floating-point number W is determined by determining the square root of the target mantissa X, to obtain a calculation result of the square root of the floating-point number W. For ease of description, the square root $\sqrt{X}$ of the target mantissa X is denoted as *f*, where *f* may be a fixed-point number, and includes an integer part and a fractional part. The processor may determine the mantissa part of the square root $\sqrt{W}$ of the floating-point number W based on the determined fractional part, namely, the fractional part of $f$, of the square root of the target mantissa X.

Although FIG. 3 shows that step S102 and step S103 are in parallel, it does not mean that the processor can only perform operations in step S102 and step S103 in parallel. In some application scenarios, the processor may perform the operations in step S102 and step S103 in serial. In some other application scenarios, the processor may perform the operations in step S102 and step S103 in parallel. It may be understood that parallel execution may include but is not limited to simultaneous execution and synchronous execution. In preset duration, synchronous execution or asynchronous execution of the operations in step S102 and step S103 may also be considered as performing the operations in step S102 and step S103 in parallel.

Step S102: Determine a first bit width part of the square root of the target mantissa based on all or a part of a bit width of the target mantissa, where the first bit width part includes a most significant bit of the square root of the target mantissa.

For ease of distinguishing a real number of $\sqrt{X}$ and the square root, determined by the processor, of the target mantissa X, the square root of the target mantissa X is denoted as $f$, and may indicate the square root, determined by the processor, of the target mantissa X in this application. The first bit width part of the square root $f$ of the target mantissa X includes the most significant bit of the square root $f$ of the target mantissa X. The square root $f$ of the target mantissa X is a fixed-point number, and includes an integer part and a fractional part. Therefore, the integer part and the fractional part may be sequentially arranged, and the most significant bit of the square root $f$ of the target mantissa X is also a most significant bit of the integer part of the square root $f$ of the target mantissa X.

For example, if the value range of the target mantissa X is [1, 4), a value range of the square root $f$ of the target mantissa X is [1, 2), the integer part of the square root $f$ of the target mantissa X is less than 2, and a full bit width of the integer part of the square root $f$ of the target mantissa X may be 1. In this application, the full bit width of the square root $f$ of the target mantissa X may be understood as a full bit width of a valid data part of the square root $f$. A most significant bit of the square root $f$ of the target mantissa X may also be understood as a most significant bit of the valid part of the integer part of the square root $f$ of the target mantissa X. The first bit width part may be referred to as a high-bit part of the square root $f$ of the target mantissa X, or may be referred to as a high-bit part $f_u$ of $f$ for short. The high-bit part $f_u$ of $f$ may be high m bits of $f$, and the high m bits may be first m bits from the most significant bit to the least significant bit in the full bit width of $f$, or may be understood as highest m bits in the full bit width of $f$. It can be seen that a bit width of the first bit width part of the square root of the target mantissa X is m. The high-bit part $f_u$ of $f$ may be understood as an approximate calculation result of the square root of the target mantissa X. Optionally, m is a positive integer, and m is a value less than or equal to the full bit width of $f$.

In a possible implementation, the processor may configure a preset correspondence between all or a part of a bit width of a mantissa and a first bit width part of a square root of the mantissa. The processor may use, based on all or the part of the bit width of the target mantissa X and the preset correspondence between all or the part of the bit width of the mantissa and the first bit width part, a first bit width part corresponding to all or the part of the bit width of the target mantissa X as the first bit width part, namely, a high-bit part $f_u$ of $f$, of the square root $f$ of the target mantissa X. However, the preset correspondence between all or the part of the bit width of the mantissa and the first bit width part of the square root of the mantissa usually needs to occupy large storage resources, and a query speed of the processor is slow.

In another possible implementation, the processor may determine the high-bit part $f_u$ of the square root $f$ of the target mantissa X based on all or the part of the bit width of the target mantissa X in a polynomial approximation manner. Because the target mantissa X includes all of a bit width of the mantissa M1 of the floating-point number W, the processor may determine the high-bit part $f_u$ of the square root $f$ of the target mantissa X based on all or a part of the bit width of the mantissa M1 of the floating-point number W.

In a possible design, the processor may determine a target first query parameter r1 based on the mantissa M1 of the floating-point number W, and determine a target second query parameter r2 based on the exponent $EW$ of the floating-point number W. In embodiments of this application, the target first query parameter may be a first part (a first part of the bit width) of the fractional part of the mantissa M1 of the floating-point number W. For example, the target first query parameter may be high nr1 bits (or low nr1 bits) of the fractional part of the mantissa M1 of the floating-point number W, where nr1 is a positive integer, and nr1 is less than or equal to the full bit width of the fractional part of the mantissa M1 of the floating-point number W. The target second query parameter is a part of a bit width of the exponent $EW$ of the floating-point number W, and includes a lowest bit width of the exponent $EW$ of the floating-point number W. The target second query parameter r2 may be low nr2 bits of the exponent $EW$ of the floating-point number W, where nr2 is a positive integer, and nr2 is less than or equal to all of the bit width of the exponent $EW$. It can be learned that the low nr2 bits of the exponent $EW$ include a least significant bit of the exponent $EW$. Optionally, the target second query parameter r2 may be data of the least significant bit of the exponent $EW$ of the floating-point number W, and the data may reflect that the exponent $EW$ is an odd number or an even number.

The processor may determine, based on the target first query parameter r1 and the target second query parameter r2, coefficients, of a first polynomial fitting equation, corresponding to the target first query parameter r1 and the target second query parameter r2. The coefficients of the first polynomial fitting equation may include a first fitting parameter a1, a second fitting parameter b1, and a third fitting parameter c1.

The processor may calculate the high-bit part $f_u$ of $f$ based on the coefficients of the first polynomial fitting equation and all or the part of the bit width of the fractional part of the mantissa M1 of the floating-point number W. For example, the processor may calculate the high-bit part $f_u$ of $f$ based on the coefficients of the first polynomial fitting equation and a second part (a second part of the bit width) of the fractional part of the mantissa M1 of the floating-point number W, where $f_u = a1 \times (X1)^2 + b1 \times X1 + c1$. X1 is the second part (the second part of the bit width) of the fractional part of the mantissa M1 of the floating-point number W, and a bit width corresponding to the second part of the fractional part of the mantissa M1 of the floating-point number W does not overlap a bit width corresponding to the first part of the fractional part of the mantissa M1 of the floating-point number W. Optionally, X1 is high t1 bits in a bit width other than the first part of the bit width of the fractional part of the mantissa M1 of the floating-point number W, and t1 is a positive integer. In embodiments of this application, the processor determines the coefficients of the polynomial fitting equation based on the first part of the fractional part of the mantissa M1 of the floating-point number W, and uses the second part of the fractional part of the mantissa M1 of the floating-point number W for calculation according to the polynomial fitting equation, to determine an approximate solution of the square root of the target mantissa X, namely, the high-bit part $f_u$ of $f$.

The processor may obtain or configure a first polynomial coefficient query table. The first polynomial coefficient query table may include correspondences between a plurality of first query parameter combinations and a plurality of first fitting parameter combinations. Each first fitting parameter combination may include the first fitting parameter a1, the second fitting parameter b1, and the third fitting parameter c1. The processor may use a manner including but not limited to a manner in any one of the following examples A1 and A2 to determine the coefficients, of the first polynomial fitting equation, corresponding to the target first query parameter r1 and the target second query parameter r2.

Example A1

In a possible implementation, the first polynomial coefficient query table may include a first odd number query subtable and a first even number query subtable. The first odd number query subtable indicates a first fitting parameter combination corresponding to a first query parameter when a second query parameter is an odd number. The first even number query subtable includes a first fitting parameter combination corresponding to a first query parameter when a second query parameter is an even number.

The processor may query, based on the target second query parameter r2 being an even number, the first even number query subtable for the first fitting parameter combination corresponding to the target first query parameter r1. Alternatively, the processor may query, based on the target second query parameter r2 being an odd number, the first odd number query subtable for the first fitting parameter combination corresponding to the target first query parameter r1. Therefore, the processor finds, from the first polynomial coefficient query table, the first fitting parameter combination corresponding to a target first query parameter combination, to determine the coefficients, of the first polynomial fitting equation, corresponding to the target first query parameter r1 and the target second query parameter r2.

It can be learned that, in this implementation, the processor may determine the first even number query subtable or the first odd number query subtable by using the target second query parameter r2 as a first index. In addition, the processor may query, by using the target second query parameter r1 as a second index, the determined subtable for the corresponding first fitting parameter combination.

Example A2

In another possible implementation, the first polynomial coefficient query table may include correspondences between a plurality of first query parameter combinations and a plurality of first fitting parameter combinations. One first query parameter combination may be used as one index. One index corresponds to one first fitting parameter combination. The processor may query, by using the target first query parameter r1 and the target second query parameter r2 as an index, the first polynomial coefficient query table for the first fitting parameter combination corresponding to the index. Therefore, the coefficients, of the first polynomial fitting equation, corresponding to the target first query parameter r1 and the target second query parameter r2 are determined.

Step S103: Calculate a second bit width part of the square root of the target mantissa based on a first relationship, the first bit width part, and all or the part of the bit width of the target mantissa, where the first relationship indicates a relationship between the first bit width part of the square root of the target mantissa, the target mantissa, and the second bit width part of the square root of the target mantissa.

In embodiments of this application, the second bit width part may include a least significant bit of a mantissa of the square root of the target mantissa X, a sum of bits of the first bit width part and bits of the second bit width part is greater than or equal to bits of the square root of the target mantissa X, and a sum of the bit width of the first bit width part and a bit width of the second bit width part is greater than or equal to the full bit width of the square root of the target mantissa X.

In embodiments of this application, the second bit width part of the square root of the target mantissa X may also be referred to as a low-bit part $f_l$ of the square root of the target mantissa X. The low-bit part $f_l$ of $f$ may be low n bits of $f$, and the low n bits may be last n bits from the most significant bit to the least significant bit in the full bit width of $f$. It can be seen that a bit width of the second bit width part of the square root of the target mantissa X is n. Optionally, n is a positive integer, and n is a value less than the full bit width of $f$. A sum of m and n is greater than or equal to the full bit width of $f$.

A relationship between the low-bit part $f_l$ of $f$, the high-bit part $f_u$ of $f$, and $f$ is $f^2 = (f_u + f_l)^2$. Based on $f=\sqrt{X}$, a relationship between the low-bit part $f_l$ of $f$, the high-bit part $f_u$ of $f$, and the target mantissa X is $f_l = \frac{1}{f_u} \times \frac{X - f_u^2}{2} - \frac{f_l^2}{2f_u}$. A calculation process of the low-bit part $f_l$ of $f$ is simplified, and the known quantity and the finite quantity of variables are used for solving. In embodiments of this application, the first relationship, namely, the first relationship between the low-bit part $f_l$ of $f$, the high-bit part $f_u$ of $f$, and the target mantissa X, may be configured as $f_l = \frac{1}{f_u} \times \frac{X - f_u^2}{2}$.

The processor may calculate the low-bit part $f_l$ of $f$ based on the first relationship between the low-bit part $f_l$ of $f$, the high-bit part $f_u$ of $f$, and the target mantissa X, the target mantissa X in step S101, and the high-bit part $f_u$, determined in step S102, of $f$.

Optionally, if a bit width of $(\frac{1}{f_u} \times \frac{X - f_u^2}{2})$ calculated by the processor based on the first relationship is greater than n, the processor may reserve high n bits as the low-bit part $f_l$ of $f$. In other words, high n+1 bits of the bit width of $f_l$ calculated by the processor based on the first relationship are rounded off. For example, the processor may perform summation on the high n+1 bits of $(\frac{1}{f_u} \times \frac{X - f_u^2}{2})$ and "1", and reserve high n bits of a summation result as the low-bit part $f_l$ of $f$.

In embodiments of this application, a reciprocal $\frac{1}{f_u}$ of the high-bit part $f_u$ of $f$ may be obtained through approximation performed on $\frac{1}{\sqrt{X}}$. The following uses an example to describe a process in which the processor determines the reciprocal $\frac{1}{f_u}$ of the high-bit part $f_u$ of $f$. The processor may determine the reciprocal $\frac{1}{f_u}$ of the high-bit part $f_u$ of $f$ by using any operation including but not limited to the following manner 1 and manner 2.

Manner 1

To improve a calculation speed, the processor may determine the high-bit part $f_u$ of $f$ and the reciprocal $\frac{1}{f_u}$ of the high-bit part $f_u$ of $f$ in parallel. For the high-bit part $f_u$ of $f$ that may be determined by the processor, refer to related descriptions in step S102. Details are not described herein again. The processor may determine the reciprocal $\frac{1}{f_u}$ of the high-bit part $f_u$ of the square root $f$ of the target mantissa X based on all or the part of the bit width of the target mantissa X in a polynomial approximation manner.

The processor may determine a target third query parameter h1 based on the mantissa M1 of the floating-point number W, and determine a target fourth query parameter h2 based on the exponent $EW$ of the floating-point number W. In embodiments of this application, the target third query parameter is a third part (a third part of the bit width) of the mantissa M1 of the floating-point number W. For example, the target third query parameter h1 may be high nh1 bits (or low nh1 bits) of the fractional part of the mantissa M1 of the floating-point number W, where nh1 is a positive integer, and nh1 is less than or equal to the full bit width of the fractional part of the mantissa M1 of the floating-point number W. The target fourth query parameter h2 is a part of the bit width of the exponent $EW$ of the floating-point number W, and includes a lowest bit width of the exponent $EW$ of the floating-point number W. For example, the target fourth query parameter may be high nh2 bits (or low nh2 bits) of the exponent $EW$ of the floating-point number W, where h2 is a positive integer, and nh2 is less than or equal to all of the bit width of the exponent $EW$ of the floating-point number W. Optionally, the target fourth query parameter h2 may be data of the least significant bit of the exponent $EW$ of the floating-point number W, and the data may reflect that the exponent $EW$ is an odd number or an even number.

The processor may determine, based on the target third query parameter h1 and the target fourth query parameter h2, coefficients, of a second polynomial fitting equation, corresponding to the target third query parameter h1 and the target fourth query parameter h2. The coefficients of the second polynomial fitting equation may include a fourth fitting parameter a2, a fifth fitting parameter b2, and a sixth fitting parameter c2.

The processor may calculate the reciprocal $\frac{1}{f_u}$ of the high-bit part $f_u$ of $f$ based on the coefficients of the second polynomial fitting equation and all or the part of the bit width of the fractional part of the mantissa of the floating-point number W. For example, the processor may calculate the reciprocal $\frac{1}{f_u}$ of the high-bit part $f_u$ of $f$ based on the coefficients of the second polynomial fitting equation and a fourth part (a fourth part of the bit width) of the fractional part of the mantissa of the floating-point number W, where $\frac{1}{f_u} = a2 \times (X2)^2 + b2 \times X2 + c2$.

The processor may output the reciprocal $\frac{1}{f_u}$ of the high-bit part $f_u$ of $f$. X2 is the fourth part (the fourth part of the bit width) of the fractional part of the mantissa of the floating-point number W, and a bit width corresponding to the fourth part of the fractional part of the mantissa of the floating-point number W does not overlap a bit width corresponding to the third part of the fractional part of the mantissa of the floating-point number W. Optionally, X2 is high t2 bits in a bit width other than the third part of the bit width of the fractional part of the mantissa of the floating-point number W, and t2 is a positive integer. In embodiments of this application, the processor determines the coefficients of the polynomial fitting equation based on the third part of the fractional part of the mantissa of the floating-point number W, and uses the fourth part of the fractional part of the mantissa of the floating-point number W for calculation according to the polynomial fitting equation, to determine the reciprocal $\frac{1}{f_u}$ of the high-bit part $f_u$ of $f$.

The processor may obtain or configure a second polynomial coefficient query table. The second polynomial coefficient query table may indicate correspondences between a plurality of second query parameter combinations and a plurality of second fitting parameter combinations. Each second fitting parameter combination may include the fourth fitting parameter a2, the fifth fitting parameter b2, and the sixth fitting parameter c2. The processor may use a manner including but not limited to a manner in any one of the following examples B1 and B2 to determine the coefficients, of the second polynomial fitting equation, corresponding to the target third query parameter h1 and the target fourth query parameter h2.

Example B1

In a possible implementation, the second polynomial coefficient query table may include a second odd number query subtable and a second even number query subtable. The second odd number query subtable indicates a second fitting parameter combination corresponding to a third query parameter when a fourth query parameter is an odd number. The second even number query subtable includes a second fitting parameter combination corresponding to a third query parameter when a fourth query parameter is an even number.

The processor may query, based on the target fourth query parameter h2 being an even number, the second even number query subtable for the second fitting parameter combination corresponding to the target third query parameter h1. Alternatively, the processor may query, based on the target fourth query parameter h2 being an odd number, the second odd number query subtable for the second fitting parameter combination corresponding to the target third query parameter h1. Therefore, the processor finds, from the second polynomial coefficient query table, the second fitting parameter combination corresponding to a target second query parameter combination, to determine the coefficients, of the second polynomial fitting equation, corresponding to the target third query parameter h1 and the target fourth query parameter h2.

It can be learned that, in this implementation, the processor may determine the second even number query subtable or the second odd number query subtable by using the target fourth query parameter h2 as a third index. In addition, the processor may query, by using the target third query parameter h1 as a fourth index, the determined subtable for the corresponding second fitting parameter combination.

Example B2

In another possible implementation, the second polynomial coefficient query table may include correspondences between a plurality of second query parameter combinations and a plurality of second fitting parameter combinations. One second query parameter combination may be used as one index, and one index corresponds to one second fitting parameter combination. The processor may query, by using the target third query parameter h1 and the target fourth query parameter h2 as an index, the second polynomial coefficient query table for the second fitting parameter combination corresponding to the index. Therefore, the coefficients, of the second polynomial fitting equation, corresponding to the target third query parameter h1 and the target fourth query parameter h2 are determined.

Manner 2

To simplify a calculation circuit in the processor, the processor may determine the high-bit part $f_u$ of $f$ and the reciprocal $\frac{1}{f_u}$ of the high-bit part $f_u$ of $f$ in series. For the high-bit part $f_u$ of $f$ that may be determined by the processor, refer to related descriptions in step S102. Details are not described herein again. The processor may determine the reciprocal $\frac{1}{f_u}$ of the high-bit part $f_u$ of the square root $f$ of the target mantissa X based on all or a part of a bit width of the high-bit part $f_u$ of $f$ in a polynomial approximation manner.

The processor may determine a target fifth query parameter g1 based on the high-bit part $f_u$ of the square root $f$ of the target mantissa X. The processor may determine coefficients of a preset third polynomial fitting equation based on the target fifth query parameter g1, where the target fifth query parameter g1 is a fifth part (a fifth part of the bit width) of the high-bit part $f_u$ of $f$. For example, the target fifth query parameter g1 may be high g1 bits (or low g1 bits) of a fractional part of the high-bit part $f_u$ of $f$, where g1 is a positive integer, and g1 is less than or equal to a full bit width of the fractional part of the high-bit part $f_u$ of $f$.

The processor may determine a reciprocal $\frac{1}{f_u}$ of the high-bit part $f_u$ of $f$ based on the coefficients of the third polynomial fitting equation and a sixth part (a sixth part of the bit width) of the first bit width part. A bit width corresponding to a fifth part of the high-bit part $f_u$ of $f$ does not overlap a bit width corresponding to a sixth part of the high-bit part $f_u$ of $f$. For example, the processor may calculate the reciprocal $\frac{1}{f_u}$ of the high-bit part $f_u$ of $f$ offbased on the coefficients of the third polynomial fitting equation and all or the part of the bit width of the high-bit part $f_u$ of $f$, where $\frac{1}{f_u} = a3 \times (g2)^2 + b3 \times g2 + c3$. Optionally, g2 is high g2 bits in a bit width other than the fifth part of the bit width of the fractional part of the high-bit part $f_u$ of $f$, and g2 is a positive integer.

The processor may determine, based on the target fifth query parameter g1, the coefficients, of the third polynomial fitting equation, corresponding to the target fifth query parameter g1. The coefficients of the third polynomial fitting equation may include a seventh fitting parameter a3, an eighth fitting parameter b3, and a ninth fitting parameter c3. The following is described by using an example in which the processor may determine, based on the target fifth query parameter g1, the coefficients, of the third polynomial fitting equation, corresponding to the target fifth query parameter g1, where the coefficients of the third polynomial fitting equation may include the seventh fitting parameter a3, the eighth fitting parameter b3, and the ninth fitting parameter c3.

The processor may use a manner including but not limited to the following example C1 to determine the coefficients, of the third polynomial fitting equation, corresponding to the target fifth query parameter g1.

Example C1

In a possible implementation, the processor may obtain or configure a third polynomial coefficient query table. The third polynomial coefficient query table may indicate correspondences between a plurality of third fitting parameter combinations and a plurality of fifth query parameters. Each fifth query parameter corresponds to a third fitting parameter combination. Each third fitting parameter combination may include the seventh fitting parameter a3, the eighth fitting parameter b3, and the ninth fitting parameter c3. The processor may find, from the third polynomial coefficient query table, the third fitting parameter combination corresponding to a target fifth query parameter, to determine the coefficients, of the third polynomial fitting equation, corresponding to the target fifth query parameter g1.

A relationship between the low-bit part $f_l$ of $f$, the high-bit part $f_u$ of $f$, and the target mantissa X may be configured as $f_l = \frac{1}{f_u} \times \frac{X - f_u^2}{2}$. The processor may calculate the low-bit part $f_l$ of $f$ based on the relationship between the low-bit part $f_l$ of $f$, the high-bit part $f_u$ of $f$, and the target mantissa X, the target mantissa X in step S101, and the high-bit part $f_u$, determined in step S102, of $f$.

It may be understood that the processor may calculate the reciprocal of the high-bit part $f_u$ of $f$ in a manner including but not limited to the foregoing manner 1 and manner 2, or may calculate the reciprocal of the high-bit part $f_u$ of $f$ by using the conventional technology. For example, the processor may use an SRT method to calculate the reciprocal of the high-bit part $f_u$ of $f$. This is not limited in this application.

Step S104: Determine the square root of the target mantissa based on the first bit width part and the second bit width part, and determine the fractional part of the square root of the target mantissa as a mantissa of a square root of the to-be-calculated floating-point number.

In a possible implementation, the processor may perform summation on the first bit width part and the second bit width part, to obtain the square root of the target mantissa X, and determine the fractional part of the square root of the target mantissa X as the mantissa of the square root of the floating-point number W.

In another possible implementation, the processor may calculate, based on a configured rounding manner, the target mantissa X, the first bit width part, and the second bit width part, a rounding determining parameter corresponding to the rounding manner; calculate, based on the first bit width part and the second bit width part, a plurality of to-be-selected results corresponding to the rounding manner; and select a to-be-selected result from the plurality of to-be-selected results based on a result of comparison between the rounding determining parameter and a preset value, and use the selected result as the square root of the target mantissa X.

In some scenarios, the processor may configure a rounding manner. The configured rounding manner may be any one of the following rounding manners: a round half RH manner, round towards positive RP manner, and a round towards zero RZ manner. Optionally, the RH manner, the RP manner, and the RZ manner may be rounding manners specified in IEEE 754.

In some other scenarios, the processor may configure a plurality of rounding manners. The plurality of rounding manners may be at least two of the RP manner, the RH manner, and the RZ manner. The plurality of rounding manners one-to-one correspond to a plurality of rounding manner configuration parameters. For example, a rounding manner indicated by (or corresponding to) a first rounding manner configuration parameter is the RP manner. A rounding manner corresponding to the second rounding manner configuration parameter is the RZ manner. A rounding manner corresponding to the third rounding manner configuration parameter is the RH manner.

The processor may execute, based on the received rounding manner configuration parameter, a rounding manner corresponding to the received rounding manner configuration parameter. For example, the processor may perform the RP manner based on the received rounding manner configuration parameter being the first rounding manner configuration parameter. For another example, the processor may perform the RZ manner based on the received rounding manner configuration parameter being the second rounding manner configuration parameter. For another example, the processor may perform the RH manner based on the received rounding manner configuration parameter being the third rounding manner configuration parameter.

The following describes a process in which the processor performs the RP manner. The processor may determine a first rounding determining parameter ie based on the first bit width part (namely, $f_u$), the second bit width part (namely, $f_l$), and the part of the bit width of the target mantissa X. The first rounding determining parameter ie may indicate a deviation between a first value and the target mantissa X, and the first value is a square, namely, $f$, of the square root of the target mantissa X.

For example, the first rounding determining parameter ie may be calculated according to a formula: $ie = f_u^2 + f_l^2 + 2 \times f_u \times f_l - X$, where $X$ is the target mantissa X.

The processor may determine the plurality of to-be-selected results based on the first bit width part (namely, $f_u$) and the second bit width part (namely, $f_l$). The plurality of to-be-selected results may include a first to-be-selected result f1 and a second to-be-selected result f2, where, $f1 = f_u + f_l$, f2=f1 + $ulp$, and $ulp$ indicates a minimum valid digit that can be expressed in a full bit width of a calculation result of $\sqrt{X}$.

The processor may select a to-be-selected result from the plurality of to-be-selected results based on the result of comparison between the first rounding determining parameter ie and the preset value, and determine the selected result as the square root of the target mantissa X. For example, the preset value may be set to 0.

The processor may determine, based on the first rounding determining parameter ie being greater than or equal to 0, that the first to-be-selected result f1 is the square root of the target mantissa X. The processor may determine, based on the first rounding determining parameter ie being less than 0, that the second to-be-selected result f2 is the square root of the target mantissa X.

The following describes a process in which the processor performs the RZ manner. The processor may determine the first rounding determining parameter ie based on the first bit width part (namely, $f_u$) and the second bit width part (namely, $f_l$), where ie = $f_u^2 + f_l^2 + 2 \times f_u \times f_l$ - X. X is the target mantissa X.

The processor may determine the plurality of to-be-selected results based on the first bit width part and the second bit width part. The plurality of to-be-selected results may include a first to-be-selected result f1 and a third to-be-selected result f3, where f1 = $f_u + f_l$, f3=f1 - $ulp$, and $ulp$ indicates a minimum valid digit that can be expressed in a full bit width of a calculation result of $\sqrt{X}$.

The processor may select a to-be-selected result from the plurality of to-be-selected results based on the result of comparison between the first rounding determining parameter ie and the preset value, and determine the selected result as the square root of the target mantissa X. For example, the preset value may be set to 0.

The processor may determine, based on the first rounding determining parameter ie being less than or equal to 0, that the first to-be-selected result f1 is the square root of the target mantissa X. The processor may determine, based on the first rounding determining parameter ie being greater than 0, that the third to-be-selected result f3 is the square root of the target mantissa X.

It is assumed that a real number of the square root of the target mantissa X without a precision loss is fr. In the RZ manner and the RP manner, one to-be-selected result is usually selected from the plurality of to-be-selected results based on a result of comparison between $f$ and fr. However, in consideration of convenience of calculation and a purpose of comparing values, a same comparison result may also be obtained by comparing $f^2$ and fr$^2$, that is, a difference between $f^2$ and the target mantissa X may be calculated. In this way, only $f^2$ needs to be calculated. The first rounding determining parameter ie may indicate the difference between $f^2$ and the target mantissa X.

In the RP manner, the processor may determine the square root $f$ of the target mantissa X according to a formula: $f = \begin{cases} f2, \text{ie} < 0 \\ f1, \text{ie} \geq 0 \end{cases}$. In the RZ manner, the processor may determine the square root $f$ of the target mantissa X according to a formula: $f = \begin{cases} f1, \text{ie} \leq 0 \\ f3, \text{ie} > 0 \end{cases}$.

The following describes a process in which the processor performs the RH manner. The processor may determine the plurality of to-be-selected results based on the first bit width part (namely, $f_u$) and the second bit width part (namely, $f_l$). The plurality of to-be-selected results include the foregoing first to-be-selected result f1, second to-be-selected result f2, and third to-be-selected result f3. It can be learned from the foregoing descriptions that f1 = $f_u + f_l$, f2=f1 + $ulp$, and f3=f1 - $ulp$. It can be learned that the second to-be-selected result f2 is greater than the first to-be-selected result f1, and the first to-be-selected result f1 is greater than the third to-be-selected result f3.

It is assumed that the real number of the square root of the target mantissa X without a precision loss is fr. In the RH manner, respective distances between two to-be-selected results and fr may be obtained through comparison, and a to-be-selected result with a minimum distance to fr in the two to-be-selected results is determined as the square root of the target mantissa X.

When the first rounding parameter ie is greater than 0, f1 > fr > f3. A deviation between fr and f1 is denoted as a first distance (f1-fr), and a deviation between f3 and fr is denoted as a second distance (fr-f3). A deviation between the first distance and the second distance is (f1 - fr) - (fr - f3), and is denoted as a first deviation. A rounding determining parameter ie1 may be a difference between a square of the first distance and a square of the second distance. In this case, ie1 = [(f1 - fr) - (fr - f3)] $\times$ [(f1 - fr) + (fr - f3)], that is, ie1 = (f1 - fr)$^2$ - (fr - f3)$^2$.

A result of (f1 - fr) + (fr - f3) is a positive number, and positivity and negativity of the first deviation (that is, a case in which the first deviation is a positive number, 0, or a negative number) are the same as positivity and negativity of the rounding determining parameter ie1 (a case in which ie1 is a positive number, 0, or a negative number). Equation transformation is performed on ie1, to obtain ie1 = [(2f1 - $ulp$)$^2$ - 4fr$^2$]/4 = $ie$ - $ulp$ $\times$ f1 + $ulp^2$/4. It can be seen that, the rounding determining parameter ie1 may be calculated based on the first rounding determining parameter ie and f1. In consideration of a bit width of the first rounding determining parameter ie and a bit width of a result obtained through an operation of ulp $\times$ f1, a minimum valid digit is a 2N$^{th}$ bit after a decimal point, and N is a bit width of the fractional part of the target mantissa X. A valid digit of $ulp^2$/4 is a (2N+2)$^{th}$ bit after the decimal point. It can be seen that $ulp^2$/4 is a result that is obtained by removing $ulp^2$/4 from ie1 and that is located beyond a valid data range for two operations: determining the first rounding determining parameter ie and calculating $ulp$ $\times$ f1, has a same symbol as ie1, and is not 0. Therefore, the processor may determine that a second rounding determining parameter ien is used in the RH manner, and a relationship between the second rounding determining parameter ien and the first rounding determining parameter ie may be ien = ie - $ulp$ $\times$ f1. The second rounding determining parameter ien may indicate a deviation between the square of the first distance and the square of the second distance.

When the first rounding parameter ie is less than 0, f2 > fr > f1. A deviation between fr and f2 is denoted as a third distance (f2-fr), and a deviation between f1 and fr is denoted as a fourth distance (fr-f1). A deviation between the third distance and the second distance is (f2 - fr) - (fr - f1), and is denoted as a second deviation. A rounding determining parameter ie2 may be a difference between a square of the third distance and a square of the fourth distance. In this case, ie2 = [(f2 - fr) - (fr - f1)] $\times$ [(f2 - fr) + (fr - f1)], that is, ie2 = (f2 - fr)$^2$ - (fr - f1)$^2$.

A result of (f2 - fr) + (fr - f1) is an integer, and positivity and negativity of the second deviation (that is, a case in which the second deviation is a positive number, 0, or a negative number) are the same as positivity and negativity of the rounding determining parameter ie2 (a case in which ie2 is a positive number, 0, or a negative number). Equation transformation is performed on ie2, to obtain ie2 = [(2f1 + $ulp$)$^2$ - 4fr$^2$]/4 = $ie$ + $ulp$ $\times$ f1 + $ulp^2$/4. It can be seen that, the rounding determining parameter ie2 may be calculated based on the first rounding determining parameter ie and f1. In consideration of the bit width of ie and a bit width of a result obtained through an operation of $ulp$ $\times$ f1, a minimum valid digit is a 2N$^{th}$ bit after a decimal point, and N is a bit width of the fractional part of the target mantissa X. A valid digit of $ulp^2$/4 is a (2N+2)$^{th}$ bit after the decimal point. It can be seen that $ulp^2$/4 is a result that is obtained by removing $ulp^2$/4 from ie2 and that is located beyond a valid data range for two operations: determining ie and calculating $ulp$ $\times$ f1, has a same symbol as ie2, and is not 0. Therefore, the processor may determine that a third rounding determining parameter iep is used in the RH manner, and a relationship between the third rounding determining parameter iep and the first rounding determining parameter ie may be iep = ie + $ulp$ $\times$ f1. The third rounding determining parameter iep may indicate a difference between the square of the third distance and the square of the fourth distance.

It can be seen that the processor may determine the second rounding determining parameter ien and the third rounding determining parameter iep based on the first bit width part (namely, $f_u$) and the second bit width part (namely, $f_l$), where ien = ie - $ulp$ $\times$ f1, iep = ie + $ulp$ $\times$ f1, and ie = $f_u^2$ + $f_l^2$ + 2 $\times$ $f_u$ $\times$ $f_l$ - X. X is the target mantissa X.

The processor may select a to-be-selected result from the plurality of to-be-selected results based on a result of comparison between the second rounding determining parameter ien and the preset value and a result of comparison between the third rounding determining parameter iep and the preset value, and determine the selected result as the square root of the target mantissa X. For example, the preset value may be set to 0.

The processor may determine, based on the third rounding determining parameter iep being less than 0, that the second to-be-selected result f2 is the square root of the target mantissa X. The processor may determine, based on the second rounding determining parameter ien being greater than or equal to 0, that the third to-be-selected result f3 is the square root of the target mantissa X. The processor may determine, based on the third rounding determining parameter iep being greater than or equal to 0 or the second rounding determining parameter ien being less than 0, that the first to-be-selected result f1 is the square root of the target mantissa X.

In embodiments of this application, the first rounding determining parameter ie, the second rounding determining parameter ien, and the third rounding determining parameter iep that are determined by the processor can ensure that an error between the square root of the target mantissa X and a real number of $\sqrt{X}$ is less than 1 ulp($2^{-N}$), where N is the bit width of the fractional part of the target mantissa X, that is, $|f - \sqrt{X}| < 2^{-N}$. ulp is a unit of least precision (unit of least precision, ulp), and *ulp* indicates the minimum valid digit that can be expressed in the full bit width of the square root (the calculation result of $\sqrt{X}$) of the target mantissa X. In the RP manner, the determined square root *f* of the target mantissa X is selected from the first to-be-selected result f1 and the second to-be-selected result f2. In the RZ manner, the determined square root *f* of the target mantissa X is selected from the first to-be-selected result f1 and the third to-be-selected result f3. In the RH manner, the determined square root *f* of the target mantissa X is selected from the first to-be-selected result f1, the second to-be-selected result f2, and the third to-be-selected result f3.

When the first rounding determining parameter ie is equal to 0, f1 may be directly selected as the square root *f* of the target mantissa X.

The processor may select, based on positivity and negativity of the second rounding determining parameter ien, a to-be-selected result from the first to-be-selected result f1 and the third to-be-selected result f3, and use the selected result as the square root *f* of the target mantissa X. The processor may determine the square root *f* of the target mantissa X according to a formula:

$$f = \begin{cases} f1, \text{ien} < 0 \\ f3, \text{ien} \geq 0 \end{cases}.$$

The processor may select, based on positivity and negativity of the third rounding determining parameter iep, a to-be-selected result from the first to-be-selected result f1 and the second to-be-selected result f2, and use the selected result as the square root *f* of the target mantissa X. The processor may determine the square root *f* of the target mantissa X according to a formula:

$$f = \begin{cases} f2, \text{iep} < 0 \\ f1, \text{iep} \geq 0 \end{cases}.$$

When iep <0, ie is less than 0. When ien $\geq$ 0, ie is greater than 0. When performing the RH manner, the processor may determine the square root *f* of the target mantissa X according to a formula:

$$f = \begin{cases} f2, \text{iep} < 0 \\ f1, \text{else} \\ f3, \text{ien} \geq 0 \end{cases},$$

where else may mean iep $\geq$ 0 or ien < 0.

In embodiments of this application, the second rounding determining parameter ien and the third rounding determining parameter iep that are determined by the processor can ensure calculation precision with a smaller calculation amount.

It can be learned from the foregoing descriptions of the rounding manner that can be performed by the processor that, when the square root *f* of the target mantissa X is calculated based on the high-bit part and the low-bit part of the square root of the target mantissa X, tie to even and tie to away cases in the IEEE 754 rounding standard do not occur. Therefore, the processor may not need to configure a circuit for performing tie to even and tie to away rounding manners, to reduce an area of a circuit in the processor.

The processor may determine the exponent bias of the square root of the floating-point number W based on the exponent *EW*. For example, if the exponent *EW* of the floating-point number W is an even number and is a positive number, the processor may determine $\frac{1}{2}\text{EW}+\text{exponent offset}$ as the exponent bias of the square root of the floating-point number W. If the exponent EW of the floating-point number W is an odd number and is a positive number, the processor may determine $\frac{1}{2}(EW - 1)+\text{exponent offset}$ as the exponent bias of the square root of the floating-point number W.

The processor may output the square root $\sqrt{W}$ of the floating-point number W, where a sign bit of $\sqrt{W}$ is the same as a sign bit of the floating-point number W, and a mantissa of $\sqrt{W}$ is the same as the fractional part of the square root of the target mantissa X.

To ensure that the error between the square root, determined by the processor, of the target mantissa X and the real number of $\sqrt{X}$ is less than 1 ulp, the bit width of the fractional part of the target mantissa X may be configured as N bits, and a full bit width of the first bit width part may be configured as d+2 bits. In this case, a bit width of a fractional part of the first bit width part is d+1 bits, a relationship between d and N may meet a preset condition, and the preset condition may be $d \geq \frac{N}{2} + 1$.

The following is described with reference to an error in a process of determining the square root of the target mantissa X. In a possible implementation, the processor determines the first bit width part (namely, $f_u$) based on a part of the bit width of the target mantissa X, for example, high t4 bits (denoted as Xt) of the fractional part of the target mantissa X, where t4 is a positive integer, and t4 is less than a full bit width of the target mantissa X. In this case, the bit width of the fractional part of $f_u$ is d+1 bits. In this case, a relationship between the target mantissa X and Xt is $X = Xt + Xr$, where Xr indicates a part of the target mantissa X other than the high t4 bits. Because $X \in [1, 4)$, $Xr \in [0, 2^{-(d+1)})$. The processor determines a reciprocal (namely, $\frac{1}{fu}$) of the first bit width part based on Xt by using the operation in the manner 1. In this case, a bit width of a fractional part of $\frac{1}{fu}$ is d+1 bits.

An error generated in a process in which the processor determines the first bit width part (namely, $f_u$) is

$\varepsilon 1 = \sqrt{Xt} - f_u$ , where $|\varepsilon 1| < 2^{-(d+1)}$. An error generated in a process in which the processor determines the reciprocal $\frac{1}{fu}$ of the first bit width part is $\varepsilon 2 = \frac{1}{\sqrt{Xt}} - \frac{1}{fu}$ , where $|\varepsilon 2| < 2^{-(d+1)}$. In a process in which the processor determines the second bit width part, based on a relationship, that is, $f_l = \frac{1}{fu} \times \frac{X - f_u^2}{2}$ , between the low-bit part $f_l$ of $f$, the high-bit part $f_u$ of $f$, and the target mantissa X, a bit width of $\frac{1}{fu} \times \frac{X - f_u^2}{2}$ may exceed n bits, and the bit width of the second bit width part is n bits in an actual scenario. In this case, the processor reserves high n bits of $\frac{1}{fu} \times \frac{X - f_u^2}{2}$ as the second bit width part (namely, $f_l$), and an error $e_{RH}$ is generated, where $e_{RH} = \frac{1}{2}\text{ulp}$ , that is, $e_{RH}$ is $2^{-(N+1)}$. The error generated in the process in which the processor determines the second bit width part includes an error $e_c$ generated by multiplying $\frac{1}{fu}$ and $\frac{X - f_u^2}{2}$ and an error $e_{RH}$ generated in a reserve operation.

In this case, it is determined that an error *err* of $\sqrt{X}$ may be expressed as $|e + e_{RH}|$, and *err* $= |e + e_{RH}| < \frac{3}{2} \cdot 2^{-2d} + \frac{9}{8} \cdot 2^{-(2d+2)} + 2^{-(N+1)}$ . $|err| < 2^{-N}$, so that the determined error *err* of $\sqrt{X}$ is less than 1 ulp. Based on $err < \frac{3}{2} \cdot 2^{-2d} + \frac{9}{8} \cdot 2^{-(2d+2)} + 2^{-(N+1)}$ and $|err| < 2^{-N}$, the foregoing preset condition $d \geq \frac{N}{2} + 1$ may be obtained.

Based on the foregoing descriptions, the target first query parameter r1 may be the first part (the first part of the bit width) of the fractional part of the target mantissa X. For example, the target first query parameter may be high nr1 bits (or low nr1 bits) of the fractional part of the target mantissa X, where nr1 is a positive integer, and nr1 is less than or equal to the full bit width of the fractional part of target mantissa X. In some possible designs, the preset condition may be configured as $d = \frac{N}{2} + 1$ . The processor may determine the first bit width part (namely, $f_u$) and the reciprocal of the first bit width part (namely, $\frac{1}{fu}$ ) based on high t5 bits in a bit width of the fractional part of the target mantissa X other than the first part of the bit width and the first part (namely, the high nr1 bits of the fractional part of the target mantissa X) of the fractional part of the target mantissa X, where t5 is a positive integer. It can be learned that the processor may implement the error between the square root of the target mantissa X and the real number of $\sqrt{X}$ being less than 1 ulp (namely, $2^{-\left(\frac{N}{2} + 2\right)}$ ) based on high nr1+t5 bits of the fractional part of the target mantissa X, that is, t4=nr1+t5, a bit width t4 of a fractional part of Xt being d+2 bits (namely, $\frac{N}{2} + 3$ ), and the bit width of the fractional part of first bit width part being d+1 bits (namely, $f_u$). It can be learned that in embodiments of this application, the processor may calculate the first bit width part (namely, $f_u$) based on data of high $\frac{N}{2} + 3$ bits of the fractional part of the target mantissa X. The high nr1 bits in the high $\frac{N}{2} + 3$ bits of the fractional part of the target mantissa X may be used as index bits, and are used to determine the target first query parameter r1, to help determine the coefficients of the first polynomial fitting equation. Another bit in the high $\frac{N}{2} + 3$ bits of the fractional part of the target mantissa X other than the high nr1 bits may be used as a calculation bit, and is used as a variable value in the first polynomial fitting equation for calculating the first bit width part (namely, $f_u$).

It may be understood that, to implement steps (or functions) in the foregoing method embodiments, the processor may include corresponding hardware structures and/or software modules for performing the steps (or functions). A person skilled in the art should be easily aware that, based on the modules and the method steps in the examples described in embodiments disclosed in this application, this application can be implemented by hardware or a combination of hardware and computer software. Whether a step (or function) is performed by hardware or hardware driven by computer software may depend on particular application scenarios and design constraint conditions of the technical solutions.

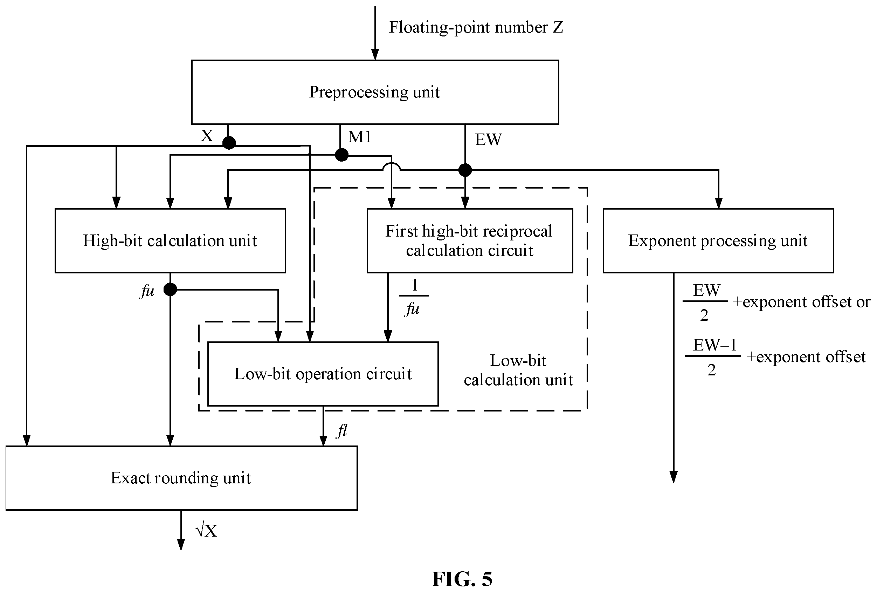

Based on a same inventive concept, this application further provides a floating-point number calculation module. The following describes a structure of the floating-point number calculation module. FIG. 5 shows a floating-point number calculation module according to an example embodiment. The floating-point number calculation module may include a high-bit calculation unit, a low-bit calculation unit, and an exact rounding unit. The high-bit calculation unit, the low-bit calculation unit, and the exact rounding unit may obtain all or a part of a bit width of a target mantissa X.

Optionally, the floating-point number calculation module may further include a preprocessing unit. The preprocessing unit may receive a to-be-calculated floating-point number Z, and convert the floating-point number Z into a floating-point number W through preprocessing. The following is described with reference to a floating-point number representation form. A representation form of the floating-point number Z input to the preprocessing unit is $Z = S \times M0 \times Q^{Ek\text{-exponent offset}}$,

where S indicates a sign bit of the floating-point number, M0 indicates a mantissa of the floating-point number, Q indicates a base of the floating-point number, $Ek$ indicates an exponent bias of the floating-point number, and ($Ek$ - exponent offset) indicates an exponent $EZ$ of the floating-point number Z. The exponent offset is a preset number, and is related to a type of the floating-point number Z. For example, when the floating-point number Z is a single-precision floating-point number, the exponent offset is 127. When the floating-point number is a double-precision floating-point number, the exponent offset is 1023.

The preprocessing unit may receive the floating-point number Z through a plurality of signal lines. In each signal line, a signal at a first level may indicate "0", and a signal at a second level may indicate "1". Optionally, the first level may be a high level, and the second level may be a low level. Alternatively, the first level may be a low level, and the second level may be a high level. One signal line may correspond to one bit width in a full bit width of the floating-point number Z. Connection lines between units in the floating-point number calculation module provided in embodiments of this application indicate interaction between the units, and do not indicate actual connection manners between the units.

The preprocessing unit may have a capability of preprocessing the floating-point number Z. The preprocessing unit may include but is not limited to the following functions: a normalization processing function, an exponent parity determining function, an exponent conversion processing function, and a mantissa conversion processing function, to support the preprocessing unit in preprocessing the floating-point number Z.

The floating-point number Z received by the preprocessing unit may be a normalized (normalized) floating-point number, namely, a normalized floating-point number. Alternatively, the floating-point number Z received by the preprocessing unit may be a denormalized floating-point number, namely, a denormalized (denormalized) floating-point number.

FIG. 4(a) shows a preprocessing process of the floating-point number Z according to an example embodiment. The preprocessing unit has a capability of normalizing a denormalized floating-point number. During normalization processing of the preprocessing unit, the normalized floating-point number Z may be denoted as the floating-point number W, and the floating-point number W may be represented as $S \times M1 \times Q^{EW}$. S is a sign bit, Q is a base, $EW$ is an exponent, M1 is a mantissa, a value of each bit of M1 is between 0 and the base Q, and a most significant bit of M1 is not 0. The mantissa M1 is a fixed-point number, the most significant bit is an integer part, a part other than the most significant bit is a fractional part, and the integer part of the mantissa M1 of the normalized floating-point number is not 0.

In the exponent parity determining function of the preprocessing unit, when performing parity determining on the exponent $EW$ of the floating-point number W (an expression format of the normalized floating-point number Z), the preprocessing unit may reflect that the exponent $EW$ of the floating-point number W is an odd number based on a least significant bit of the exponent $EW$ being 0. The least significant bit of the exponent $EW$ of the floating-point number W being 1 may reflect that the exponent $EW$ of the floating-point number W is an even number.

In a possible case, as shown in FIG. 4(b), the preprocessing unit may perform mantissa conversion processing on the mantissa M1 of the floating-point number W and perform exponent conversion processing on the exponent $EW$ of the floating-point number W based on the exponent $EW$ of the floating-point number W being an odd number.

When the exponent $EW$ of the floating-point number W is an odd number, the preprocessing unit may perform first mantissa conversion processing on the mantissa M1 of the floating-point number W based on the exponent $EW$ of the floating-point number W being an odd number, to obtain a mantissa M2. For example, the first mantissa conversion processing may be an operation of multiplying by Q. The preprocessing unit may multiply the mantissa M1 by Q based on the exponent $EW$ of the floating-point number W being an odd number, to obtain the mantissa M2.

For example, Q is 2. As shown in FIG. 4(b), the mantissa M1 includes an integer part and a fractional part. Black boxes show bits of the integer part, and white boxes show bits of the fractional part. The integer part of the mantissa M1 of the floating-point number W is 1 bit, the integer part of the mantissa M1 is a bit indicated by an s1$^{th}$ bit, and the fractional part of the mantissa M1 is bits indicated by a 0$^{th}$ bit to a v$^{th}$ bit. In this case, a value range of the mantissa M1 is [1, 2).

The preprocessing unit multiplies the mantissa M1 by 2, that is, shifts bits of the mantissa M1 to the left by 1 bit, to obtain the mantissa M2. In this case, an integer part of the mantissa M2 is 2 bits, the integer part of the mantissa M2 is bits indicated by an s1$^{th}$ bit and an s2$^{th}$ bit, and the fractional part of the mantissa M2 is bits indicated by a 0$^{th}$ bit to a v$^{th}$ bit. In this case, a value range of the mantissa M2 is [2, 4). It may be understood that, in comparison with the integer part of the mantissa M1, an additional bit is added to the integer part of the mantissa M2, to supplement a default integer bit in the IEEE 754 format. When the exponent $EW$ of the floating-point number W is an odd number, the target mantissa X is twice the mantissa M1 of the floating-point number W, that is, the target mantissa X is the same as the mantissa M2. The integer part of the target mantissa X may include 2 bits. In this case, a value range of the target mantissa X is [2, 4).

In the foregoing descriptions, the preprocessing unit performs first mantissa conversion processing on the mantissa M1, to obtain the mantissa M2, so as to obtain the target mantissa X. This is used in a process in which the preprocessing unit obtains the target mantissa X based on the mantissa M1 when it is clear that the exponent EW of the floating-point number W is an odd number. In some application scenarios, the preprocessing unit may directly obtain the target mantissa X based on the mantissa M1 in a preset mantissa conversion processing manner, and output the target mantissa X.

When the exponent *EW* of the floating-point number W is an odd number, solving a square root (namely, obtaining a calculation result of $\sqrt{Z}$ ) of the floating-point number Z may be converted into calculation of $\sqrt{X} \times \sqrt{Q^{EW-1}}$, where $\sqrt{Q^{EW-1}} = Q^{\frac{1}{2}(EW-1)}$ .

The floating-point number calculation module may further include an exponent processing unit. As shown in FIG. 4(b), the preprocessing unit may perform exponent conversion processing on the exponent *EW* of the floating-point number W based on the exponent *EW* of the floating-point number W being an odd number, and subtract 1 from a least significant bit in a full bit width of the exponent *EW,* to obtain an exponent *EW*-1, where the exponent *EW*-1 is an even number. The preprocessing unit may output the exponent *EW*-1 to the exponent processing unit based on the exponent *EW* of the floating-point number W being an odd number, so that the exponent processing unit determines an exponent or an exponent bias of the square root of the floating-point number W.

The preprocessing unit may provide the exponent *EW*-1 to the exponent processing unit based on the exponent *EW* of the floating-point number W being an odd number. The preprocessing unit may shift the exponent *EW*-1, for example, shift 1 bit in a low-bit direction of a bit width of the exponent, to obtain an exponent $\frac{1}{2}(EW - 1)$ of $\sqrt{Z}$ , namely, an exponent of $\sqrt{W}$ . The exponent processing unit may calculate the exponent bias of $\sqrt{Z}$ based on a sum of the exponent $\frac{1}{2}(EW - 1)$ of $\sqrt{Z}$ and the preset exponent offset, and output the exponent bias of $\sqrt{Z}$ is $\frac{1}{2}(EW - 1) + \text{exponent offset}$ . The preset exponent offset is related to a type of the floating-point number Z. For example, when the floating-point number Z is a single-precision floating-point number, the exponent offset may be 127. When the floating-point number is a double-precision floating-point number, the exponent offset may be 1023.

In another possible case, when the exponent *EW* of the floating-point number W is an even number, the target mantissa X is the same as the mantissa M1 of the floating-point number W. The preprocessing unit may output the target mantissa X, and the target mantissa is the same as the mantissa M1 of the floating-point number W. As shown in FIG. 4(c), the integer part of the mantissa M1 of the floating-point number W is 1 bit, the integer part of the mantissa M1 is a bit indicated by an

s1th bit, and the fractional part of the mantissa M1 is bits indicated by a 0th bit to a vth bit. In this case, a value range of the mantissa M1 is [1, 2). If the mantissa of the floating-point number W is the same as the mantissa M1 of the normalized floating-point number Z, a value range of the mantissa of the floating-point number W is [1, 2). Therefore, the value range of the target mantissa X is [1, 2). Optionally, in comparison with the integer part of the mantissa M1, an additional bit may be added to the integer part of the target mantissa X and may be set to 0, to supplement a default integer bit in the IEEE 754 format. For example, the s2th bit is added, and a value is set to 0. Such an operation does not change the value range of the target mantissa X.

When the exponent *EW* of the floating-point number W is an even number, solving a square root (namely, obtaining a calculation result of $\sqrt{Z}$ ) of the floating-point number Z may be converted into calculation of $\sqrt{X} \times \sqrt{Q^{EW}}$ , where $\sqrt{Q^{EW}} = Q^{\frac{1}{2}(EW)}$ . The preprocessing unit may provide the exponent *EW* to the exponent processing unit based on the exponent *EW* of the floating-point number W being an even number. The exponent processing unit may calculate the exponent bias of $\sqrt{Z}$ based on a sum of the exponent $\frac{1}{2}EW$ of $\sqrt{Z}$ and the preset exponent offset, and output the exponent bias, where the exponent bias of $\sqrt{Z}$ is $\frac{1}{2}EW + \text{exponent offset}$ . The preset exponent offset is related to a type of the floating-point number Z. For example, when the floating-point number Z is a single-precision floating-point number, the exponent offset may be 127. When the floating-point number is a double-precision floating-point number, the exponent offset may be 1023.

The following describes a process in which the floating-point number calculation module determines a square root *f* of the target mantissa X, where *f* is usually a fixed-point number. If a full bit width of a fractional part of the target mantissa X is p bits, a full bit width of *f* is p+1 bits. In the full bit width of *f*, a most significant bit is a pth bit, a least significant bit is a 0th bit, and a (p-1)th bit to a 0th bit are a fractional part after a decimal point of the fixed-point number.

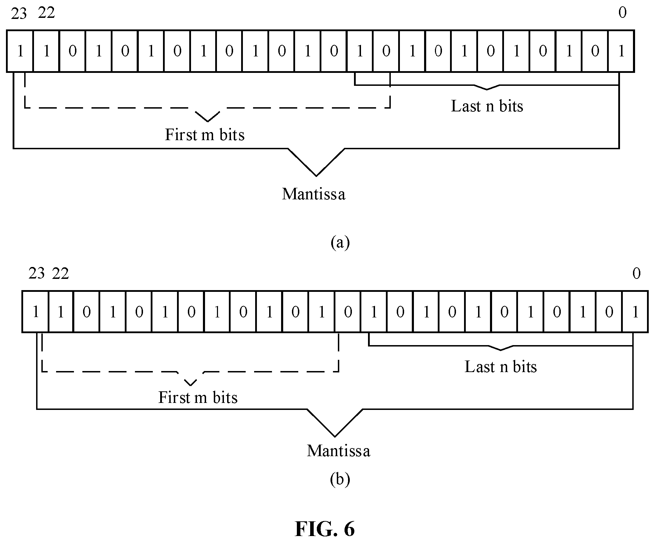

The floating-point number calculation module provided in embodiments of this application may separately determine data (which is referred to as a high-bit part of *f*) of high m bits of *f* and data (which is referred to as a low-bit part of *f*) of low n bits of *f*. The floating-point number calculation module may determine a calculation result of $\sqrt{X}$ based on the determined high-bit part and low-bit part of *f*. The high m bits may be first m bits from the most significant bit to the least significant bit in the full bit width of *f*. The low n bits may be last n bits from the most significant bit to the least significant bit in the full bit width of *f*. Optionally, overlapping bits exist between the high m bits of *f* and the low n bits of *f*. As shown in (a) in FIG. 6, it is assumed that the floating-point number Z is a single-precision floating-point number, and the full bit width of the mantissa is 23 bits. The full bit width of *f* is 24 bits, the most significant bit is a 23$^{rd}$ bit, and the least significant bit is a 0$^{th}$ bit. The high m bits of *f* are first m bits from the 23$^{rd}$ bit to the 0$^{th}$ bit, and the low n bits of *f* are last n bits from the 23$^{rd}$ bit to the 0$^{th}$ bit. As shown in (b) in FIG. 6, the high m bits of *f* may not overlap the last n bits of *f*. In the high m bits of *f* and the low n bits of *f*, values of m and n may be pre-configured. In some application scenarios, m and n may be configured based on the type of the floating-point number Z.

In embodiments of this application, for ease of description, high w bits of "A" may be data of first w bits from a most significant bit to a least significant bit of "A". Low w bits of "A" may be data of last w bits from the most significant bit to the least significant bit of "A".

For ease of description, the high m bits of *f* are represented by $f_u$, the low n bits of *f* are represented by $f_l$, and $X = f^2 = (f_u + f_l)^2$. In this case, a relationship between a high-bit part $f_u$ and a low-bit part $f_l$ of *f* is $f_l = \frac{1}{f_u} \times \frac{X - f_u^2}{2} - \frac{f_l^2}{2f_u}$. To simplify a calculation process of *f*, the relationship between the high-bit part $f_u$ and the low-bit part $f_l$ may be approximately $f_l = \frac{1}{f_u} \times \frac{X - f_u^2}{2}$. In embodiments of this application, the high-bit part $f_u$ of *f* indicates an approximate value of $\sqrt{X}$, namely, an approximate value of *f*. $(f_u + f_l)$ may indicate a precise value of $\sqrt{X}$, namely, a precise value of *f*.

The preprocessing unit may output the target mantissa X, so that another unit uses the full bit width or a part of the bit width of the target mantissa X. In embodiments of this application, the target mantissa X indicates a mantissa obtained by preprocessing the floating-point number Z, and is referred to as a target mantissa X of the floating-point number Z in the following. EW indicates an exponent of the normalized floating-point number Z, and is referred to as an exponent EW of the floating-point number Z in the following.

Still refer to FIG. 5. The high-bit calculation unit may be connected to the preprocessing unit. The high-bit calculation unit may receive all or the part of the bit width of the target mantissa X output by the preprocessing unit. The high-bit calculation unit may receive all or a part of the bit width of the mantissa M1 of the floating-point number W and all or a part of the bit width of the exponent *EW* of the floating-point number W that are output by the preprocessing unit.

The high-bit calculation unit may determine a high-bit part $f_u$ of the square root *f* of the target mantissa X according to a first polynomial fitting equation and all or the part of the bit width of the target mantissa X in a polynomial approximation manner.

The high-bit calculation unit may determine a target first query parameter r1 based on the mantissa M1 of the floating-point number W, and determine a target second query parameter r2 based on the exponent EW of the floating-point number W. In embodiments of this application, the target first query parameter may be a first part (a first part of the bit width) of the fractional part of the mantissa M1 of the floating-point number W. For example, the target first query parameter may be high nr1 bits (or low nr1 bits) of the fractional part of the mantissa M1 of the floating-point number W, where nr1 is a positive integer, and nr1 is less than or equal to the full bit width of the fractional part of the mantissa M1 of the floating-point number W. The target second query parameter is a part of a bit width of the exponent *EW* of the floating-point number W, and includes a lowest bit width of the exponent *EW* of the floating-point number W. The target second query parameter r2 may be low nr2 bits of the exponent *EW* of the floating-point number W, where nr2 is a positive integer, and nr2 is less than or equal to all of the bit width of the exponent *EW*. It can be learned that the low nr2 bits of the exponent *EW* include a least significant bit of the exponent *EW*. Optionally, the target second query parameter r2 may be data of the least significant bit of the exponent *EW* of the floating-point number W, and the data may reflect that the exponent *EW* is an odd number or an even number.

The high-bit calculation unit may determine, based on the target first query parameter r1 and the target second query parameter r2, coefficients, of the first polynomial fitting equation, corresponding to the target first query parameter r1 and the target second query parameter r2. The coefficients of the first polynomial fitting equation may include a first fitting parameter a1, a second fitting parameter b1, and a third fitting parameter c1.

The high-bit calculation unit may calculate the high-bit part $f_u$ of *f* based on the coefficients of the first polynomial fitting equation and all or the part of the bit width of the fractional part of the mantissa M1 of the floating-point number W. For example, the high-bit calculation unit may calculate the high-bit part $f_u$ of *f* based on the coefficients of the first polynomial fitting equation and a second part (a second part of the bit width) of the fractional part of the mantissa M1 of the floating-point number W, where $f_u = a1 \times (X1)^2 + b1 \times X1 + c1$. X1 is the second part (the second part of the bit width) of the fractional part of the mantissa M1 of the floating-point number W, and a bit width corresponding to the second part of the fractional part of the mantissa M1 of the floating-point number W does not overlap a bit width corresponding to the first part of the fractional part of the mantissa M1 of the floating-point number W. Optionally, X1 is high t1 bits in a bit width other than the first part of the bit width of the fractional part of the mantissa M1 of the floating-point number W, and t1 is a positive integer. In embodiments of this application, the high-bit calculation unit determines the coefficients of the polynomial fitting equation based on the first part of the fractional part of the mantissa M1 of the floating-point number W, and uses the second part of the fractional part of the mantissa M1 of the floating-point number W for calculation according to the polynomial fitting equation, to determine an approximate solution of the square root of the target mantissa X, namely, the high-bit part $f_u$ of $f$.

In some application scenarios, the bit width of the fractional part of the target mantissa X is N bits. The high-bit calculation unit may receive high t1 bits in a bit width of the fractional part of the target mantissa X other than the first part of the bit width, and receive the target first query parameter r1, to calculate the high-bit part $f_u$ of $f$, where a full bit width of X1 is t1 bits, and a full bit width of the target first query parameter r1 is nr1 bits. A relationship between t1, nr1, and N is $t1 + nr1 = \frac{N}{2} + 3$. For example, the floating-point number Z is a DP floating-point number, and a bit width of the fractional part of the target mantissa X of the preprocessed floating-point number Z is N=52 bits. The high-bit calculation unit may calculate the high-bit part $f_u$ of $f$ based on high 29 (namely, $\frac{52}{2} + 3$) bits of the fractional part of the target mantissa X. The high nr1 bits in the high 29 bits of the fractional part of the target mantissa X may be used as the target first query parameter r1, another part is used as X1, and a value of nr1 may be flexibly configured. Optionally, the floating-point number Z is a DP floating-point number, and the full bit width of the high-bit part $f_u$ of $f$ may be 29 bits.

In a possible design, the high-bit calculation unit may obtain or configure a first polynomial coefficient query table. The first polynomial coefficient query table may indicate correspondences between a plurality of first query parameter combinations and a plurality of first fitting parameter combinations. Each first query parameter combination corresponds to a first fitting parameter combination. Each first fitting parameter combination may include the first fitting parameter a1, the second fitting parameter b1, and the third fitting parameter c1. Each first query parameter combination may include a first query parameter and a second query parameter. The target first query parameter r1 and the target second query parameter r2 may form a target first query parameter combination.

The high-bit calculation unit may find, from the first polynomial coefficient query table, the first fitting parameter combination corresponding to the target first query parameter combination, to determine the coefficients, of the first polynomial fitting equation, corresponding to the target first query parameter r1 and the target second query parameter r2.

For example, the floating-point number Z is a DP floating-point number, the target second query parameter may be a least significant bit (a least significant bit) of the exponent EW of the floating-point number W (the normalized floating-point number Z), and the target first query parameter may be high 7 bits of the fractional part of the target mantissa X. In other words, the high 7 bits are high 7 bits in a part of the target mantissa X other than the most significant bit, or an 11th bit to an 18th bit in the fractional part of the target mantissa X. The high-bit calculation unit may use 8-bit data to perform table query. Optionally, the first polynomial coefficient query table may have 256 entries: 256 first query parameter combinations and the first fitting parameter a1, the second fitting parameter b 1, and the third fitting parameter c1 that correspond to each first query combination.

In another possible design, the first polynomial coefficient query table may include a plurality of first fitting parameter combinations corresponding to each first query parameter. One first query parameter may have a corresponding first fitting parameter combination in a case in which the second query parameter is an odd number, and a corresponding first fitting parameter combination in a case in which the second query parameter is an even number. The first polynomial coefficient query table may include a first odd number query subtable and a first even number query subtable. The first odd number query subtable includes a first fitting parameter combination corresponding to a first query parameter when a second query parameter is an odd number. The first even number query subtable includes a first fitting parameter combination corresponding to a first query parameter when a second query parameter is an even number.

The high-bit calculation unit may query, based on the target second query parameter r2 being an even number, the first even number query subtable for the first fitting parameter combination corresponding to the target first query parameter r1. Alternatively, the high-bit calculation unit may query, based on the target second query parameter r2 being an odd number, the first odd number query subtable for the first fitting parameter combination corresponding to the target first query parameter r1. Therefore, the coefficients, of the first polynomial fitting equation, corresponding to the target first query parameter r1 and the target second query parameter r2 are determined.

For example, the floating-point number Z is a DP floating-point number, the target second query parameter may be a least significant bit (a least significant bit) of the exponent EW of the floating-point number W (the normalized floating-point number Z), and the target first query parameter may be high 7 bits of the fractional part of the target mantissa X. In other words, the high 7 bits are high 7 bits in a part of the target mantissa X other than the most significant bit, or an 11th bit to an 18th bit in the fractional part of the target mantissa X. The high-bit calculation unit may use 8-bit data to perform table query. The first polynomial coefficient query table may include a first odd number query subtable and a first even number query subtable. The first odd number query subtable may include 128 entries, and the entries indicate the coefficients, of the first polynomial fitting equation, corresponding to target first query parameters when the exponent of the floating-point number W is an odd number. Similarly, the first even number query subtable may include 128 entries, and the entries indicate the coefficients, of the first polynomial fitting equation, corresponding to target first query parameters when the exponent of the floating-point number W is an even number.

Alternatively, the high-bit calculation unit may query, based on the target second query parameter r2 being an odd number, the first odd number query subtable for a coefficient, of the first polynomial fitting equation, corresponding to the target first query parameter r1. Alternatively, the high-bit calculation unit may query, based on the target second query parameter r2 being an even number, the first even number query subtable for a coefficient, of the first polynomial fitting equation, corresponding to the target first query parameter r1.

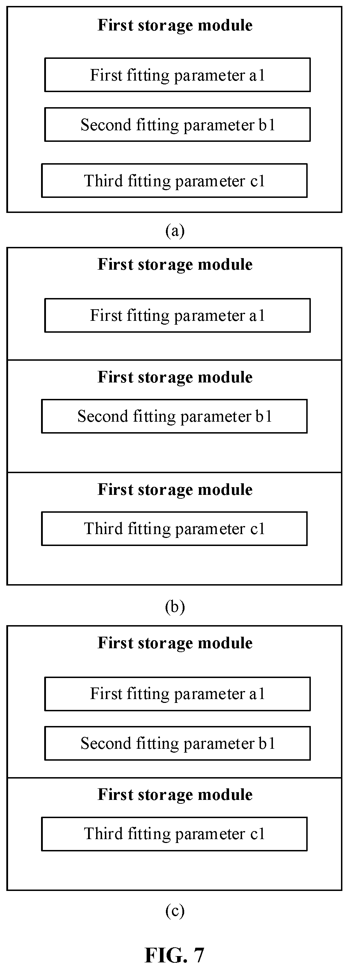

In a possible implementation, in embodiments of this application, in the pre-configured first polynomial coefficient query table, namely, the correspondence between the first fitting parameter a1, the second fitting parameter b1, the third fitting parameter c1, and the first query parameter combinations, the first fitting parameter a1, the second fitting parameter b1, and the third fitting parameter c1 may be stored in a same first storage module, as shown in (a) in FIG. 7. Alternatively, the first fitting parameter a1, the second fitting parameter b1, and the third fitting parameter c1 may be respectively stored in three first storage modules, as shown in (b) in FIG. 7. Alternatively, any two of the first fitting parameter a1, the second fitting parameter b1, and the third fitting parameter c1 are stored in a same first storage module. As shown in (c) in FIG. 7, the first fitting parameter a1 and the second fitting parameter b1 are stored in a same first storage module, and the third fitting parameter c1 is stored in another first storage module. The first polynomial coefficient query table may include the first fitting parameter a1, the second fitting parameter b1, and the third fitting parameter c1 that respectively correspond to first query parameter combinations with a preset quantity.

The low-bit calculation unit may include a first high-bit reciprocal calculation circuit and a low-bit operation circuit. The first high-bit reciprocal calculation circuit and the high-bit calculation unit may run in parallel, so that the low-bit calculation unit and the high-bit calculation unit may run in parallel.

The first high-bit reciprocal calculation circuit may be connected to the preprocessing unit. The first high-bit reciprocal calculation circuit may receive all or the part of the bit width of the target mantissa X output by the preprocessing unit. The first high-bit reciprocal calculation circuit may receive all or the part of the bit width of the exponent EW output by the preprocessing unit.

The first high-bit reciprocal calculation circuit may determine a target third query parameter h1 based on the mantissa M1 of the floating-point number W, and determine a target fourth query parameter h2 based on the exponent EW of the floating-point number W. In embodiments of this application, the target third query parameter is a third part (a third part of the bit width) of the mantissa M1 of the floating-point number W. For example, the target third query parameter h1 may be high nh1 bits (or low nh1 bits) of the fractional part of the mantissa M1 of the floating-point number W, where nh1 is a positive integer, and nh1 is less than or equal to the full bit width of the fractional part of the mantissa M1 of the floating-point number W. The target fourth query parameter h2 is a part of the bit width of the exponent EW of the floating-point number W, and includes a lowest bit width of the exponent EW of the floating-point number W. For example, the target fourth query parameter may be high nh2 bits (or low nh2 bits) of the exponent EW of the floating-point number W, where h2 is a positive integer, and nh2 is less than or equal to all of the bit width of the exponent EW of the floating-point number W. Optionally, the target fourth query parameter h2 may be data of the least significant bit of the exponent EW of the floating-point number W, and the data may reflect that the exponent EW is an odd number or an even number.

The first high-bit reciprocal calculation circuit may determine, based on the target third query parameter h1 and the target fourth query parameter h2, coefficients, of a second polynomial fitting equation, corresponding to the target third query parameter h1 and the target fourth query parameter h2. The coefficients of the second polynomial fitting equation may include a fourth fitting parameter a2, a fifth fitting parameter b2, and a sixth fitting parameter c2.

The first high-bit reciprocal calculation circuit may calculate the reciprocal $\frac{1}{f_u}$ of the high-bit part $f_u$ of f based on the coefficients of the second polynomial fitting equation and all or the part of the bit width of the fractional part of the mantissa of the floating-point number W. For example, the first high-bit reciprocal calculation circuit may calculate the reciprocal $\frac{1}{f_u}$ of the high-bit part $f_u$ of f based on the coefficients of the second polynomial fitting equation and a fourth part (a fourth part of the bit width) of the fractional part of the mantissa of the floating-point number W, where

$$\frac{1}{f_u} = a2 \times (X2)^2 + b2 \times X2 + c2$$

. The first high-bit reciprocal calculation circuit may output the reciprocal $\frac{1}{f_u}$ of the high-bit part $f_u$ of f. X2 is the fourth part (the fourth part of the bit width) of the fractional part of the mantissa of the floating-point number W, and a bit width corresponding to the fourth part of the fractional part of the mantissa of the floating-point number W does not overlap a bit width corresponding to the third part of the fractional part of the mantissa of the floating-point number W. Optionally, X2 is high t2 bits in a bit width other than the third part of the bit width of the fractional part of the mantissa of the floating-point number W, and t2 is a positive integer.

In some application scenarios, the full bit width of the fractional part of the target mantissa X is N bits. The first high-bit reciprocal calculation circuit may receive the target third query parameter h1 and high t2 bits in a bit width of the fractional part of the target mantissa X other than the third part of the bit width, to calculate the reciprocal $\frac{1}{f_u}$ of the high-bit part $f_u$ of $f$. A full bit width of the target third query parameter h1 is nh1 bits, and a full bit width of X2 is t2 bits. A relationship between nh1, t2, and N is $t2 + nh1 = \frac{N}{2} + 3$. For example, the floating-point number Z is a DP floating-point number, and the full bit width of the fractional part of the target mantissa X is N=52 bits. The first high-bit reciprocal calculation circuit may calculate the reciprocal $\frac{1}{f_u}$ of the high-bit part $f_u$ of $f$ based on high $29\ (\frac{52}{2} + 3)\ \text{bits}$ of the fractional part of the target mantissa X. The high nh1 bits in the high 29 bits of the fractional part of the target mantissa X may be used as the target third query parameter h1, another part is used as X2, and a value of nh1 may be flexibly configured. Optionally, the floating-point number Z is a DP floating-point number, and a full bit width of the reciprocal $\frac{1}{f_u}$, output by the first high-bit reciprocal calculation circuit, of the high-bit part $f_u$ of $f$ may be 29 bits.

In a possible design, the first high-bit reciprocal calculation circuit may configure a second polynomial coefficient query table. The second polynomial coefficient query table may indicate correspondences between a plurality of second query parameter combinations and a plurality of second fitting parameter combinations. Each second query parameter combination corresponds to a second fitting parameter combination. Each second fitting parameter combination may include the fourth fitting parameter a2, the fifth fitting parameter b2, and the sixth fitting parameter c2. The first high-bit reciprocal calculation circuit may find, from the second polynomial coefficient query table, the second fitting parameter combination corresponding to the target second query parameter combination. A fitting parameter in the second fitting parameter combination corresponding to the target second query parameter combination is used as a coefficient, of the second polynomial fitting equation, corresponding to the target second query parameter combination.

For example, the floating-point number Z is a DP floating-point number, the fourth query parameter may be a least significant bit (a least significant bit) of the exponent *EW* of the floating-point number W, and the third query parameter may be high 8 bits of the fractional part of the target mantissa X. Alternatively, the fourth query parameter may be low 2 bits of the exponent *EW* of the floating-point number W, and the third query parameter may be high 7 bits of the fractional part of the target mantissa X. It can be learned that the first high-bit reciprocal calculation circuit may use 9-bit data in total, namely, the third query parameter and the fourth query parameter, to perform table query. Optionally, the second polynomial coefficient query table may have $2^9=512$ entries: 512 second query combinations and the fourth fitting parameter a2, the fifth fitting parameter b2, and the sixth fitting parameter c2 that correspond to each second query combination.

In another possible design, the second polynomial coefficient query table may include a plurality of second fitting parameter combinations corresponding to each third query parameter. One third query parameter may have a corresponding second fitting parameter combination in a case in which the fourth query parameter is an odd number, and a corresponding second fitting parameter combination in a case in which the fourth query parameter is an even number. The second polynomial coefficient query table may include a second odd number query subtable and a second even number query subtable. The second odd number query subtable indicates a second fitting parameter combination corresponding to a third query parameter when a fourth query parameter is an odd number. The second even number query subtable includes a second fitting parameter combination corresponding to a third query parameter when a fourth query parameter is an even number.

The first high-bit reciprocal calculation circuit may query, based on the target fourth query parameter h2 being an even number, the second even number query subtable for the second fitting parameter combination corresponding to the target third query parameter h1. Alternatively, the first high-bit reciprocal calculation circuit may query, based on the target fourth query parameter h2 being an odd number, the second odd number query subtable for the second fitting parameter combination corresponding to the target third query parameter h1. Therefore, the first high-bit reciprocal calculation circuit finds, from the second polynomial coefficient query table, the second fitting parameter combination corresponding to a target second query parameter combination, to determine the coefficients, of the first polynomial fitting equation, corresponding to the target third query parameter h1 and the target fourth query parameter h2.

In a possible implementation, in the pre-configured second polynomial coefficient query table, namely, the correspondence between the fourth fitting parameter a2, the fifth fitting parameter b2, the sixth fitting parameter c2, and the second query parameter combinations, the second fitting parameter a2, the fifth fitting parameter b2, and the sixth fitting parameter c2 may be stored in a same second storage module. Alternatively, the second fitting parameter a2, the fifth fitting parameter b2, and the sixth fitting parameter c2 may be respectively stored in three second storage modules. Alternatively, any two of the second fitting parameter a2, the fifth fitting parameter b2, and the sixth fitting parameter c2 are stored in a same second storage module, and the other parameter is stored in another second storage module. The second polynomial coefficient query table may include the fourth fitting parameter a2, the fifth fitting parameter b2, and the sixth fitting parameter c2 that respectively correspond to second parameter combinations with a preset quantity.

The low-bit operation circuit may be connected to the first high-bit reciprocal calculation circuit, the preprocessing unit, and the high-bit calculation unit. The low-bit operation circuit may receive the reciprocal (namely, $\frac{1}{f_u}$ ), output by the first high-bit reciprocal calculation circuit, of the high-bit part $f_u$ of $f$, the target mantissa X output by the preprocessing unit, and the high-bit part $f_{u'}$ of $f$, output by the high-bit calculation unit. The low-bit calculation unit may calculate the low-bit part $f_l$ of $f$ based on a relationship $f_l = \frac{1}{f_u} \times \frac{X - f_u^2}{2}$ between the high-bit part $f_u$ and the low-bit part $f_l$ of $f$. The low-bit operation circuit may output the low-bit part $f_l$ of $f$, so that the low-bit calculation unit outputs the low-bit part $f_l$ of $f$.

The exact rounding unit may receive the high-bit part $f_{u'}$ of $f$, output by the high-bit calculation unit, and the low-bit part $f_{l'}$ of $f$, output by the low-bit calculation unit. When the exact rounding unit may support a plurality of rounding manners, the exact rounding unit may obtain a rounding manner configuration parameter in advance, and calculate the square root of the target mantissa X based on a rounding manner corresponding to the rounding manner configuration parameter. Optionally, the RH manner, the RP manner, and the RZ manner may be rounding manners specified in IEEE 754.

The exact rounding unit may determine a plurality of to-be-selected calculation results based on $f_u$ output by the high-bit calculation unit and $f_l$ output by the low-bit calculation unit. The exact rounding unit may calculate the plurality of to-be-selected results based on the pre-configured rounding manner. Alternatively, the plurality of to-be-selected results are calculated based on the obtained rounding manner configuration parameter. Optionally, the plurality of to-be-selected calculation results may include at least two of the following: the first to-be-selected result f1, the second to-be-selected result f2, and the third to-be-selected result f3.

For example, the exact rounding unit may calculate the first to-be-selected result f1 and the second to-be-selected result f2 based on the RP manner. The exact rounding unit may calculate the first to-be-selected result f1 and the third to-be-selected result f3 based on an RZ manner. The exact rounding unit may calculate the first to-be-selected result f1, the second to-be-selected result f2, and the third to-be-selected result f3 based on the RH manner.

A process in which the exact rounding unit calculates the first to-be-selected result f1 is described. The first to-be-selected result f1 is obtained based on $f_u$ output by the high-bit calculation unit and $f_l$ output by the low-bit calculation unit, and may be denoted as $f1 = f_u + f_l$ . The following describes the process of determining f1, that is, describes a meaning of performing summation $(f_u + f_l)$ on $f_u$ and $f_l$.

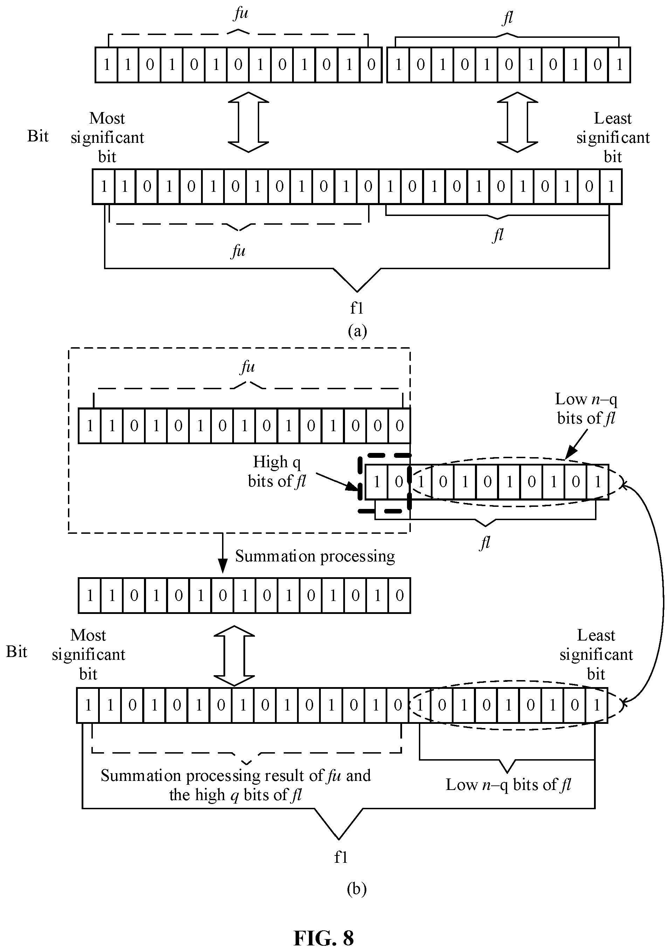

In a possible case, the high m bits of the square root $f$ of the target mantissa X does not overlap the low n bits of the square root $f$ of the target mantissa X, and a sum of m and n is equal to the full bit width of the calculation result of the square root $f$ of the target mantissa X. After receiving $f_u$ output by the high-bit calculation unit and $f_l$ output by the low-bit calculation unit, the exact rounding unit performs summation on $f_u$ and $f_l$, to obtain f1. For example, as shown in (a) in FIG. 8, the high m bits of f1 obtained by the exact rounding unit are the same as $f_u$, and the low n bits of f1 are the same as $f_l$.

In another possible case, overlapping bits exist between the high m bits of the square root $f$ of the target mantissa X and the low n bits of the square root $f$ of the target mantissa X. For ease of description, it is assumed that lowest q bits in the high m bits of the square root $f$ of the target mantissa X overlap highest q bits in the low n bits of the square root $f$ of the target mantissa X. For example, dashed-line ellipse boxes in (b) in FIG. 8 show the overlapping bits between the high m bits and the low n bits, where lowest 2 bits in the high m bits overlap highest 2 bits in the low n bits. In this case, after receiving $f_u$ output by the high-bit calculation unit and $f_l$ output by the low-bit calculation unit, the exact rounding unit performs summation on $f_u$ and $f_l$. For example, low n-q bits of the first to-be-selected result f1 obtained by the exact rounding unit are the same as low n-q bits of $f_l$. A result obtained through summation performed on $f_u$ and high q bits of $f_l$ is high m+q bits of the first to-be-selected result f1 obtained by the exact rounding unit.

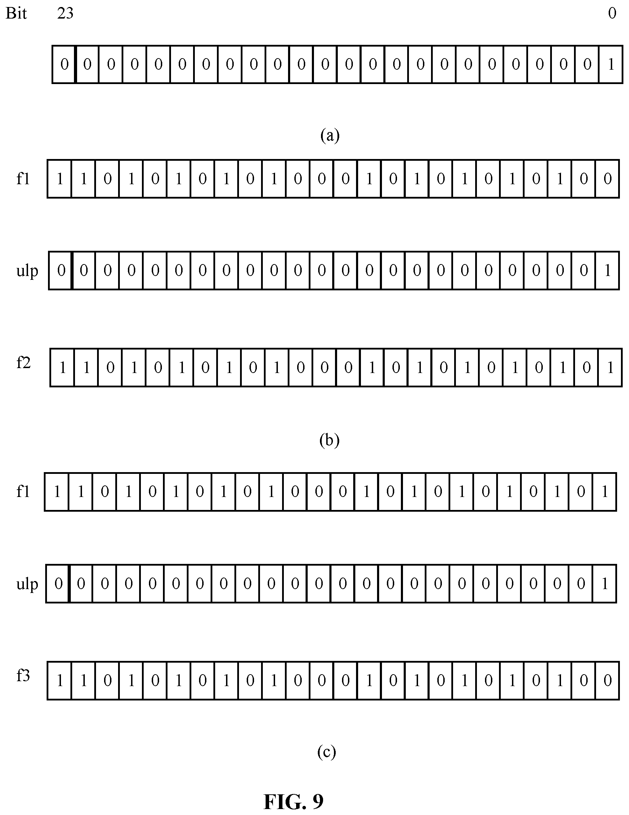

The exact rounding unit may determine (or obtain) the second to-be-selected result f2 based on the first to-be-selected result f1 and *ulp,* where f2=f1 + *ulp. ulp* indicates a minimum valid digit that can be expressed in the full bit width of the square root $f$ of the target mantissa X. As shown in (a) in FIG. 9, it is assumed that the full bit width of the square root $f$ of the target mantissa X is 24 bits, the least significant bit is a $0^{th}$ bit, and the most significant bit is a $23^{rd}$ bit. In this case, digits represented by *ulp* are as follows: the $0^{th}$ bit is 1, and the other bits are all 0s. When the full bit width of the fractional part of the target mantissa X is Nt, *ulp* is $Q^{-Nt}$. For example, when an existing computer performs floating-point number calculation, a base Q of a floating-point number is usually 2. The following describes the process of determining f2, that is, describes a meaning of f2=f1 + *ulp*. As shown in (b) in FIG. 9, the exact rounding unit may perform summation on the first to-be-selected result f1 and *ulp,* to obtain the second to-be-selected result f2. The exact rounding unit may determine (or obtain) the third to-be-selected result f3 based on the first to-be-selected result f1 and *ulp,* where f3=f1 - *ulp*. As shown in (c) in FIG. 9, the exact rounding unit may perform subtraction on the first to-be-selected result f1 and *ulp,* to obtain the third to-be-selected result f3.

For example, the exact rounding unit may calculate a first rounding determining parameter ie based on $f_u$ and $f_l$. The first rounding determining parameter ie indicates a deviation between $(f_u + f_l)^2$ and X. Specifically, ie = $(f_u + f_l)^2$ - X, that is, ie = $f_u^2 + f_l^2 + 2 \times f_u \times f_l$ - X. X is the target mantissa. Optionally, when the floating-point number Z is a DP floating-point number, a value of t3 may be 3. Optionally, the exact rounding unit may calculate the first rounding determining parameter (ie) based on a low-bit part of ($f_u^2 + f_l^2 + 2 \times f_u \times f_l$) and the low-bit part of the target mantissa (X), to reduce circuit overheads, and reduce an area occupied by a circuit.

When performing the RP manner, the exact rounding unit may output the first to-be-selected result f1 based on the first rounding determining parameter ie being greater than or equal to 0, that is, a calculation result of $\sqrt{X}$ is the first to-be-selected result f1. Alternatively, the second to-be-selected result f2 is output based on the first rounding determining parameter ie being less than 0, that is, a calculation result of $\sqrt{X}$ is f2.

When performing the RZ manner, the exact rounding unit may output the first to-be-selected result f1 based on the first rounding determining parameter ie being less than or equal to 0, that is, the calculation result of $\sqrt{X}$ is the first to-be-selected result f1. Alternatively, the third to-be-selected result f3 is output based on the first rounding determining parameter ie being greater than 0, that is, the calculation result of $\sqrt{X}$ is the third to-be-selected result f3.

For another example, the exact rounding unit may determine a second rounding determining parameter ien based on the first to-be-selected result f1 and the first rounding determining parameter ie. In such a design, the circuit for calculating the first round determining parameter ie may be reused, to reduce circuit overheads and optimize a chip area occupied by the circuit. A deviation between a real number fr of $\sqrt{X}$ and f1 is denoted as a first distance (f1-fr), and a deviation between f3 and the real result fr of $\sqrt{X}$ is denoted as a second distance (fr-f3). The second rounding determining parameter ien may indicate a deviation between a square of the first distance and a square of the second distance.

The exact rounding unit may align a most significant bit of valid digits of the first to-be-selected result f1 with a most significant bit of valid digits of the first rounding determining parameter ie. This may be implemented by multiplying ulp and the first to-be-selected result f1. Then, data obtained after the most significant bit of the valid digits of the first to-be-selected result f1 is aligned with the most significant bit of the valid digits of the first rounding determining parameter ie may be expressed by

ulp $\times$ f1. The exact rounding unit may subtract the data ulp $\times$ f1 from the first rounding determining parameter ie, to obtain the second rounding determining parameter ien. It can be seen that a relationship between the second rounding determining parameter ien and the first rounding determining parameter ie may be represented by ien = ie - ulp $\times$ f1.

The exact rounding unit may determine a third rounding determining parameter iep based on the first to-be-selected result f1 and the first rounding determining parameter ie. A deviation between the real number fr of $\sqrt{X}$ and f2 is denoted as a third distance (f2-fr), and a deviation between f1 and the real number fr of $\sqrt{X}$ is denoted as a fourth distance (fr-f1). The third rounding determining parameter iep may indicate a deviation between a square of the third distance and a square of the fourth distance. The exact rounding unit may perform summation on the data ulp $\times$ f1 and the first rounding determining parameter ie, to obtain the third rounding determining parameter iep. In other words, a relationship between the third rounding determining parameter iep and the first rounding determining parameter ie may be represented by iep = ie + ulp $\times$ f1.

When performing the RH manner, the exact rounding unit may output the second to-be-selected result f2 based on the third rounding determining parameter iep being less than 0, that is, the calculation result of $\sqrt{X}$ is the second to-be-selected result f2. The exact rounding unit may output the third to-be-selected result based on the second rounding determining parameter ien being greater than or equal to 0, that is, the calculation result of $\sqrt{X}$ is f3. The exact rounding unit may output the first to-be-selected result f1 based on the third rounding determining parameter iep being greater than or equal to 0 or the second rounding determining parameter ien being less than 0, that is, the calculation result of $\sqrt{X}$ is the first to-be-selected result f1.

In embodiments of this application, the floating-point number calculation module may output the calculation result $\sqrt{Z}$ of the square root of the floating-point number Z. In the calculation result $\sqrt{Z}$ of the square root of the floating-point number Z, a sign bit is the same as a sign bit of the floating-point number Z, a mantissa is the fractional part of the calculation result of $\sqrt{X}$ output by the exact rounding unit, and an exponent bias of the calculation result $\sqrt{Z}$ is the exponent offset output by the exponent processing unit. If the exponent EW of the floating-point number W (a floating-point number obtained by normalizing the floating-point number Z) is an even number, the exponent processing unit may output $\frac{1}{2}EW+$exponent offset . If the exponent $EW$ of the floating-point number W (a floating-point number obtained by normalizing the floating-point number $Z$) is an odd number, the exponent processing unit may output

$$\frac{1}{2}(EW-1)+\text{exponent offset}$$ .

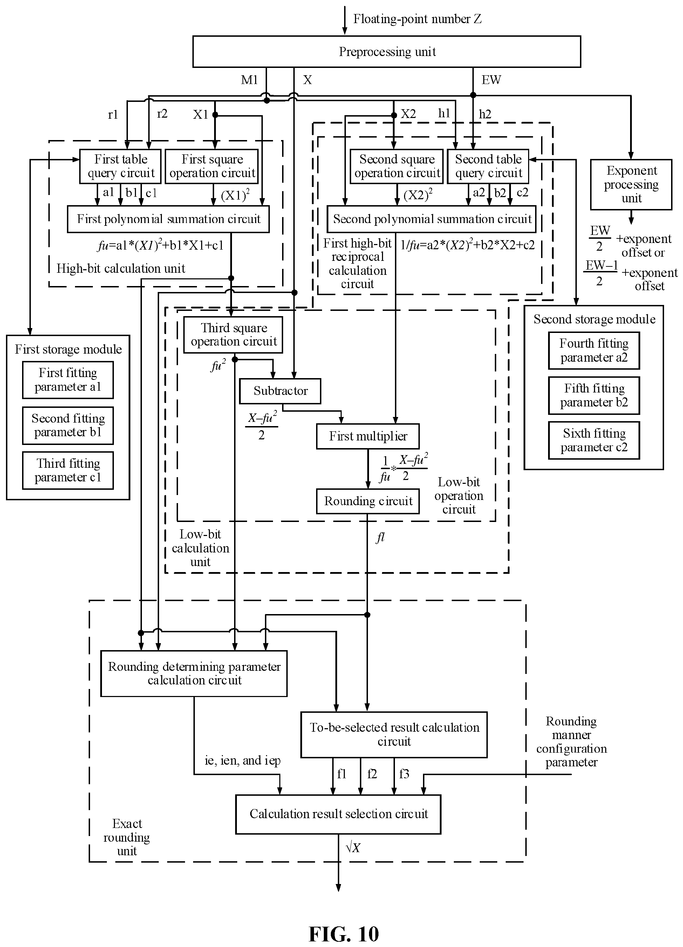

FIG. 10 is an example of a diagram of specific structures of some units in the floating-point number calculation module. In the floating-point number calculation module provided in embodiments of this application, the high-bit calculation unit may include a first table query circuit, a first square operation circuit, and a first polynomial summation circuit.

The first table query circuit may receive the target first query parameter r1 and the target second query parameter r2 that are output by the preprocessing unit, and output the first fitting parameter a1, the second fitting parameter b1, and the third fitting parameter c1 that correspond to the target first query parameter r1 and the target second query parameter r2. The first table query circuit may be implemented in a plurality of manners.

For example, as shown in FIG. 10, the first table query circuit may be connected to a first storage module that stores a plurality of first fitting parameters a1, a plurality of second fitting parameters b1, and a plurality of third fitting parameters c1. The first table query circuit may be connected to the preprocessing unit, and may receive the target first query parameter r1 and the target second query parameter r2 that are output by the preprocessing unit. The target first query parameter may be a first part (a first part of the bit width) of the fractional part of the mantissa M1 of the floating-point number W. The target second query parameter is a part of a bit width of the exponent $EW$ of the floating-point number W, and includes a lowest bit width of the exponent $EW$ of the floating-point number W.

Optionally, the first polynomial coefficient query table may include a first odd number query subtable and a first even number query subtable. The first odd number query subtable indicates a first fitting parameter combination corresponding to a first query parameter when a second query parameter is an odd number. The first even number query subtable includes a first fitting parameter combination corresponding to a first query parameter when a second query parameter is an even number. The first table query circuit may query, based on the target second query parameter r2 being an even number, the first even number query subtable for the first fitting parameter combination corresponding to the target first query parameter r1. Alternatively, the first table query circuit may query, based on the target second query parameter r2 being an odd number, the first odd number query subtable for the first fitting parameter combination corresponding to the target first query parameter r1. Therefore, the first table query circuit finds, from the first polynomial coefficient query table, the first fitting parameter combination corresponding to a target first query parameter combination, to determine the coefficients, of the first polynomial fitting equation, corresponding to the target first query parameter r1 and the target second query parameter r2.

The first square operation circuit may be connected to the preprocessing unit, and may receive high t1 bits (which are also a part of the bit width of the target mantissa X) in a bit width other than the first part of the bit width in the fractional part of the mantissa M1 of the floating-point number W output by the preprocessing unit. The first square operation circuit may calculate a square $(X1)^2$ of the second part X1 of the mantissa M1 of the floating-point number W, and output $X1^2$.

The first polynomial summation circuit may be connected to the first table query circuit, the preprocessing unit, and the first square operation circuit. The first polynomial summation circuit may receive the coefficients, of the first polynomial fitting equation, corresponding to the target first query parameter r1 and the target second query parameter r2 that are output by the first table query circuit. The first polynomial summation circuit may receive the second part X1 of the mantissa M1 of the floating-point number W output by the preprocessing unit. The first polynomial summation circuit may receive $(X1)^2$ output by the first square operation circuit.

The first polynomial summation circuit may calculate the high-bit part $f_u$ of $f$ based on the received first fitting parameter a1, second fitting parameter b1, and third fitting parameter c1 that correspond to the target first query parameter combination, and the square $(X1)^2$ of the second part X1 of the target mantissa X, and output the high-bit part, where $f_u = a1 \times (X1)^2 + b1 \times X1 + c1$. Optionally, the first polynomial summation circuit may include a multiplier and an adder, or the first polynomial summation circuit may include a multiply-accumulate unit.

In the floating-point number calculation module provided in embodiments of this application, the low-bit calculation unit may include a first high-bit reciprocal calculation circuit and a low-bit operation circuit. The first high-bit reciprocal calculation circuit may include a second table query circuit, a second square operation circuit, and a second polynomial summation circuit.

The second table query circuit may receive the target third query parameter h1 and the target fourth query parameter h2 that are output by the preprocessing unit, and output the fourth fitting parameter a2, the fifth fitting parameter b2, and the sixth fitting parameter c2 that correspond to the target third query parameter h1 and the target fourth query parameter h2. The second table query circuit may be implemented in a plurality of manners.

For example, as shown in FIG. 10, the second table query circuit may be connected to a second storage module that stores a plurality of fourth fitting parameters a2, a plurality of fifth fitting parameters b2, and a plurality of sixth fitting parameters c2. The second table query circuit may be connected to the preprocessing unit, and may receive the target third query parameter h1 and the target fourth query parameter h2 that are output by the preprocessing unit. The target third query parameter is a third part (a third part of the bit width) of the mantissa M1 of the floating-point number W. The target fourth query parameter h2 is a part of the bit width of the exponent *EW* of the floating-point number W, and includes a lowest bit width of the exponent *EW* of the floating-point number W.

Optionally, the second polynomial coefficient query table may include a second odd number query subtable and a second even number query subtable. The second odd number query subtable indicates a second fitting parameter combination corresponding to a third query parameter when a fourth query parameter is an odd number. The second even number query subtable includes a second fitting parameter combination corresponding to a third query parameter when a fourth query parameter is an even number.

The second table query circuit may query, based on the target fourth query parameter h2 being an even number, the second even number query subtable for the second fitting parameter combination corresponding to the target third query parameter h1. Alternatively, the second table query circuit may query, based on the target fourth query parameter h2 being an odd number, the second odd number query subtable for the second fitting parameter combination corresponding to the target third query parameter h1. Therefore, the second table query circuit finds, from the second polynomial coefficient query table, the second fitting parameter combination corresponding to a target second query parameter combination, to determine the coefficients, of the second polynomial fitting equation, corresponding to the target third query parameter h1 and the target fourth query parameter h2.

The second square operation circuit may be connected to the preprocessing unit, and may receive the fourth part X2 of the mantissa M1 of the floating-point number W output by the preprocessing unit. Optionally, X2 is high t2 bits in a bit width other than the third part of the bit width of the fractional part of the mantissa M1 of the floating-point number W, and t2 is a positive integer. The second square operation circuit may calculate a square $(X2)^2$ of the fourth part X2 of the mantissa M1 of the floating-point number W, and output $(X2)^2$.

The second polynomial summation circuit may be connected to the second table query circuit, the preprocessing unit, and the second square operation circuit. The second polynomial summation circuit may receive the coefficients, of the second polynomial fitting equation, corresponding to the target second query parameter combination output by the second table query circuit. The second polynomial summation circuit may receive the fourth part X2, output by the preprocessing unit, of the mantissa M1 of the floating-point number W.

The second polynomial summation circuit may receive $(X2)^2$ output by the second square operation circuit. The second polynomial summation circuit may calculate the reciprocal $\frac{1}{f_u}$ of the high-bit part $f_u$ of $f$ based on the received fourth fitting parameter a2, fifth fitting parameter b2, and sixth fitting parameter c2 that correspond to the target second query parameter combination, the fourth part X2 of the target mantissa X, and a square $(X2)^2$ of the fourth part X2 of the target mantissa X, where $\frac{1}{f_u} = a2 \times (X2)^2 + b2 \times X2 + c2$. Optionally, the second polynomial summation circuit may include a multiplier and an adder. Alternatively, the second polynomial summation circuit may include a multiply-accumulate unit.

In the floating-point number calculation module provided in embodiments of this application, the low-bit operation circuit in the low-bit calculation unit may include a third square operation circuit, a subtractor, a first multiplier, and a rounding circuit.

The third square operation circuit may be connected to the first polynomial summation circuit. The third square operation circuit may receive the high-bit part $f_u$, of $f$, output by the first polynomial summation circuit. The third square operation circuit may calculate a square $f_u^2$ of the high-bit part $f_u$ of $f$, and output the square $f_u^2$ of the high-bit part $f_u$ of $f$.

The subtractor may be connected to the third square operation circuit and the preprocessing unit. The subtractor may receive the square $f_u^2$, output by the third square operation circuit, of the high-bit part $f_u$ of $f$. The subtractor may receive the target mantissa X output by the preprocessing unit. The subtractor may calculate $\frac{X - f_u^2}{2}$ based on a difference $X - f_u^2$ between the target mantissa X and the square $f_u^2$ of the high-bit part $f_u$ of $f$,

and output $\frac{X - f_u^2}{2}$. In some possible application scenarios, the low-bit operation circuit may use an adder to implement a function of the subtractor. This is not limited in this application.

The first multiplier may be connected to the second polynomial summation circuit and the subtractor.

The first multiplier may receive $\frac{X - f_u^2}{2}$ output by the subtractor. The first multiplier may receive the reciprocal $\frac{1}{f_u}$, output by the second polynomial summation circuit, of the high-bit part $f_u$ of $f$. The first multiplier may calculate $\frac{1}{f_u} \times \frac{X - f_u^2}{2}$.

The rounding circuit may be connected to the first multiplier. The rounding circuit may receive $\frac{1}{f_u} \times \frac{X - f_u^2}{2}$ output by the first multiplier, and round off $\frac{1}{f_u} \times \frac{X - f_u^2}{2}$ output by the first multiplier, to obtain the low-

bit part $f_l$ of $f$. For example, the rounding circuit may perform summation on the high n+1 bits of ( $\frac{1}{f_u} \times \frac{X - f_u^2}{2}$ ) output by the first multiplier and "1", and reserve high n bits of a summation result as the low-bit part $f_l$ of $f$.

In the floating-point number calculation module provided in embodiments of this application, the exact rounding unit may include a rounding determining parameter calculation circuit, a to-be-selected result calculation circuit, and a calculation result selection circuit.

The rounding determining parameter calculation circuit may be connected to the first polynomial summation circuit, the rounding circuit, and the third square operation circuit. The rounding determining parameter calculation circuit may receive the high-bit part $f_u$, of $f$, output by the first polynomial summation circuit. The rounding determining parameter calculation circuit may receive the low-bit part $f_l$, of $f$, output by the rounding circuit. The rounding determining parameter calculation circuit may receive the square $f_u^2$, output by the third square operation circuit, of the high-bit part $f_u$ of $f$. The rounding determining parameter calculation circuit may have a capability of calculating a rounding determining parameter corresponding to at least one rounding manner.

Optionally, the rounding determining parameter calculation circuit may calculate the first rounding determining parameter ie based on the low-bit part $f_l$ of $f$, the high-bit part $f_u$ of $f$, the square $f_u^2$ of the high-bit part $f_u$ of $f$, and the target mantissa X. Alternatively, the rounding determining parameter calculation circuit may calculate the second rounding determining parameter ien and the third rounding determining parameter iep based on the low-bit part $f_l$ of $f$, the high-bit part $f_u$ of $f$, and the square $f_u^2$ of the high-bit part $f_u$ of $f$.

In embodiments of this application, the rounding determining parameter calculation circuit outputs a sign bit of the first rounding determining parameter ie, to indicate positive or negativeness of the first rounding determining parameter ie. In other words, the sign bit of the first rounding determining parameter ie may indicate that ie is a positive number (ie is greater than 0), or ie is a negative number (ie is less than 0), or ie is equal to 0. Similarly, the rounding determining parameter calculating circuit may output a sign bit of the second rounding determining parameter ien, to indicate positive or negativeness of the second rounding determining parameter ien. The rounding determining parameter calculation circuit may output a sign bit of the third rounding determining parameter iep, to indicate positive or negativeness of the third rounding determining parameter iep.

The to-be-selected result calculation circuit may be connected to the rounding circuit and the first polynomial summation circuit. The to-be-selected result calculation circuit may receive the low-bit part $f_l$, of $f$, output by the rounding circuit. The to-be-selected result calculation circuit may receive the high-bit part $f_u$ of $f$. The

to-be-selected result calculation circuit may calculate the plurality of to-be-selected results based on the low-bit part $f_l$ of $f$ and the high-bit part $f_u$ of $f$, and output the plurality of to-be-selected results.

Optionally, the plurality of to-be-selected calculation results includes the first to-be-selected result f1 and the second to-be-selected result f2. A relationship between the first to-be-selected result f1, the low-bit part $f_l$ of $f$ and the high-bit part $f_u$ of $f$ is f1=$f_u$ + $f_l$. A relationship between the second to-be-selected result f2, the low-bit part $f_l$ of $f$ and the high-bit part $f_u$ of $f$ is f2=f1 + $ulp$, where $ulp$ is a unit of least precision. Alternatively, the plurality of to-be-selected calculation results includes the first to-be-selected result f1 and the third to-be-selected result f3. A relationship between the third to-be-selected result f3, the low-bit part $f_l$ of $f$ and the high-bit part $f_u$ of $f$ is f3=f1 - $ulp$. Alternatively, the plurality of to-be-selected results include the first to-be-selected result f1, the second to-be-selected result f2, and the third to-be-selected result f3.

In some scenarios, when the exact rounding unit may support a plurality of rounding manners, the to-be-selected result calculation circuit may output the first to-be-selected result f1, the second to-be-selected result f2, and the third to-be-selected result f3.

The calculation result selection circuit may be connected to the rounding determining parameter calculation circuit and the to-be-selected result calculation circuit. The calculation result selection circuit may receive the sign bit, of the rounding determining parameter, output by the rounding determining parameter calculation circuit. The calculation result selection circuit may receive the plurality of to-be-selected results output by the to-be-selected result calculation circuit.

In a possible design, when the exact rounding unit may support one rounding manner, the calculation result selection circuit may select one to-be-selected result from the plurality of received to-be-selected results based on the pre-configured rounding manner and the received rounding determining parameter, use the selected result as the calculation result of $\sqrt{X}$ , and output the calculation result. The pre-configured rounding manner may be any one of the RH manner, the RP manner, and the RZ manner.

In another possible design, when the exact rounding unit may support a plurality of rounding manners, the calculation result selection circuit may receive a rounding manner configuration parameter, select one to-be-selected result from the plurality of to-be-selected results based on a rounding manner corresponding to the rounding manner configuration parameter and a rounding determining parameter corresponding to the rounding manner, use the selected result as the square root of the target mantissa X, and output the square root. For ease of description, in embodiments of this application, a rounding manner indicated by the first rounding manner configuration parameter is the RP manner. A rounding manner indicated by the second rounding manner configuration parameter is the RZ manner. A rounding manner indicated by the third rounding manner configuration parameter is the RH manner.

For example, the rounding manner configuration parameter received by the calculation result selection circuit is the first rounding manner configuration parameter, and the calculation result selection circuit may output the first to-be-selected result f1 based on the first rounding determining parameter ie being greater than or equal to 0. The calculation result selection circuit may output the second to-be-selected result f2 based on the first rounding determining parameter ie being less than 0.

For another example, the rounding manner configuration parameter received by the calculation result selection circuit is the second rounding manner configuration parameter, and the calculation result selection circuit may output the first to-be-selected result f1 based on the first rounding determining parameter ie being less than or equal to 0. The calculation result selection circuit may output the second to-be-selected result f2 based on the first rounding determining parameter ie being greater than 0.

For another example, the rounding manner configuration parameter received by the calculation result selection circuit is the third rounding manner configuration parameter, and the calculation result selection circuit may output the second to-be-selected result f2 based on the third rounding determining parameter iep being less than 0. The calculation result selection circuit may output the third to-be-selected result f3 based on the second rounding determining parameter ien being greater than or equal to 0. The calculation result selection circuit may output the first to-be-selected result f1 based on the third rounding determining parameter iep being greater than or equal to 0 or the second rounding determining parameter ien being less than 0.

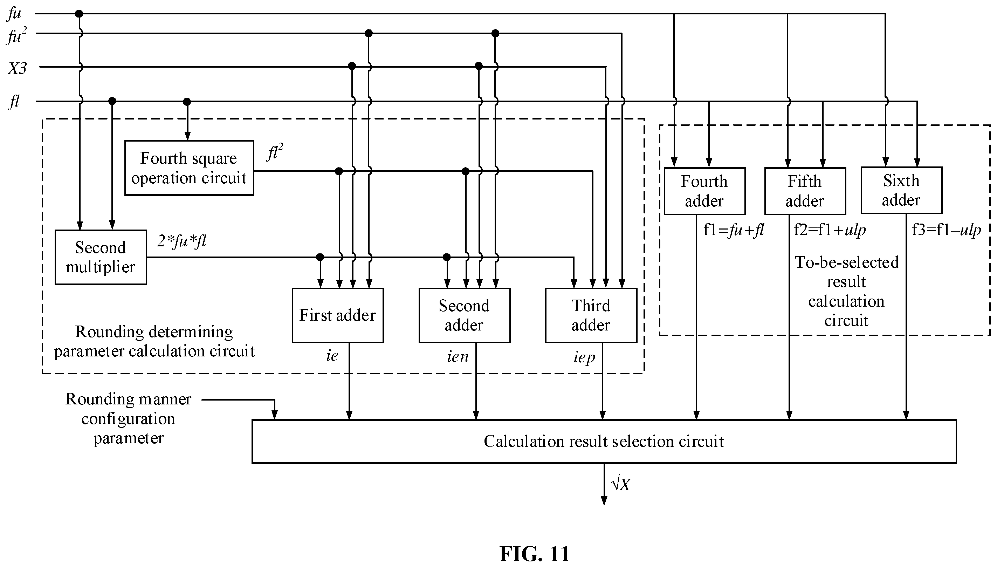

FIG. 11 is an example of a diagram of a specific structure of an exact rounding unit. In this embodiment of this application, in the exact rounding unit, the rounding determining parameter calculation circuit may include a second multiplier, a first adder, a second adder, a third adder, and a fourth square operation circuit.

The second multiplier may be connected to the first polynomial summation circuit and the rounding circuit. The second multiplier may receive the high-bit part $f_u$, of $f$, output by the first polynomial summation circuit. The second multiplier may receive the low-bit part $f_l$, of $f$, output by the rounding circuit. The second multiplier may perform a multiplication operation based on the received high-bit part $f_u$ of $f$ and low-bit part $f_l$ of $f$, to obtain a first intermediate parameter k1 through calculation, where the first intermediate parameter is $k1 = 2 \times f_u \times f_l$; and output the first intermediate parameter.

The fourth square operation circuit may be connected to the rounding circuit. The fourth square operation circuit may receive the low-bit part $f_f$, of $f$, output by the rounding circuit. The fourth square operation circuit may calculate a square of the received low-bit part $f_l$ of $f$, to obtain the square $f_l^2$ of the low-bit part $f_l$ of $f$, and output the square.

The first adder may be connected to the preprocessing unit, the second multiplier, the third square operation circuit, and the fourth square operation circuit. The first adder may receive the high t3 bits X3 of the mantissa of the floating-point number Z output by the preprocessing unit. The first adder may receive the first intermediate parameter k1 output by the second multiplier. The first adder may receive the square $f_u^2$, output by the third square operation circuit, of the high-bit part $f_u$ of $f$. The first adder may receive the square $f_l^2$, output by the fourth square operation circuit, of the low-bit part $f_l$ of $f$.

The first adder may calculate the first rounding determining parameter ie based on the received square $f_l^2$ of the low-bit part $f_l$ of $f$, first intermediate parameter k1 ($k1 = 2 \times f_u \times f_l$), square $f_u^2$ of the high-bit part $f_u$ of $f$, and target mantissa X, where, ie = $(f_u + f_l)^2$ - X, that is, ie = $f_u^2$ + $f_l^2$ + $2 \times f_u \times f_l$ - X. The first adder may output the sign bit of the first rounding determining parameter ie.

The second adder may be connected to the preprocessing unit, the second multiplier, the third square operation circuit, and the fourth square operation circuit. The second adder may receive the high t3 bits X3 of the mantissa of the floating-point number Z output by the preprocessing unit. The first adder may receive the first intermediate parameter k1 output by the second multiplier. The second adder may receive the square $f_u^2$, output by the third square operation circuit, of the high-bit part $f_u$ of $f$. The second adder may receive the square $f_l^2$, output by the fourth square operation circuit, of the low-bit part $f_l$ of $f$.

The second adder may calculate the second rounding determining parameter ien based on the received square $f_l^2$ of the low-bit part $f_l$ of $f$, first intermediate parameter k1 ($k1 = 2 \times f_u \times f_l$), square $f_u^2$ of the high-bit $f_u$ part of $f$, and high t3 bits X3 of the mantissa of the floating-point number Z, where ien = ie - $ulp \times$ f1. The second adder may output the sign bit of the second rounding determining parameter ien.

The third adder may be connected to the preprocessing unit, the second multiplier, the third square operation circuit, and the fourth square operation circuit. The third adder may receive the high t3 bits X3 of the mantissa of the floating-point number Z output by the preprocessing unit. The third adder may receive the first intermediate parameter k1 output by the second multiplier. The third adder may receive the square $f_u^2$, output by the third square operation circuit, of the high-bit part $f_u$ of $f$. The third adder may receive the square $f_l^2$, output by the fourth square operation circuit, of the low-bit part $f_l$ of $f$.

The third adder may calculate the third rounding determining parameter iep based on the received square $f_l^2$ of the low-bit part $f_l$ of $f$, first intermediate parameter k1 ($k1 = 2 \times f_u \times f_l$), square $f_u^2$ of the high-bit part $f_u$ of $f$, and high t3 bits X3 of the mantissa of the floating-point number Z, where iep = ie + *ulp* × f1. The third adder may output the sign bit of the third rounding determining parameter iep.

In this embodiment of this application, in the exact rounding unit, the to-be-selected result calculation circuit may include a fourth adder, a fifth adder, and a sixth adder. The to-be-selected result calculation circuit may be implemented in a plurality of manners.

In a possible design, the fourth adder may be connected to the first polynomial summation circuit and the rounding circuit. As shown in FIG. 11, the fourth adder may receive the high-bit part $f_u$, of *f*, output by the first polynomial summation circuit. The fourth adder may receive the low-bit part $f_l$, of *f*, output by the rounding circuit. The fourth adder may perform a summation operation based on the received high-bit part $f_u$ of *f* and low-bit part $f_l$ of *f*, to obtain the first to-be-selected result f1 through calculation, where f1=$f_u$ + $f_l$; and output the first to-be-selected result f1.

The fifth adder may be connected to the first polynomial summation circuit and the rounding circuit. The fifth adder may receive the high-bit part $f_u$, of *f*, output by the first polynomial summation circuit. The fifth adder may receive the low-bit part $f_l$, of *f*, output by the rounding circuit. The fifth adder may calculate the second to-be-selected result f2 based on the received high-bit part $f_u$ of *f*, low-bit part $f_l$ of *f*, and *ulp*, where f2=f1 + *ulp*, and f1=$f_u$ + $f_l$; and output the second to-be-selected result f2.

The sixth adder may be connected to the first polynomial summation circuit and the rounding circuit. The sixth adder may receive the high-bit part $f_u$, of *f*, output by the first polynomial summation circuit. The sixth adder may receive the low-bit part $f_l$, of *f*, output by the rounding circuit. The sixth adder may calculate the third to-be-selected result f3 based on the received high-bit part $f_u$ of *f*, low-bit part $f_l$ of *f*, and *ulp*, where f3=f1 - *ulp*; and output the third to-be-selected result f3.

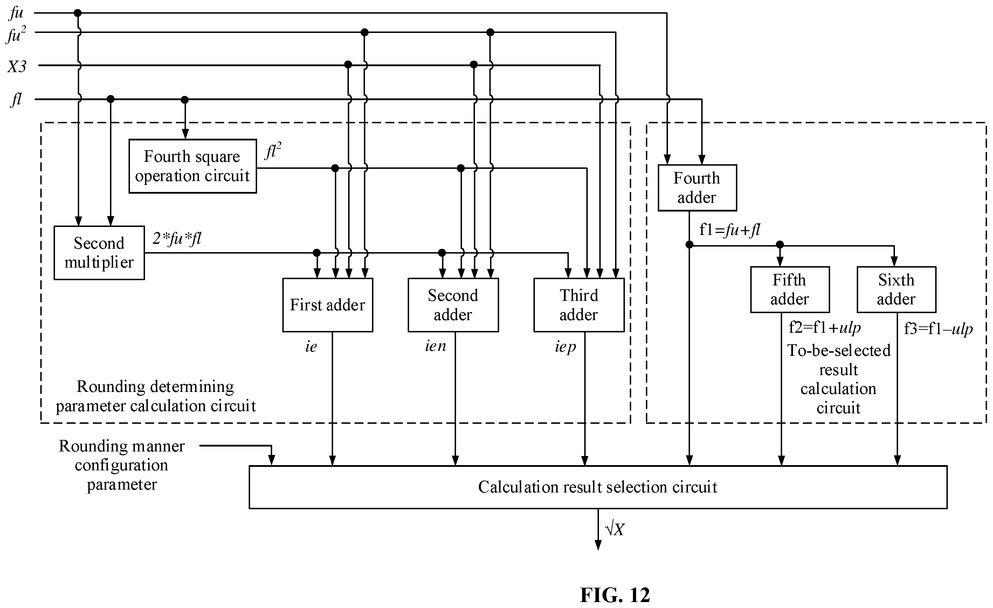

In another possible design, as shown in FIG. 12, the fourth adder may be connected to the first polynomial summation circuit and the rounding circuit. The fourth adder may receive the high-bit part $f_u$, of *f*, output by the first polynomial summation circuit. The fourth adder may receive the low-bit part $f_l$, of *f*, output by the rounding circuit. The fourth adder may perform a summation operation based on the received high-bit part $f_u$ of *f* and low-bit part $f_l$ of *f*, to obtain the first to-be-selected result f1 through calculation, where f1=$f_u$ + $f_l$; and output the first to-be-selected result f1. For similarities between the exact rounding unit shown in FIG. 12 and the exact rounding unit shown in FIG. 11, refer to related descriptions of the exact rounding unit output in FIG. 11. Details are not described herein again.

The fifth adder may be connected to the first polynomial summation circuit and the rounding circuit. The fifth adder may receive the high-bit part $f_u$, of *f*, output by the first polynomial summation circuit. The fifth adder may receive the low-bit part $f_l$, of *f*, output by the rounding circuit. The fifth adder may calculate the second to-be-selected result f2 based on the received high-bit part $f_u$ of *f*, low-bit part $f_l$ of *f*, and *ulp*, where f2=f1 + *ulp*; and output the second to-be-selected result f2.

The sixth adder may be connected to the fourth adder. The sixth adder may receive the first to-be-selected result f1 output by the fourth adder. The sixth adder may perform a subtraction operation based on the received first to-be-selected result f1 and *ulp*, to obtain the third to-be-selected result f3 through calculation, where f3=f1 - *ulp*; and output the third to-be-selected result f3.

Based on any one of the foregoing to-be-selected result calculation circuits, in embodiments of this application, the calculation result selection circuit in the exact rounding unit may be connected to the first adder, the second adder, the third adder, the fourth adder, the fifth adder, and the sixth adder. The calculation result selection circuit may receive the sign bit of the first input determining parameter ie output by the first adder. The calculation result selection circuit may receive the sign bit of the second rounding determining parameter ien output by the second adder. The calculation result selection circuit may receive the sign bit of the third rounding determining parameter iep output by the third adder. The calculation result selection circuit may receive the first to-be-selected result f1 output by the fourth adder. The calculation result selection circuit may receive the second to-be-selected result f2 output by the fifth adder. The calculation result selection circuit may receive the third to-be-selected result f3 output by the sixth adder.

Optionally, the calculation result selection circuit may receive the rounding manner configuration parameter. For a process in which the calculation result selection circuit outputs the calculation result of the square root of the target mantissa X, refer to related descriptions in the foregoing embodiments. Details are not described herein again.

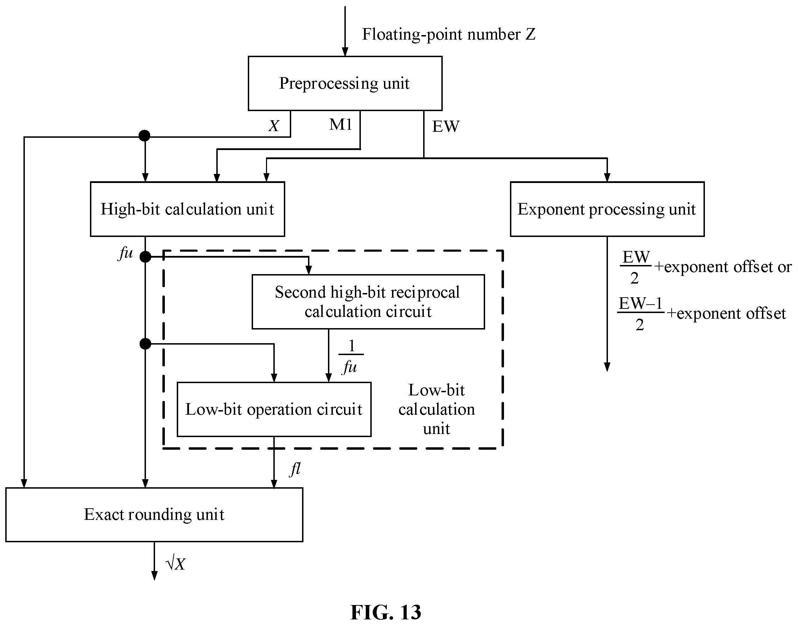

FIG. 13 shows a floating-point number calculation module according to an example embodiment. The floating-point number calculation module may include a preprocessing unit, a high-bit calculation unit, a low-bit calculation unit, and an exact rounding unit. The low-bit calculation unit may include a second high-bit reciprocal calculation circuit and the low-bit operation circuit. In embodiments of this application, the second high-bit reciprocal calculation circuit may calculate a reciprocal of a high-bit part $f_u$ of *f*, namely, $\dfrac{1}{f_u}$. The second high-bit reciprocal calculation circuit and the high-bit calculation unit may run in series, so that the low-bit calculation unit and the high-bit calculation unit may run in series.

The following describes a connection relationship and a working process of the second high-bit reciprocal calculation circuit. Similarities between the floating-point number calculation module shown in FIG. 13 and the floating-point number calculation module shown in FIG. 5 are not described again.

The second high-bit reciprocal calculation circuit may be connected to the preprocessing unit and the high-bit calculation unit. The second high-bit reciprocal calculation circuit may receive all or a part of a bit width of high-bit part $f_u$, of $f$, output by the high-bit calculation unit. Optionally, the second high-bit reciprocal calculation circuit may receive all or a part of a bit width of an exponent $EZ$, of a normalized floating-point number $Z$, output by the preprocessing unit.

The second high-bit reciprocal calculation circuit may determine a target fifth query parameter g1 based on the high-bit part $f_u$ of the square root $f$ of a target mantissa X. The target fifth query parameter g1 is a part (which is denoted as a fifth part of a bit width) of the bit width of the high-bit part $f_u$ of $f$. For example, the target fifth query parameter g1 may be high g1 bits (or low g1 bits) of a fractional part of the high-bit part $f_u$ of $f$, where g1 is a positive integer, and g1 is less than or equal to a full bit width of the fractional part of the high-bit part $f_u$ of $f$.

The second high-bit reciprocal calculation circuit may determine, based on the target fifth query parameter g1, coefficients, of a third polynomial fitting equation, corresponding to the target fifth query parameter g1. The coefficients of the third polynomial fitting equation may include a seventh fitting parameter a3, an eighth fitting parameter b3, and a ninth fitting parameter c3.

The second high-bit reciprocal calculation circuit may calculate the reciprocal $\frac{1}{f_u}$ of the high-bit part $f_u$ of $f$ based on the coefficients of the third polynomial fitting equation and all or the part of the bit width of the high-bit part $f_u$ of $f$ of the target mantissa X, where $\frac{1}{f_u} = a3 \times (g2)^2 + b3 \times g2 + c3$. The second high-bit reciprocal calculation circuit may output the reciprocal $\frac{1}{f_u}$ of the high-bit part $f_u$ of $f$, where g2 is high g2 bits in a bit width other than the fifth part of the bit width of the fractional part of the high-bit part $f_u$ of $f$, and g2 is a positive integer.

In a possible design, the second high-bit reciprocal calculation circuit may obtain or configure a third polynomial coefficient query table. The third polynomial coefficient query table may indicate correspondences between a plurality of third fitting parameter combinations and a plurality of third query parameter combinations. Each third query parameter combination corresponds to a third fitting parameter combination. Each third fitting parameter combination may include the seventh fitting parameter a3, the eighth fitting parameter b3, and the ninth fitting parameter c3. The third query parameter combination may include a fifth query parameter. The target fifth query parameter g1 received by the second high-bit reciprocal calculation circuit may form a target third query parameter combination. The second high-bit reciprocal calculation circuit may search the third polynomial coefficient query table for a third fitting parameter combination corresponding to the target third query parameter combination, to determine the coefficients, of the third polynomial fitting equation, corresponding to the target fifth query parameter g1.

In a possible implementation, similarly, in the pre-configured third polynomial coefficient query table, namely, the correspondence between the seventh fitting parameter a3, the eighth fitting parameter b3, and the ninth fitting parameter c3 and the third query parameter combination, the seventh fitting parameter a3, the eighth fitting parameter b3, and the ninth fitting parameter c3 may be stored in a same third storage module. Alternatively, the seventh fitting parameter a3, the eighth fitting parameter b3, and the ninth fitting parameter c3 may be respectively stored in three third storage modules. Alternatively, any two of the seventh fitting parameter a3, the eighth fitting parameter b3, and the ninth fitting parameter c3 are stored in a same third storage module, and the other parameter is stored in another third storage module. The third polynomial coefficient query table may include the seventh fitting parameter a3, the eighth fitting parameter b3, and the ninth fitting parameter c3 that respectively correspond to third parameter combinations with a preset quantity.

The low-bit operation circuit may be connected to the second high-bit reciprocal calculation circuit, the preprocessing unit, and the high-bit calculation unit. The low-bit operation circuit may receive the reciprocal (namely, $\frac{1}{f_u}$), output by the second high-bit reciprocal calculation circuit, of the high-bit part $f_u$ of $f$, the target mantissa X output by the preprocessing unit, and the high-bit part $f_u$, of $f$, output by the high-bit calculation unit. The low-bit operation circuit may calculate the low-bit part $f_l$ of $f$ based on a relationship $f_l = \frac{1}{f_u} \times \frac{X - f_u^2}{2}$ between the high-bit part $f_u$ and the low-bit part $f_l$ of $f$. The low-bit operation circuit may output the low-bit part $f_l$ of $f$, so that the low-bit calculation unit outputs the low-bit part $f_l$ of $f$. For related descriptions about the exact rounding unit, refer to the foregoing embodiments. Details are not described herein again.

In embodiments of this application, the second high-bit reciprocal calculation circuit may obtain the reciprocal $\frac{1}{f_u}$ of the high-bit part $f_u$ based on all or the part of the bit width of $f_u$. In comparison with the first high-bit reciprocal calculation circuit that uses all or the part of the bit width of target mantissa X, the circuit has a smaller scale, and occupies a smaller area in this embodiment.

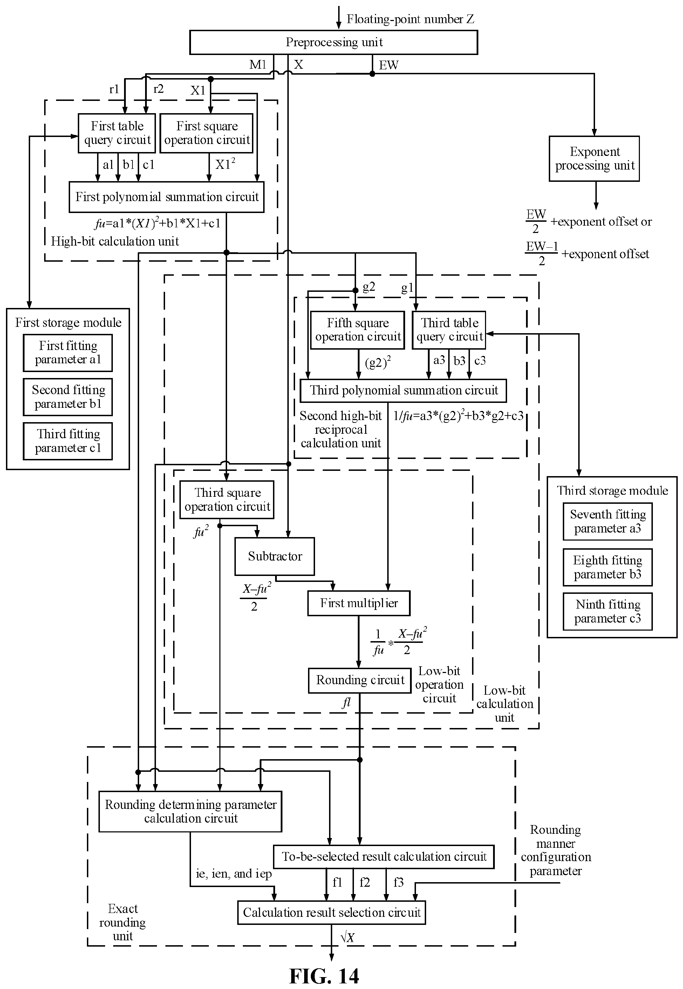

FIG. 14 is an example of a diagram of specific structures of some units in the floating-point number calculation module. In the floating-point number calculation module provided in this embodiment of this application, for a specific structure of the high-bit calculation unit, refer to the high-bit calculation unit shown in FIG. 10. Details are not described herein again. In this embodiment of this application, the second high-bit reciprocal calculation circuit in the low-bit calculation unit may include a third table query circuit, a fifth square operation circuit, and a third polynomial summation circuit.

The third table query circuit may receive the target fifth query parameter g1 output by the preprocessing unit, and output the seventh fitting parameter a3, the eighth fitting parameter b3, and the ninth fitting parameter c3 that correspond to the target fifth query parameter g1. The third table query circuit may be implemented in a plurality of manners.

For example, as shown in FIG. 14, the third table query circuit may be connected to a third storage module that stores the seventh fitting parameter a3, the eighth fitting parameter b3, and the ninth fitting parameter c3. The third table query circuit may receive the target fifth query parameter g1 output by the high-bit calculation unit. The third query circuit may query, based on the target third query parameter combination, the connected third storage module for the seventh fitting parameter a3, the eighth fitting parameter b3, and the ninth fitting parameter c3 that correspond to the target fifth query parameter g1. The second query circuit may output the found seventh fitting parameter a3, eighth fitting parameter b3, and ninth fitting parameter c3 that corresponding to the target fifth query parameter g1.

The fifth square operation circuit may be connected to the high-bit calculation unit, and may receive high g2 bits (namely, g2 described in the foregoing) of the fractional part of the high-bit part $f_u$ of $f$ that are output by the high-bit calculation unit. The fifth square operation circuit may calculate a square $(g2)^2$ of the high g2 bits of the fractional part of the high-bit part $f_u$ of $f$, and output $(g2)^2$.

The third polynomial summation circuit may be connected to the third table query circuit, the preprocessing unit, and the second square operation circuit. The third polynomial summation circuit may receive the seventh fitting parameter a3, the eighth fitting parameter b3, and the ninth fitting parameter c3 that correspond to the target third query parameter combination and that are output by the third table query circuit. The third polynomial summation circuit may receive high g2 bits g2 of the fractional part of the high-bit part $f_u$ of $f$ that are output by the high-bit calculation unit. The third polynomial summation circuit may receive $(g2)^2$ output by the fifth square operation circuit. The third polynomial summation circuit may include a multiplier and an adder, so that the third polynomial summation circuit may calculate the reciprocal $\frac{1}{f_u}$ of the high-bit part $f_u$ of $f$ based on the received seventh fitting parameter a3, eighth fitting parameter b3, and ninth fitting parameter c3 that correspond to the target third query parameter combination, high g2 bits g2 of the fractional part of the high-bit part $f_u$, and $(g2)^2$, where $\frac{1}{f_u} = a3 \times (g2)^2 + b3 \times g2 + c3$.

For a specific structure of the low-bit operation circuit in the low-bit calculation unit, refer to the low-bit calculation unit shown in FIG. 10. The low-bit operation circuit may include a third square operation circuit, a subtractor, a first multiplier, and a rounding circuit. The first multiplier may be connected to the third polynomial summation circuit and the subtractor. The first multiplier may receive $\frac{X-f_u^2}{2}$ output by the subtractor. The first multiplier may receive the reciprocal $\frac{1}{f_u}$, output by the third polynomial summation circuit, of the high-bit part $f_u$ of $f$. The first multiplier may calculate $\frac{1}{f_u} \times \frac{X-f_u^2}{2}$. Optionally, a function of the subtractor in the low-bit operation circuit may be implemented by using an adder.

For a specific structure of the exact rounding unit, refer to the exact rounding unit provided in any one of the foregoing embodiments. Details are not described herein again.

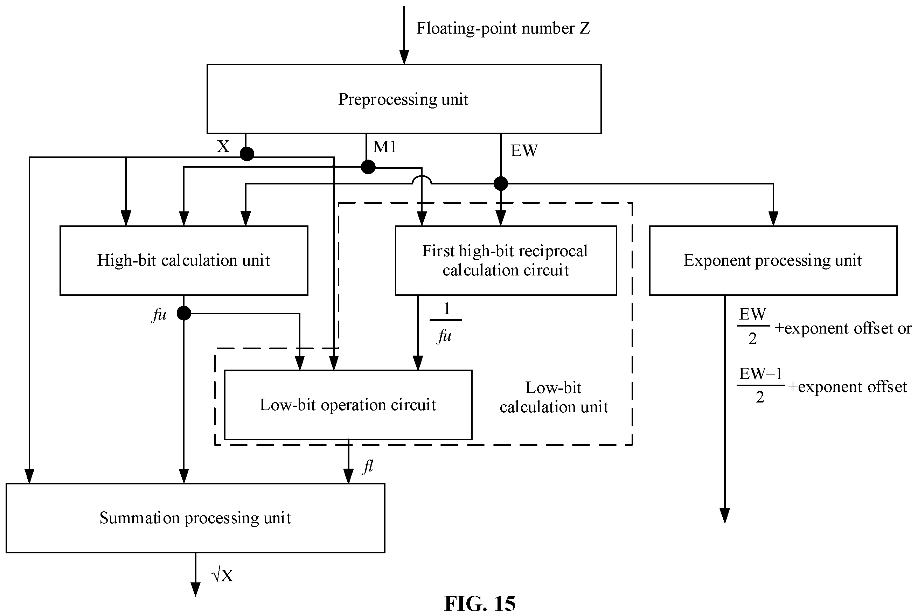

FIG. 15 shows an example of a floating-point number calculation module. The floating-point number calculation module may include a preprocessing unit, a high-bit calculation unit, a low-bit calculation unit, and a summation processing unit. The low-bit calculation unit may include the first high-bit reciprocal calculation circuit and the low-bit operation circuit. Optionally, the floating-point number calculation module may further include an exponent processing unit. In this embodiment of this application, for functions of the preprocessing unit, the high-bit calculation unit, the low-bit calculation unit, and the exponent processing unit, refer to related descriptions in any one of the foregoing embodiments. Details are not described herein again.

The summation processing unit may be connected to the high-bit calculating unit, and receive a high-bit part $f_u$, of $f$, output by the high-bit calculation unit. The summation processing unit may be connected to the low-bit calculation unit, and receive a low-bit part $f_l$, of $f$, output by the low-bit calculation unit. The summation processing unit may perform summation on the high-bit part $f_u$ of $f$ and the low-bit part $f_l$ of $f$, to determine $f_u + f_l$, and obtain a square root of a target mantissa X. The summation processing unit may perform summation on the high-bit part $f_u$ of $f$ and the low-bit part $f_l$ of $f$. For a process, refer to related descriptions in FIG. 8. Optionally, the summation processing unit may include the fourth adder in the foregoing exact rounding unit, or the exact rounding unit in this embodiment of this application may perform a function of the summation processing unit.

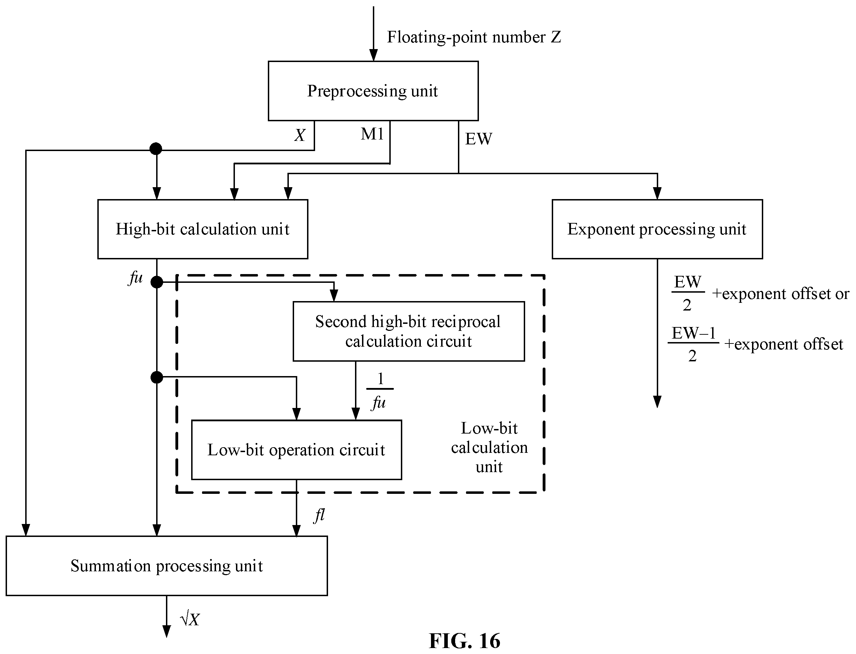

FIG. 16 shows an example of a floating-point number calculation module. The floating-point number calculation module may include a preprocessing unit, a high-bit calculation unit, a low-bit calculation unit, and a summation processing unit. The low-bit calculation unit may include the second high-bit reciprocal calculation circuit and the low-bit operation circuit. Optionally, the floating-point number calculation module may further include an exponent processing unit. In this embodiment of this application, for functions of the preprocessing unit, the high-bit calculation unit, the low-bit calculation unit, and the exponent processing unit, refer to related descriptions in any one of the foregoing embodiments. Details are not described herein again.

The summation processing unit may be connected to the high-bit calculating unit, and receive a high-bit part $f_u$, of $f$, output by the high-bit calculation unit. The summation processing unit may be connected to the low-bit calculation unit, and receive a low-bit part $f_l$, of $f$, output by the low-bit calculation unit. The summation processing unit may perform summation on the high-bit part $f_u$ of $f$ and the low-bit part $f_l$ of $f$, to determine $f_u + f_l$, and obtain a square root of a target mantissa X. The summation processing unit may perform summation on the high-bit part $f_u$ of $f$ and the low-bit part $f_l$ of $f$. For a process, refer to related descriptions in FIG. 8. Optionally, the summation processing unit may include the fourth adder in the foregoing exact rounding unit, or the exact rounding unit in this embodiment of this application may perform a function of the summation processing unit.

It may be understood that, to implement functions in the foregoing method embodiments, a processor or a calculator includes corresponding hardware structures and/or software modules for performing the functions. A person skilled in the art should be easily aware that, based on the modules and the method steps in the examples described in embodiments disclosed in this application, this application can be implemented by hardware or a combination of hardware and computer software. Whether a function is performed by hardware or hardware driven by computer software depends on particular application scenarios and design constraint conditions of the technical solutions.

It is clearly that a person skilled in the art can make various modifications and variations to this application without departing from the spirit and scope of this application. This application is intended to cover these modifications and variations of this application provided that they fall within the scope of protection defined by the following claims and their equivalent technologies.

**Claims**

1.  A method for calculating a square root of a floating-point number, applied to a processor or a calculator, and comprising:

    receiving a floating-point number calculation instruction, wherein the instruction carries a to-be-calculated floating-point number (Z);
    obtaining a target mantissa (X), wherein the target mantissa (X) comprises a mantissa of a first floating-point number (W), the first floating-point number (W) is a normalized floating-point number, and a value of the first floating-point number (W) is the same as a value of the to-be-calculated floating-point number (Z);
    determining a first bit width part ($f_u$) of a square root of the target mantissa (X) based on all or a part of a bit width of the target mantissa (X), wherein the first bit width part ($f_u$) comprises a most significant bit of the square root of the target mantissa (X);
    calculating a second bit width part ($f_l$) of the square root of the target mantissa (X) based on a first relationship, the first bit width part ($f_u$), and all or the part of the bit width of the target mantissa (X), wherein the first relationship indicates a relationship between the first bit width part ($f_u$) of the square root of the target mantissa (X), the target mantissa (X), and the second bit width part ($f_l$) of the square root of the target mantissa (X); and
    determining the square root of the target mantissa (X) based on the first bit width part ($f_u$) and the second bit width part ($f_l$), and determining a fractional part of the square root of the target mantissa (X) as a mantissa of a square root of the to-be-calculated floating-point number (Z).

2.  The method according to claim 1, wherein

    if an exponent of the first floating-point number (W) is an even number, the target mantissa (X) is the same as the mantissa of the first floating-point number (W); and
    if the exponent of the first floating-point number (W) is an odd number, the target mantissa (X) is Q times the mantissa of the first floating-point number (W), wherein Q is a base of the floating-point number, Q is a positive number, and Q is an even number.

3.  The method according to claim 1 or 2, wherein the first relationship meets the following relationship:

$$f_l = \frac{1}{f_u} \times \frac{X - f_u^2}{2},$$

    wherein X is the target mantissa, $f_u$ is the first bit width part, and $f_l$ is the second bit width part.

4.  The method according to any one of claims 1 to 3, wherein the second bit width part ($f_l$) comprises a part of a bit width of the square root of the target mantissa (X) and a least significant bit of the square root of the target mantissa (X), and a sum of a bit width length of the first bit width part ($f_u$) and a bit width length of the second bit width part ($f_l$) is greater than or equal to a full bit width length of the square root of the target mantissa (X).

5.  The method according to any one of claims 2 to 4, wherein the determining a first bit width part (f$_u$) of a square root of the target mantissa (X) based on all or a part of a bit width of the target mantissa (X) comprises:

> determining coefficients of a preset first polynomial fitting equation based on a target first query parameter (r1) and a target second query parameter (r2), wherein the target first query parameter (r1) is a first part of the mantissa of the first floating-point number (W), and the target second query parameter (r2) is a part of a bit width of the exponent of the first floating-point number (W), and comprises a lowest bit width of the exponent of the first floating-point number (W); and
> calculating the first bit width part (f$_u$) based on the coefficients of the first polynomial fitting equation and a second part of the mantissa of the first floating-point number (W), wherein a bit width corresponding to the second part of the mantissa of the first floating-point number (W) does not overlap a bit width corresponding to the first part of the mantissa of the first floating-point number (W).

**6.** The method according to claim 5, wherein the determining coefficients of a preset first polynomial fitting equation based on a target first query parameter (r1) and a target second query parameter (r2) comprises:

> if the target second query parameter (r2) is an odd number, querying a first odd-number query subtable for a coefficient, of the first polynomial fitting equation, corresponding to the target first query parameter (r1), wherein the first odd-number query subtable comprises correspondences between a plurality of first query parameters and the coefficients of the first polynomial fitting equation when the exponent of the first floating-point number (W) is an odd number; and
> if the target second query parameter (r2) is an even number, querying a first even-number query subtable for a coefficient, of the first polynomial fitting equation, corresponding to the target first query parameter (r1), wherein the first even-number query subtable comprises correspondences between the plurality of first query parameters and the coefficients of the first polynomial fitting equation when the exponent of the first floating-point number (W) is an even number.

**7.** The method according to any one of claims 1 to 6, wherein the determining the square root of the target mantissa (X) based on the first bit width part (f$_u$) and the second bit width part (f$_l$) comprises:

> determining two to-be-selected results based on the first bit width part (f$_u$) and the second bit width part (f$_l$);
> calculating a first rounding determining parameter (ie) based on the first bit width part (f$_u$), the second bit width part (f$_l$), and the part of the bit width of the target mantissa (X), wherein the first rounding determining parameter (ie) indicates a deviation between a first value and the target mantissa (X), and the first value is a square of the square root of the target mantissa (X); and
> selecting a to-be-selected result from the two to-be-selected results based on a result of comparison between the first rounding determining parameter (ie) and a preset value, and determining the selected result as the square root of the target mantissa (X).

**8.** The method according to claim 7, wherein the first rounding determining parameter (ie) is calculated according to the following formula:

$$\mathrm{ie} = \mathrm{f_u}^2 + f_l^2 + 2 \times f_u \times f_l - X,$$

wherein
ie is the first rounding determining parameter, $f_u$ is the first bit width part, $f_l$ is the second bit width part, and X is the target mantissa.

**9.** The method according to any one of claims 1 to 7, wherein the determining the square root of the target mantissa (X) based on the first bit width part (f$_u$) and the second bit width part (f$_l$) comprises:

> determining a plurality of to-be-selected results based on the first bit width part (f$_u$) and the second bit width part (f$_l$), wherein the plurality of to-be-selected results comprise a first to-be-selected result, a second to-be-selected result, and a third to-be-selected result, the second to-be-selected result is greater than the first to-be-selected result, and the first to-be-selected result is greater than the third to-be-selected result;
> calculating a second rounding determining parameter (ien) based on the first bit width part (f$_u$), the second bit width part (f$_l$), and the part of the bit width of the target mantissa (X), wherein the second rounding determining parameter (ien) indicates a deviation between a square of a first distance and a square of a second distance, the first distance is a distance between the first to-be-selected result and a real number of the square root of the target mantissa (X), and the second distance indicates a distance between the real number of the square root of the target mantissa (X) and the third to-be-selected result;

calculating a third rounding determining parameter (iep) based on the first bit width part ($f_u$), the second bit width part ($f_l$), and the part of the bit width of the target mantissa (X), wherein the third rounding determining parameter (iep) indicates a deviation between a square of a third distance and a square of a fourth distance, the third distance is a distance between the second to-be-selected result and the real number of the square root of the target mantissa (X), and the fourth distance indicates a distance between the real number of the square root of the target mantissa (X) and the first to-be-selected result; and

selecting a to-be-selected result from the plurality of to-be-selected results based on a result of comparison between the second rounding determining parameter (ien) and the preset value and a result of comparison between the third rounding determining parameter (iep) and the preset value, and determining the selected result as the square root of the target mantissa (X).

10. The method according to claim 9, wherein a difference between the second to-be-selected result and the first to-be-selected result is less than or equal to one unit of least precision, and a difference between the first to-be-selected result and the third to-be-selected result is less than or equal to one unit of least precision.

11. The method according to claim 9 or 10, wherein the second rounding determining parameter (ien) is calculated according to the following formula:

$$\text{ien} = f_u{}^2 + f_l^2 + 2 \times f_u \times f_l - X - ulp \times (f_u + f_l),$$

wherein

ien is the second rounding determining parameter, $f_u$ is the first bit width part, $f_l$ is the second bit width part, X is the target mantissa, and $ulp$ is a unit of least precision.

12. The method according to any one of claims 9 to 11, wherein the third rounding determining parameter (iep) is calculated according to the following formula:

$$\text{iep} = f_u{}^2 + f_l^2 + 2 \times f_u \times f_l - X + ulp \times (f_u + f_l),$$

wherein

iep is the third rounding determining parameter, $f_u$ is the first bit width part, $f_l$ is the second bit width part, X is the target mantissa, and $ulp$ is a unit of least precision.

13. The method according to any one of claims 1 to 6, wherein the determining the square root of the target mantissa (X) based on the first bit width part ($f_u$) and the second bit width part ($f_l$) comprises:

performing summation on the first bit width part ($f_u$) and the second bit width part ($f_l$), and determining a result obtained through summation as the square root of the target mantissa (X).

14. A floating-point number calculation module, wherein the floating-point number calculation module is configured to: receive a floating-point number calculation instruction, wherein the instruction carries a to-be-calculated floating-point number (Z); and obtain a target mantissa (X), wherein the target mantissa (X) comprises a mantissa of a first floating-point number (W), the first floating-point number (W) is a normalized floating-point number, and a value of the first floating-point number (W) is the same as a value of the to-be-calculated floating-point number (Z); and the floating-point number calculation module comprises:

a high-bit calculation unit, configured to determine a first bit width part ($f_u$) of a square root of the target mantissa (X) based on all or a part of a bit width of the target mantissa (X), wherein the first bit width part ($f_u$) comprises a most significant bit of the square root of the target mantissa (X);

a low-bit calculation unit, configured to calculate a second bit width part ($f_l$) of the square root of the target mantissa (X) based on a first relationship, the first bit width part ($f_u$), and all or the part of the bit width of the target mantissa (X), wherein the first relationship indicates a relationship between the first bit width part ($f_u$) of the square root of the target mantissa (X), the target mantissa (X), and the second bit width part ($f_l$) of the square root of the target mantissa (X); and

an exact rounding unit, configured to determine the square root of the target mantissa (X) based on the first bit width part ($f_u$) and the second bit width part ($f_l$), and determine a fractional part of the square root of the target mantissa (X) as a mantissa of a square root of the to-be-calculated floating-point number (Z).

15. The floating-point number calculation module according to claim 14, wherein

if an exponent of the first floating-point number (W) is an even number, the target mantissa (X) is the same as the mantissa of the first floating-point number (W); and

if the exponent of the first floating-point number (W) is an odd number, the target mantissa (X) is Q times the mantissa of the first floating-point number (W), wherein Q is a base of the floating-point number, Q is a positive number, and Q is an even number.

16. The floating-point number calculation module according to claim 14 or 15, wherein the first relationship meets the following relationship:

$$f_l = \frac{1}{f_u} \times \frac{X - f_u^2}{2},$$

wherein
X is the target mantissa, $f_u$ is the first bit width part, and $f_l$ is the second bit width part.

17. The floating-point number calculation module according to any one of claims 14 to 16, wherein the second bit width part ($f_l$) comprises a part of a bit width of the square root of the target mantissa (X) and a least significant bit of the square root of the target mantissa (X), and a sum of a bit width length of the first bit width part ($f_u$) and a bit width length of the second bit width part ($f_l$) is greater than or equal to a full bit width length of the square root of the target mantissa (X).

18. The floating-point number calculation module according to any one of claims 15 to 17, wherein the high-bit calculation unit is specifically configured to:

    determine coefficients of a preset first polynomial fitting equation based on a target first query parameter (r1) and a target second query parameter (r2), wherein the target first query parameter (r1) is a first part of the mantissa of the first floating-point number (W), and the target second query parameter (r2) is a part of a bit width of the exponent of the first floating-point number (W), and comprises a lowest bit width of the exponent of the first floating-point number (W); and
    calculate the first bit width part ($f_u$) based on the coefficients of the first polynomial fitting equation and a second part of the mantissa of the first floating-point number (W), wherein a bit width corresponding to the second part of the mantissa of the first floating-point number (W) does not overlap a bit width corresponding to the first part of the mantissa of the first floating-point number (W).

19. The floating-point number calculation module according to claim 18, wherein the high-bit calculation unit is specifically configured to:

    if the target second query parameter (r2) is an odd number, query a first odd-number query subtable for a coefficient, of the first polynomial fitting equation, corresponding to the target first query parameter (r1), wherein the first odd-number query subtable comprises correspondences between a plurality of first query parameters and the coefficients of the first polynomial fitting equation when the exponent of the first floating-point number (W) is an odd number; and
    if the target second query parameter (r2) is an even number, query a first even-number query subtable for a coefficient, of the first polynomial fitting equation, corresponding to the target first query parameter (r1), wherein the first even-number query subtable comprises correspondences between the plurality of first query parameters and the coefficients of the first polynomial fitting equation when the exponent of the first floating-point number (W) is an even number.

20. The floating-point number calculation module according to any one of claims 14 to 19, wherein the exact rounding unit is specifically configured to:

    determining two to-be-selected results based on the first bit width part ($f_u$) and the second bit width part ($f_l$);
    calculate a first rounding determining parameter (ie) based on the first bit width part ($f_u$), the second bit width part ($f_l$), and the part of the bit width of the target mantissa (X), wherein the first rounding determining parameter (ie) indicates a deviation between a first value and the target mantissa (X), and the first value is a square of the square root of the target mantissa (X); and
    selecting a to-be-selected result from the two to-be-selected results based on a result of comparison between the first rounding determining parameter (ie) and a preset value, and determining the selected result as the square root of the target mantissa (X).

21. The floating-point number calculation module according to claim 20, wherein the first rounding determining parameter (ie) is calculated according to the following formula:

$$ie = f_u^2 + f_l^2 + 2 \times f_u \times f_l - X,$$

wherein
ie is the first rounding determining parameter, $f_u$ is the first bit width part, $f_l$ is the second bit width part, and X is the target mantissa.

22. The floating-point number calculation module according to any one of claims 14 to 19, wherein the exact rounding unit is specifically configured to:

determining a plurality of to-be-selected results based on the first bit width part ($f_u$) and the second bit width part ($f_l$), wherein the plurality of to-be-selected results comprise a first to-be-selected result, a second to-be-selected result, and a third to-be-selected result, the second to-be-selected result is greater than the first to-be-selected result, and the first to-be-selected result is greater than the third to-be-selected result;

calculating a second rounding determining parameter (ien) based on the first bit width part ($f_u$), the second bit width part ($f_l$), and the part of the bit width of the target mantissa (X), wherein the second rounding determining parameter (ien) indicates a deviation between a square of a first distance and a square of a second distance, the first distance is a distance between the first to-be-selected result and a real number of the square root of the target mantissa (X), and the second distance indicates a distance between the real number of the square root of the target mantissa (X) and the third to-be-selected result;

calculating a third rounding determining parameter (iep) based on the first bit width part ($f_u$), the second bit width part ($f_l$), and the part of the bit width of the target mantissa (X), wherein the third rounding determining parameter (iep) indicates a deviation between a square of a third distance and a square of a fourth distance, the third distance is a distance between the second to-be-selected result and the real number of the square root of the target mantissa (X), and the fourth distance indicates a distance between the real number of the square root of the target mantissa (X) and the first to-be-selected result; and

selecting a to-be-selected result from the plurality of to-be-selected results based on a result of comparison between the second rounding determining parameter (ien) and the preset value and a result of comparison between the third rounding determining parameter (iep) and the preset value, and determining the selected result as the square root of the target mantissa (X).

23. The floating-point number calculation module according to claim 22, wherein a difference between the second to-be-selected result and the first to-be-selected result is less than or equal to one unit of least precision, and a difference between the first to-be-selected result and the third to-be-selected result is less than or equal to one unit of least precision.

24. The floating-point number calculation module according to claim 22 or 23, wherein the second rounding determining parameter (ien) is calculated according to the following formula:

$$\text{ien} = f_u{}^2 + f_l{}^2 + 2 \times f_u \times f_l - X - ulp \times (f_u + f_l),$$

wherein
ien is the second rounding determining parameter, $f_u$ is the first bit width part, $f_l$ is the second bit width part, X is the target mantissa, and *ulp* is a unit of least precision.

25. The floating-point number calculation module according to any one of claims 22 to 24, wherein the third rounding determining parameter (iep) is calculated according to the following formula:

$$\text{iep} = f_u{}^2 + f_l{}^2 + 2 \times f_u \times f_l - X + ulp \times (f_u + f_l),$$

wherein
iep is the third rounding determining parameter, $f_u$ is the first bit width part, $f_l$ is the second bit width part, X is the target mantissa, and *ulp* is a unit of least precision.

26. The floating-point number calculation module according to any one of claims 14 to 25, wherein the exact rounding unit is specifically configured to:
perform summation on the first bit width part ($f_u$) and the second bit width part ($f_l$), and determine a result obtained through summation as the square root of the target mantissa (X).

27. The floating-point number calculation module according to any one of claims 14 to 26, wherein the exact rounding unit is specifically configured to:

obtain a rounding manner configuration parameter;
determine the plurality of to-be-selected results based on a rounding manner corresponding to the rounding manner configuration parameter, the first bit width part ($f_u$), and the second bit width part ($f_l$);
calculate a rounding determining parameter based on the rounding manner corresponding to the rounding manner configuration parameter, the first bit width part ($f_u$), the second bit width part ($f_l$), and the target mantissa (X); and
select a to-be-selected result from the plurality of to-be-selected results based on a result of comparison between the rounding determining parameter and the preset value, and use the selected result as the square root of the target mantissa (X).

28. The floating-point number calculation module according to any one of claims 14 to 27, wherein the first relationship comprises a reciprocal of the first bit width part ($f_u$), and the low-bit calculation unit is further configured to:

determine coefficients of a preset second polynomial fitting equation based on a target third query parameter (h1) and a target fourth query parameter (h2), wherein the target third query parameter (h1) is a third part of the mantissa of the first floating-point number (W), and the target fourth query parameter (h2) is a part of the bit width of the exponent of the first floating-point number (W), and comprises the lowest bit width of the exponent of the first floating-point number (W); and

determine the reciprocal of the first bit width part ($f_u$) based on the coefficients of the second polynomial fitting equation and a fourth part of the mantissa of the first floating-point number (W), wherein a bit width corresponding to the third part of the mantissa of the first floating-point number (W) does not overlap a bit width corresponding to the fourth part of the mantissa of the first floating-point number (W).

29. The floating-point number calculation module according to claim 28, wherein the low-bit calculation unit is specifically configured to:

if the target fourth query parameter (h2) is an odd number, query a second odd-number query subtable for a coefficient, of the second polynomial fitting equation, corresponding to the target third query parameter (h1), wherein the second odd-number query subtable comprises correspondences between a plurality of third query parameters and the coefficients of the second polynomial fitting equation when the exponent of the first floating-point number (W) is an odd number; and

if the target fourth query parameter (h2) is an even number, query a second even-number query subtable for a coefficient, of the second polynomial fitting equation, corresponding to the target third query parameter (h1), wherein the second even-number query subtable comprises correspondences between the plurality of third query parameters and the coefficients of the second polynomial fitting equation when the exponent of the first floating-point number (W) is an even number.

30. The floating-point number calculation module according to any one of claims 14 to 27, wherein the first relationship comprises a reciprocal of the first bit width part ($f_u$), and the low-bit calculation unit is further configured to:

determine coefficients of a preset third polynomial fitting equation based on a target fifth query parameter (g1), wherein the target fifth query parameter (g1) is a fifth part of the first bit width part ($f_u$); and

determine the reciprocal of the first bit width part ($f_u$) based on the coefficients of the third polynomial fitting equation and a sixth part of the first bit width part ($f_u$), wherein a bit width corresponding to the fifth part of the first bit width part ($f_u$) does not overlap a bit width corresponding to the sixth part of the first bit width part ($f_u$).

Bit   31  30             23 22                                          0

| 0 | 1 | 0 | 1 | 0 | 1 | 0 | 1 | 0 | 1 | 0 | 1 | 0 | 1 | 0 | 1 | 0 | 1 | 0 | 1 | 0 | 1 | 0 | 1 | 0 | 1 | 0 | 1 | 0 | 1 | 0 | 1 |

Sign bit     Exponent bias                                 Mantissa bit

**FIG. 1**

100

| Instruction fetching 101 | → | Decoding 102 | → | Execution 103 | → | Memory access 104 | → | Write back 105 |

**FIG. 2A**

Processing apparatus 200

Control module 203

Another operation module 206

Integer calculation module 205

Floating-point number calculation module 202

Storage module 204

Register group 201

I/O interface 207

**FIG. 2B**

Receive a floating-point number calculation instruction, where the instruction carries a to-be-calculated floating-point number — S100

Obtain a target mantissa, where the target mantissa includes a mantissa of a first floating-point number, the first floating-point number is a normalized floating-point number, and a value of the first floating-point number is the same as a value of the to-be-calculated floating-point number — S101

Determine a first bit width part of a square root of the target mantissa based on all or a part of a bit width of the target mantissa, where the first bit width part includes a most significant bit of the square root of the target mantissa — S102

Calculate a second bit width part of the square root of the target mantissa based on a first relationship, the first bit width part, and all or the part of the bit width of the target mantissa, where the first relationship indicates a relationship between the first bit width part of the square root of the target mantissa, the target mantissa, and the second bit width part of the square root of the target mantissa — S103

Determine the square root of the target mantissa based on the first bit width part and the second bit width part, and determine a fractional part of the square root of the target mantissa as a mantissa of a square root of the to-be-calculated floating-point number — S104

**FIG. 3**

Floating-point number Z

Normalization

Floating-point number W
(mantissa M1 and exponent EW)

Parity
determining of the
exponent

The exponent EW is an even number

The exponent EW
is an odd number

Perform first mantissa conversion
processing on the mantissa M1, to
obtain a target mantissa X

A target mantissa X is the same as
the mantissa M1

Perform exponent conversion
processing on the exponent EW, to
obtain an exponent EW−1

**FIG. 4(a)**

**FIG. 4(b)**

■ Bits of an integer part

□ Bits of a fractional part

Bit    s1    v                      0

Mantissa M1    **1**   | 1 | 1 | 0 | 1 | 0 | 1 | 0 | 1 | 0 | 1 | 0 | 1 | 0 |

Bit    s2 s1    v                     0

Target mantissa X    **0** | **1**   | 1 | 1 | 0 | 1 | 0 | 1 | 0 | 1 | 0 | 1 | 0 | 1 | 0 |

## FIG. 4(c)

FIG. 5

(a)

(b)

**FIG. 6**

**First storage module**

First fitting parameter a1

Second fitting parameter b1

Third fitting parameter c1

(a)

**First storage module**

First fitting parameter a1

**First storage module**

Second fitting parameter b1

**First storage module**

Third fitting parameter c1

(b)

**First storage module**

First fitting parameter a1

Second fitting parameter b1

**First storage module**

Third fitting parameter c1

(c)

**FIG. 7**

*fu*

*fl*

| 1 | 1 | 0 | 1 | 0 | 1 | 0 | 1 | 0 | 1 | 0 | 1 | 0 |

| 1 | 0 | 1 | 0 | 1 | 0 | 1 | 0 | 1 | 0 | 1 |

Bit    Most significant bit

Least significant bit

| 1 | 1 | 0 | 1 | 0 | 1 | 0 | 1 | 0 | 1 | 0 | 1 | 0 | 1 | 0 | 1 | 0 | 1 | 0 | 1 | 0 | 1 |

*fu*

*fl*

f1

(a)

*fu*

| 1 | 1 | 0 | 1 | 0 | 1 | 0 | 1 | 0 | 1 | 0 | 1 | 0 | 0 | 0 |

Low *n*–q bits of *fl*

High q bits of *fl*

| 1 | 0 | 1 | 0 | 1 | 0 | 1 | 0 | 1 | 0 | 1 |

*fl*

Summation processing

| 1 | 1 | 0 | 1 | 0 | 1 | 0 | 1 | 0 | 1 | 0 | 1 | 0 |

Bit    Most significant bit

Least significant bit

| 1 | 1 | 0 | 1 | 0 | 1 | 0 | 1 | 0 | 1 | 0 | 1 | 0 | 1 | 0 | 1 | 0 | 1 | 0 | 1 |

Summation processing result of *fu* and the high *q* bits of *fl*

Low *n*–q bits of *fl*

f1

(b)

**FIG. 8**

Bit   23                                                                                                    0

| 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 1 |

(a)

f1 | 1 | 1 | 0 | 1 | 0 | 1 | 0 | 1 | 0 | 1 | 0 | 0 | 0 | 1 | 0 | 1 | 0 | 1 | 0 | 1 | 0 | 1 | 0 | 0 |

ulp | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 1 |

f2 | 1 | 1 | 0 | 1 | 0 | 1 | 0 | 1 | 0 | 1 | 0 | 0 | 0 | 1 | 0 | 1 | 0 | 1 | 0 | 1 | 0 | 1 | 0 | 1 |

(b)

f1 | 1 | 1 | 0 | 1 | 0 | 1 | 0 | 1 | 0 | 1 | 0 | 0 | 0 | 1 | 0 | 1 | 0 | 1 | 0 | 1 | 0 | 1 | 0 | 1 |

ulp | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 1 |

f3 | 1 | 1 | 0 | 1 | 0 | 1 | 0 | 1 | 0 | 1 | 0 | 0 | 0 | 1 | 0 | 1 | 0 | 1 | 0 | 1 | 0 | 1 | 0 | 0 |

(c)

**FIG. 9**

**FIG. 10**

FIG. 11

EP 4 589 451 A1

**FIG. 12**

EP 4 589 451 A1

Floating-point number Z

Preprocessing unit

$X$    M1    EW

High-bit calculation unit

Exponent processing unit

$fu$

Second high-bit reciprocal calculation circuit

$\dfrac{EW}{2}$+exponent offset or

$\dfrac{EW-1}{2}$+exponent offset

$\dfrac{1}{fu}$

Low-bit operation circuit

Low-bit calculation unit

$fl$

Exact rounding unit

$\sqrt{X}$

**FIG. 13**

EP 4 589 451 A1

Floating-point number Z

Preprocessing unit

M1 | X | EW

r1 | r2 | X1

First table query circuit

First square operation circuit

a1 | b1 | c1

X1$^2$

First polynomial summation circuit

$fu$=a1*$(X1)^2$+b1*X1+c1

High-bit calculation unit

Exponent processing unit

$\dfrac{EW}{2}$ +exponent offset or

$\dfrac{EW-1}{2}$ +exponent offset

g2 | g1

Fifth square operation circuit

Third table query circuit

$(g2)^2$

a3 | b3 | c3

Third polynomial summation circuit

Second high-bit reciprocal calculation unit

$1/fu$=a3*$(g2)^2$+b3*g2+c3

First storage module

First fitting parameter a1

Second fitting parameter b1

Third fitting parameter c1

Third storage module

Seventh fitting parameter a3

Eighth fitting parameter b3

Ninth fitting parameter c3

Third square operation circuit

$fu^2$

Subtractor

$\dfrac{X-fu^2}{2}$

First multiplier

$\dfrac{1}{fu}*\dfrac{X-fu^2}{2}$

Rounding circuit

Low-bit operation circuit

$fl$

Low-bit calculation unit

Rounding determining parameter calculation circuit

ie, ien, and iep

To-be-selected result calculation circuit

Rounding manner configuration parameter

f1 | f2 | f3

Calculation result selection circuit

$\sqrt{X}$

Exact rounding unit

**FIG. 14**

FIG. 15

Floating-point number Z

Preprocessing unit

X    M1    EW

Exponent processing unit

$\dfrac{EW}{2}$ +exponent offset or

$\dfrac{EW-1}{2}$ +exponent offset

High-bit calculation unit

Second high-bit reciprocal calculation circuit

Low-bit calculation unit

$\dfrac{1}{fu}$

Low-bit operation circuit

$fu$

$fl$

Summation processing unit

$\sqrt{X}$

**FIG. 16**

## INTERNATIONAL SEARCH REPORT

| International application No. |
| --- |
| **PCT/CN2023/104073** |

| A. | CLASSIFICATION OF SUBJECT MATTER |
| --- | --- |

G06F17/14(2006.01)i;  G06T1/20(2006.01)n

According to International Patent Classification (IPC) or to both national classification and IPC

| B. | FIELDS SEARCHED |
| --- | --- |

Minimum documentation searched (classification system followed by classification symbols)

IPC:  G06F G06T

Documentation searched other than minimum documentation to the extent that such documents are included in the fields searched

Electronic data base consulted during the international search (name of data base and, where practicable, search terms used)

CNABS; CNTXT; CNKI; WPABS; DWPI; USTXT; WOTXT; EPTXT: 浮点数, 平方根, 尾数, 位宽, 高位, 低位, 值化, 规格化, floating point, square root, mantissa, bit wide, high, low, normalization

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | CN 111796795 A (INTEL CORP.) 20 October 2020 (2020-10-20) description, paragraphs [0173]-[0313] | 1-30 |
| A | CN 104598197 A (INSTITUTE OF AUTOMATION, CHINESE ACADEMY OF SCIENCES) 06 May 2015 (2015-05-06) entire document | 1-30 |
| A | CN 109901813 A (SUZHOU POWERCORE TECHNOLOGY CO., LTD.) 18 June 2019 (2019-06-18) entire document | 1-30 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **06 September 2023** | **01 October 2023** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/104073**

| Patent document cited in search report | | | Publication date (day/month/year) | Patent family member(s) | | | Publication date (day/month/year) |
|---|---|---|---|---|---|---|---|
| CN | 111796795 | A | 20 October 2020 | DE | 102020108411 | A1 | 08 October 2020 |
| | | | | US | 2020319851 | A1 | 08 October 2020 |
| CN | 104598197 | A | 06 May 2015 | CN | 104598197 | B | 31 May 2017 |
| CN | 109901813 | A | 18 June 2019 | None | | | |

Form PCT/ISA/210 (patent family annex) (July 2022)

**EP 4 589 451 A1**

**Patent documents cited in the description**

- CN 202211250294